(19) Europäisches Patentamt / European Patent Office / Office européen des brevets

(11) **EP 2 727 301 B1**

(12) **FASCICULE DE BREVET EUROPEEN**

(45) Date de publication et mention de la délivrance du brevet:
**01.08.2018 Bulletin 2018/31**

(21) Numéro de dépôt: **12738550.8**

(22) Date de dépôt: **28.06.2012**

(51) Int Cl.:
*H04L 27/26* *(2006.01)*

(86) Numéro de dépôt international:
**PCT/FR2012/051497**

(87) Numéro de publication internationale:
**WO 2013/001243 (03.01.2013 Gazette 2013/01)**

(54) **ESTIMATION D'UN DÉCALAGE EN TEMPS, EN PHASE ET EN FRÉQUENCE D'UN SIGNAL MULTIPORTEUSE DE TYPE OQAM**

SCHÄTZUNG EINER ZEIT-, PHASEN ODER FREQUENZVERSCHIEBUNG EINES OQAM-MEHRTRÄGERSIGNALS

ESTIMATION OF A TIME, PHASE, AND FREQUENCY SHIFT OF AN OQAM MULTI-CARRIER SIGNAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.06.2011 FR 1155867**
**08.11.2011 FR 1160177**

(43) Date de publication de la demande:
**07.05.2014 Bulletin 2014/19**

(73) Titulaire: **Orange**
**75015 Paris (FR)**

(72) Inventeurs:
• **DANDACH, Youssef**
**92320 Chatillon (FR)**
• **SIOHAN, Pierre**
**F-35200 Rennes (FR)**

(74) Mandataire: **Vidon Brevets & Stratégie**
**16B, rue de Jouanet**
**BP 90333**
**35703 Rennes Cedex 7 (FR)**

(56) Documents cités:
• **FUSCO T ET AL: "A Data-Aided Symbol Timing Estimation Algorithm for OFDM/OQAM Systems", COMMUNICATIONS, 2009. ICC '09. IEEE INTERNATIONAL CONFERENCE ON, IEEE, PISCATAWAY, NJ, USA, 14 juin 2009 (2009-06-14), pages 1-5, XP031505563, ISBN: 978-1-4244-3435-0 cité dans la demande**
• **FUSCO T ET AL: "Data-aided symbol timing and CFO synchronization for filter bank multicarrier systems", IEEE TRANSACTIONS ON WIRELESS COMMUNICATIONS, IEEE SERVICE CENTER, PISCATAWAY, NJ, US, vol. 6, no. 5, 1 mai 2009 (2009-05-01), pages 2705-2715, XP011257595, ISSN: 1536-1276 cité dans la demande**

**Description**

**1. Domaine de l'invention**

Le domaine de l'invention est celui des communications numériques.

Plus précisément, l'invention concerne la transmission de signaux multiporteuses de type OFDM/OQAM (en anglais « Orthogonal Frequency Division Multiplexing / Offset Quadrature Amplitude Modulation ») ou BFDM/OQAM (en anglais « Biorthogonal Frequency Division Multiplexing / OQAM »), pour lesquels les porteuses sont mises en forme par un filtre prototype.

Encore plus précisément, l'invention concerne la synchronisation des récepteurs, et notamment l'estimation des décalages en phase et/ou en temps, et/ou en fréquence, ces décalages étant introduits par le canal de transmission et/ou le système de transmission et affectant de tels signaux multiporteuses.

L'invention trouve notamment des applications dans le domaine des communications sans fil (DAB, DVB-T, WLAN, optique non guidée, etc) ou filaires (xDSL, PLC, optique, etc).

**2. Art antérieur**

Les techniques de transmission à porteuses multiples présentent de nombreux avantages, notamment dans le contexte de canaux multi-trajets. Ainsi, les modulations de type OFDM sont particulièrement bien adaptées pour contrer les effets des évanouissements dans les canaux sélectifs en fréquence.

Toutefois, ces modulations OFDM présentent l'inconvénient de générer un signal multiporteuse présentant une mauvaise localisation fréquentielle, et nécessitent donc l'introduction d'un intervalle de garde dans le domaine temporel pour limiter les interférences. Or l'insertion d'un tel intervalle de garde engendre une diminution de l'efficacité spectrale du signal multiporteuse.

Des solutions alternatives ont alors été proposées pour limiter les interférences tout en s'affranchissant de l'insertion d'un intervalle de garde. Ces techniques reposent sur la mise en forme du signal par des filtres (pour un signal discrétisé) ou des fonctions (pour un signal continu), dits prototypes, permettant une meilleure localisation fréquentielle grâce à des propriétés d'orthogonalité restreintes au corps des réels. Il s'agit par exemple des modulations de type OFDM/OQAM ou BFDM/OQAM, classiquement utilisées pour les communications radiofréquences, telles que décrites notamment dans les documents *"Analysis of OFDM/OQAM systems based on the filterbank theory"*, P. Siohan et N. Lacaille, Proc. GLOBECOM'99, Rio de Janeiro, Brazil, Dec. 1999, pp. 2279-2284, et *"Design of BFDM/OQAM systems based on biorthogonal modulated filter banks"*, C. Siclet et P. Siohan, Proc. GLOBECOM'00, San Francisco, USA, Nov. 2000, pp. 701-705.

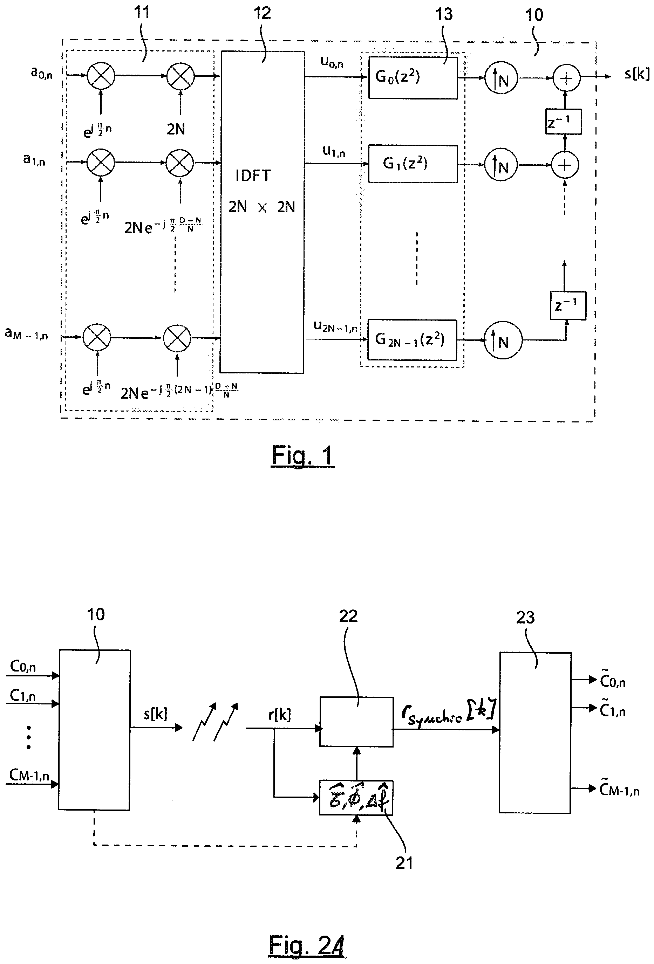

La figure 1 illustre plus précisément le schéma d'un modulateur OFDM/OQAM 10 délivrant un signal multiporteuse de type OFDM/OQAM. Un tel signal peut être représenté, en bande de base et en temps discret, sous la forme suivante :

$$s[k] = \sum_{m=0}^{M-1} \sum_{n=-\infty}^{n=+\infty} a_{m,n} h\left[k - n\frac{M}{2}\right] e^{j\frac{2\pi}{M}m(k-D/2)} e^{j\phi_{m,n}}$$

avec :

- $a_{m,n}$ un symbole de données à valeur réelle à transmettre sur une sous-porteuse $m$ à l'instant $n$ ;
- $M$ le nombre de fréquences porteuses, ($N = M/2$ un décalage temporel discret) ;
- $h[n]$ le filtre prototype utilisé par le modulateur, de longueur L ;
- D le délai introduit par le filtre prototype ;
- $\phi_{m,n}$ un terme de phase choisi de manière à réaliser une alternance partie réelle-partie imaginaire permettant l'orthogonalité, par exemple égal à $\frac{\pi}{2}(n+m) + \varepsilon\pi mn$, avec $\varepsilon = \{0, \pm 1\}$ ;
- $k$ correspond à l'instant $kTs$, avec $Ts$ la période d'échantillonnage.

Dans le cas d'une modulation OFDM/OQAM orthogonale, le délai D est tel que $D = L - 1$, avec L la longueur du filtre prototype. Dans le cas d'une modulation BFDM/OQAM biorthogonale, le délai D peut être choisi d'une manière plus flexible, et peut être tel que $D \leq L - 1$.

Comme illustré en figure 1, les symboles de données réels $a_{m,n}$ subissent un pré-traitement ou une pré-modulation 11, permettant notamment d'assurer une quadrature en temps et en fréquence des porteuses du signal multiporteuse.

Plus précisément, au cours de ce pré-traitement, les symboles de données réels $a_{m,n}$ sont multipliés par un premier terme de phase en $\pi/2$, permettant d'assurer un déphasage en temps et en fréquence des porteuses du signal multiporteuse, et par un deuxième terme permettant de tenir compte de la longueur du filtre prototype. Les symboles de données obtenus en sortie de ce module de pré-traitement, notés $a_{m,n}^{p}$, peuvent s'exprimer sous la forme suivante :

$$a_{m,n}^{p} = a_{m,n}e^{j\frac{\pi}{2}n}Me^{-j\frac{\pi}{2}m\frac{D-M/2}{M/2}}.$$

Ces symboles de données sont ensuite convertis du domaine fréquentiel vers le domaine temporel, en utilisant classiquement une transformée de Fourier inverse discrète (en anglais IDFT pour « Inverse Discrete Fourier Transform ») de taille M, dans un module IDFT 12. Les symboles transformés obtenus en sortie du module IDFT 12, notés $u_{0,n}$ à $u_{M-1,n}$ sont alors filtrés par le filtre prototype $h[n]$ 13, puis sur-échantillonnés et décalés pour obtenir le signal multiporteuse OFDM/OQAM $s[k]$. Plus précisément, le filtre prototype $h[n]$ peut s'exprimer sous sa forme polyphasé, comprenant M composantes polyphasés $G_l(z)$, définies par :

$$G_l(z) = \sum_{n} h\left[l + nM\right]z^{-n}.$$

Cependant, malgré le gain qu'offrent les modulations de type OQAM (OFDM/OQAM ou BFDM/OQAM) par rapport aux modulations de type OFDM au niveau de l'efficacité spectrale, du fait qu'elles permettent de s'affranchir de l'insertion d'un intervalle de garde ou d'un préfixe cyclique, les modulations OFDM sont souvent préférées car leur mise en oeuvre est plus simple.

En particulier, au niveau de la réception, la présence d'un préfixe cyclique pour les modulations OFDM rend l'opération de synchronisation des récepteurs peu complexe, du fait de la corrélation qu'un tel préfixe crée entre le début et la fin de chaque symbole multiporteuse OFDM.

L'absence d'un tel intervalle de garde pour les modulations multiporteuses de type OQAM rend l'opération de synchronisation plus complexe, et peut nécessiter soit l'introduction de données supplémentaires, dites pilotes, qui se présentent sous forme de préambule en début de trame ou sous forme de données isolées réparties dans la trame, soit des calculs coûteux dans le cas d'une synchronisation aveugle.

2.1 Art antérieur relatif à l'estimation d'un décalage en temps et/ou en phase

En particulier, dans le cas d'un système de transmission utilisant des pilotes, l'opération de synchronisation est mise en oeuvre en effectuant une corrélation du signal multiporteuse reçu dans le domaine temporel. Cette corrélation peut, par exemple, être créée à partir de pilotes déterministes groupés sous forme de préambule, ou encore à partir de pilotes répartis basés sur des séquences pseudo-aléatoire.

Le document « A data-aided symbol timing estimation algorithm for OFDM/OQAM systems » de T. Fusco, A. Petrella, et M. Tanda propose notamment une technique d'estimation d'un décalage en temps et/ou en phase d'un récepteur OFDM/OQAM, basée sur l'utilisation de préambule.

Bien que cette technique offre de bons résultats en termes de performance et de complexité, elle impose l'utilisation d'un préambule spécifique, selon lequel les porteuses impaires sont nulles, pour établir une relation entre les échantillons du signal multiporteuse. En particulier, cette relation est obtenue pour un système de transmission noncausal, et donc difficilement implémentable. Les sorties de l'étape de transformée de Fourier inverse, pour ce préambule spécifique, sont donc liées comme celles d'une transformée de Fourier inverse avec des entrées réelles et, par suite, il faut un filtre prototype de longueur impaire pour conserver ces relations après filtrage.

Un autre inconvénient est que la durée du préambule augmente avec la longueur du filtre prototype, ce qui engendre une diminution de l'efficacité spectrale pour des filtres prototypes longs.

2.2 Art antérieur relatif à l'estimation conjointe des décalages en temps et en fréquence

Le document « A data-aided symbol timing and CFO synchronization for filter bank multicarrier systems » de T. Fusco, L. Izzo, A. Petrella, et M. Tanda propose notamment une technique d'estimation de décalage en temps et en fréquence d'un récepteur OFDM/OQAM, également basée sur l'utilisation de préambule. En particulier, cette technique utilisée dans le domaine temporel est basée sur la création d'une périodicité à la sortie du modulateur.

Bien que cette technique offre de bons résultats en termes de performance et de complexité, elle impose l'utilisation d'un préambule spécifique dont la durée est importante au regard de la durée d'un symbole M. En particulier, la durée du préambule utilisé est au moins égale à 2M échantillons de signal modulé (c'est-à-dire à trois symboles de données réelles à l'émission). Les sorties de l'étape de transformée de Fourier inverse, pour ce préambule spécifique, sont donc liées comme celles d'une transformée de Fourier inverse avec des entrées réelles et, par suite, la durée du préambule utilisé est trois fois plus importante que la longueur (L=M) du filtre prototype utilisé.

Un autre inconvénient est que la durée 3M du préambule crée une périodicité de M, si bien que la synchronisation fréquentielle ne peut être assurée sans ambiguïté que si $|M\Delta f| < 1/2$, avec $M\Delta f = \Delta v$ représentant un décalage fréquentiel normalisé, ainsi l'estimation du décalage fréquentiel ne peut être effectuée que sur une plage de fréquence relativement limitée.

Il existe donc un besoin pour une nouvelle technique de transmission de signaux multiporteuses de type OFDM/OQAM ou BFDM/OQAM, permettant de simplifier l'opération de synchronisation des récepteurs par rapport aux techniques de l'art antérieur relatives à l'estimation des décalages en phase et/ou en temps et/ou à l'estimation conjointe d'un décalage en temps et en fréquence, ces décalages étant introduits par le canal de transmission et/ou le système de transmission et affectant de tels signaux multiporteuses.

## 3. Exposé de l'invention

L'invention propose une solution nouvelle qui ne présente pas l'ensemble de ces inconvénients de l'art antérieur, sous la forme d'un procédé de réception d'un signal multiporteuse de type OQAM mettant en oeuvre une étape d'estimation, dans le domaine temporel, d'au moins un décalage en temps, en phase et/ou en fréquence du signal multiporteuse, mettant en oeuvre au moins un estimateur pour l'estimation du décalage en temps, dit estimateur temporel, et/ou au moins un estimateur pour l'estimation du décalage en phase, dit estimateur de phase, et/ou au moins un estimateur pour l'estimation dudit décalage en fréquence, dit estimateur en fréquence,

Selon l'invention, au moins un des estimateurs tient compte des coefficients d'un filtre prototype utilisé en émission pour mettre en forme au moins un préambule inséré dans ledit signal multiporteuse.

Ainsi, l'invention repose sur une approche nouvelle et inventive de la synchronisation des récepteurs utilisés pour démoduler des signaux multiporteuses de type OFDM/OQAM ou BFDM/OQAM, appelés plus généralement signaux multiporteuses OQAM, présentant une complexité réduite par rapport aux techniques de l'art antérieur.

En particulier, l'utilisation de tels estimateurs tenant compte du filtre prototype appliqué au préambule permet de réduire de moitié la complexité de l'étape d'estimation, un estimateur selon l'invention pouvant être réduit à effectuer une somme sur M/4 termes pour l'estimation conjointe d'un décalage en temps et/ou en phase alors qu'un estimateur selon l'art antérieur tel que décrit dans le premier des documents Fusco précités nécessite notamment d'effectuer une somme sur M/2 termes, avec M le nombre de sous-porteuses d'un symbole multiporteuse OQAM du signal multiporteuse.

Par ailleurs, pour l'estimation conjointe d'un décalage en temps et/ou en fréquence, selon l'art antérieur la périodicité créée par le préambule utilisé est égale à M, c'est-à-dire que la synchronisation fréquentielle ne peut être assurée sans ambiguïté que si $|M\Delta f| < 1/2$. Par ailleurs la méthode requiert une complexité de calcul selon une somme d'au moins M+1 termes.

Au contraire, l'invention permet de réduire la durée du préambule à la durée d'un symbole M tout en permettant une estimation fréquentielle sur une bande de fréquence deux fois plus grande et une complexité de calcul réduite à M/2 termes.

En effet, dans le document Fusco relatif à l'estimation conjointe des décalages en temps et en fréquence, la durée du préambule émis pour créer la périodicité est plus longue que celle du filtre prototype.

De plus, une telle technique de réception permet de tenir compte de la causalité du filtre prototype. Un récepteur mettant en oeuvre une telle technique de réception est ainsi physiquement réalisable, puisqu'il est basé sur l'utilisation d'un filtre prototype causal. Or dans les documents Fusco précités, le schéma de modulation proposé est non causal. Autrement dit, le paramètre de délai D n'est pas pris en considération, et par suite, les relations de conjugaison à la sortie de l'étape de transformation fréquence/temps sont identiques à celles d'une transformation fréquence/temps avec des entrées réelles si les porteuses impaires (ou paires) sont modulées par une valeur nulle.

En particulier, la durée du préambule du signal multiporteuse dépend de l'estimateur selon l'invention ainsi que de la longueur de filtre prototype utilisé en émission. Afin d'éviter un allongement de la durée du préambule, il est possible de commuter entre deux filtres prototypes. En d'autres termes, différents filtres prototypes peuvent être utilisés en émission, l'un pour mettre en forme le préambule et l'autre pour mettre en forme la partie utile du signal multiporteuse. Ainsi, il est possible d'utiliser un filtre prototype très court pour mettre en forme le préambule utilisé pour la synchronisation (par exemple de longueur $L = M$, permettant de générer un préambule formé d'un unique symbole multiporteuse OQAM par exemple), et un filtre prototype plus long pour la partie utile. Il est également possible d'utiliser des filtres prototypes plus longs pour mettre en forme le préambule, par exemple de longueur $L = qM$, avec $q$ un entier supérieur à 1. Dans ce cas, il peut être nécessaire d'ajouter une ou plusieurs colonnes de symboles de préambules nuls dans le préambule, avant les données utiles.

Comme détaillé ultérieurement, il est à noter que l'estimation conjointe de décalages en temps et en phase et en fréquence est rendue possible par la prise en compte des coefficients d'un filtre prototype utilisé en émission pour la mise en forme de préambules particuliers.

Selon un aspect particulier de l'invention, au moins un des estimateurs met en oeuvre une pseudo-périodicité tenant compte dudit préambule et dudit filtre prototype.

Cet aspect présente l'avantage de réduire la complexité de calculs mis en oeuvre par l'estimateur.

Selon un autre aspect particulier de l'invention, l'étape d'estimation met en oeuvre, dans le domaine temporel, une première sous-étape d'estimation d'un décalage en temps (2110, 2120), suivie d'une seconde sous-étape d'estimation d'un décalage en phase ou d'une seconde sous-étape d'estimation d'un décalage en fréquence.

En effet, selon un premier mode de réalisation de l'invention, l'étape d'estimation met en oeuvre, dans le domaine temporel, une première sous-étape d'estimation d'un décalage en temps, suivie d'une seconde sous-étape d'estimation d'un décalage en phase.

Selon cet aspect particulier relatif au premier mode de réalisation mettant en oeuvre une estimation d'un décalage en temps et en phase, l'invention propose une solution pour l'estimation conjointe d'un décalage en temps et d'un décalage en phase. Pour y parvenir, l'invention met en oeuvre deux sous-étapes successives d'estimation, la première délivrant une estimation du décalage en temps et la deuxième utilisant le résultat de la première pour délivrer l'estimation d'un décalage en phase.

Selon un deuxième mode de réalisation de l'invention, l'étape d'estimation met en oeuvre dans le domaine temporel, une première sous-étape d'estimation d'un décalage en temps, suivie d'une seconde sous-étape d'estimation d'un décalage en fréquence.

En effet, la synchronisation revient à estimer le retard temporel ainsi que le décalage fréquentiel introduits au démodulateur par rapport au modulateur.

Selon cet aspect particulier relatif au deuxième mode de réalisation, l'invention propose une solution pour l'estimation conjointe d'un décalage en temps et d'un décalage en fréquence. Pour y parvenir, l'invention met en oeuvre deux sous-étapes successives d'estimation, la première délivrant une estimation du décalage en temps et la deuxième utilisant le résultat de la première pour délivrer l'estimation d'un décalage en fréquence.

Selon un autre aspect de l'invention relatif au premier mode de réalisation, l'estimateur temporel peut mettre en oeuvre la première sous-étape d'estimation d'un décalage en temps selon l'une des équations suivantes :

$$\hat{\tau}_{LS_1} = \underset{\tilde{\tau}}{arg\,max} \left| \sum_{k=0}^{M/4-1} h(k)h(M/2-1-k)r(k+\tilde{\tau})r(M/2-1-k+\tilde{\tau}) \right|$$

et

$$\hat{\tau}_{LS_2} = \underset{\tilde{\tau}}{arg\,max} \left| \sum_{k=0}^{M/4-1} h(M-1-k)h(M/2+k)r(M/2+k+\tilde{\tau})r(M-1-k+\tilde{\tau}) \right|$$

et/ou l'estimateur de phase met en oeuvre la seconde sous-étape d'estimation d'un décalage en phase selon l'une des équations suivantes :

$$\hat{\phi}_{LS_1} = \frac{1}{2} \angle \left\{ \sum_{k=0}^{M/4-1} h(k)h(M/2-1-k)r(k+\hat{\tau})r(M/2-1-k+\hat{\tau}) \right\}$$

et

$$\hat{\phi}_{LS_2} = \frac{1}{2} \angle \left\{ \sum_{k=0}^{M/4-1} h(M-1-k)h(M/2+k)r(M/2+k+\hat{\tau})r(M-1-k+\hat{\tau}) \right\}$$

avec :

$\hat{\tau}_{LS_1}$ ou $\hat{\tau}_{LS_2}$ l'estimation dudit décalage en temps en sortie dudit estimateur temporel, et $\hat{\tau}$ l'estimation du décalage temporel fixée en entrée de l'estimateur du décalage en phase ;

$\hat{\phi}_{LS_1}$ ou $\hat{\phi}_{LS_2}$ l'estimation dudit décalage en phase en sortie dudit estimateur de phase ;

$\angle\{.\}$ l'argument d'un nombre complexe ;

M le nombre de sous-porteuses d'un symbole OQAM dudit signal multiporteuse ;

$k$ un entier tel que $0 < k \leq M/4-1$ ;

$\tilde{\tau}$ un entier tel que $0 \leq \tilde{\tau} \leq \tilde{\tau}_{max}$ avec $\tilde{\tau}_{max}$ une valeur maximale prédéterminée de $\tilde{\tau}$ ;

$h(k)$ des coefficients dudit filtre prototype utilisé en émission ;

$r(k)$ un signal multiporteuse reçu, tel que $r(k)i=s(k-\tau)e^{j\phi}+b(k)$ ;

$s(k)$ un signal multiporteuse émis ;

$b(k)$ un bruit blanc gaussien ;

$\tau$ ledit décalage en temps du signal multiporteuse reçu par rapport audit signal multiporteuse émis ;

$\phi$ ledit décalage en phase du signal multiporteuse reçu par rapport audit signal multiporteuse émis.

Les estimateurs en temps et en phase proposés reposent donc sur la connaissance du filtre prototype utilisé à l'émission pour mettre en forme le préambule, et permettent de diminuer la complexité de calcul des estimations du décalage en temps et/ou en phase du fait des relations de symétrie obtenues en sortie du module de transformation fréquence/temps du signal multiporteuse OQAM.

Selon une caractéristique particulière de l'invention relative au premier mode de réalisation, l'étape d'estimation tient également compte de la position d'au moins une paire de valeurs maximales obtenues en émission pour le signal multiporteuse, ladite position étant définie par rapport aux sorties d'une étape de transformation du domaine fréquentiel vers le domaine temporel d'un ensemble de symboles de données destinés à former le préambule, dits symboles de préambule.

En effet, les inventeurs de la présente demande de brevet ont mis en évidence des relations particulières de conjugaison entre les différentes sorties de l'étape de transformation du domaine fréquentiel vers le domaine temporel mise en oeuvre en émission (par une transformation de Fourier rapide inverse par exemple). Du fait de la nature du signal multiporteuse OQAM et de ces relations de conjugaison, on met en évidence une « pseudo-périodicité » dans le signal multiporteuse en sortie du modulateur, que l'on exploite en réception.

L'estimation des décalages en phase et/ou en temps selon l'invention peut donc être effectuée plus rapidement et plus simplement.

En particulier, le procédé de réception selon l'invention peut comprendre une étape de suppression des échantillons temporels du signal multiporteuse présentant une amplitude inférieure à un seuil prédéterminé, mise en oeuvre préalablement à l'étape d'estimation.

De cette façon, il est possible de supprimer les échantillons du signal multiporteuse reçu présentant une faible valeur, ces échantillons étant fortement perturbés par le canal de transmission. On conserve alors uniquement les échantillons du signal multiporteuse reçu correspondant aux valeurs crêtes obtenues en sortie du module de transformée fréquence/temps, ces échantillons étant peu affectés par le bruit et le canal.

Connaissant les positions de ces valeurs crêtes ou maximales, il est possible de définir des estimateurs en temps et/ou en phase simplifiés pour l'étape d'estimation.

Selon un premier exemple du premier mode de réalisation, pour des symboles de préambule $p_{m,n}$ définis en entrée de l'étape de transformation du domaine fréquentiel vers le domaine temporel mise en oeuvre en émission par :

$$\begin{cases} p_{m,n} = \sqrt{2}/2 & \text{pour} & m=4p & \text{et} & m=1+4p \\ p_{m,n} = -\sqrt{2}/2 & \text{pour} & m=2+4p & \text{et} & m=3+4p \end{cases} \text{ et}$$

avec $p_{m,n}$ un symbole de préambule associé à une sous-porteuse d'indice $m$ à l'instant $n$, $p$ un entier, et $0 \leq m \leq M-1$, l'estimateur temporel met en oeuvre la première sous-étape d'estimation d'un décalage en temps selon l'une des équations suivantes :

$$\hat{\tau}_{LS_1} = \underset{\tilde{\tau}}{arg\,max}\left|r(\tilde{\tau})r(M\,/\,2-1+\tilde{\tau})\right|,$$

$$\hat{\tau}_{LS_2} = \underset{\tilde{\tau}}{arg\,max}\left|r(M\,/\,2+\tilde{\tau})r(M-1+\tilde{\tau})\right|,$$

avec :

$\hat{\tau}_{LS_1}$ ou $\hat{\tau}_{LS_2}$ l'estimation dudit décalage en temps en sortie dudit estimateur temporel;
M le nombre de sous-porteuses d'un symbole OQAM dudit signal multiporteuse ;
$\tilde{\tau}$ un entier tel que $0 \le \tilde{\tau} \le \tilde{\tau}_{max}$ avec $\tilde{\tau}_{max}$ une valeur maximale prédéterminée de $\tilde{\tau}$ ;
r(k) un signal multiporteuse reçu, tel que $r(k) = s(k\text{-}\tau)e^{j\phi}+b(k)$;
k un entier, par exemple $0 \le k \le M/2$;
s(k) un signal multiporteuse émis ;
b(k) un bruit blanc gaussien ;
$\tau$ un décalage en temps du signal multiporteuse reçu par rapport au signal multiporteuse émis ;
$\phi$ un décalage en phase du signal multiporteuse reçu par rapport au signal multiporteuse émis.

Selon un deuxième exemple du premier mode de réalisation, pour des symboles de préambule $p_{m,n}$ définis en entrée de l'étape de transformation du domaine fréquentiel vers le domaine temporel mise en oeuvre en émission par :

$$\begin{cases} p_{2m,n} = \sqrt{2}\,/\,2 \\ p_{2m+1,n} = j\sqrt{2}\,/\,2 \end{cases} \text{pour } 0 \le m \le M\,/\,2-1$$

l'estimateur temporel met en oeuvre la première sous-étape d'estimation d'un décalage en temps selon l'une des équations suivantes :

$$\hat{\tau}_{LS_1} = \underset{\tilde{\tau}}{arg\,max}\left|r(M\,/\,4-1+\tilde{\tau})r(M\,/\,4+\tilde{\tau})\right|,$$

$$\hat{\tau}_{LS_2} = \underset{\tilde{\tau}}{arg\,max}\left|r(3M\,/\,4-1+\tilde{\tau})r(3M\,/\,4+\tilde{\tau})\right|,$$

avec :

$\hat{\tau}_{LS_1}$ ou $\hat{\tau}_{LS_2}$ l'estimation dudit décalage en temps en sortie dudit estimateur temporel;
M le nombre de sous-porteuses d'un symbole OQAM dudit signal multiporteuse ;
$\tilde{\tau}$ un entier tel que $0 \le \tilde{\tau} \le \tilde{\tau}_{max}$ avec $\tilde{\tau}_{max}$ une valeur maximale prédéterminée de $\tilde{\tau}$,
r(k) un signal multiporteuse reçu, tel que $r(k) = s(k\text{-}\tau)e^{j\phi}+b(k)$ ;
k un entier, par exemple $0 \le k \le M/2$;
s(k) un signal multiporteuse émis ;
b(k) un bruit blanc gaussien ;
$\tau$ un décalage en temps du signal multiporteuse reçu par rapport au signal multiporteuse émis ; $\phi$ un décalage en phase du signal multiporteuse reçu par rapport au signal multiporteuse émis.

Les préambules selon ces deux premiers exemples sont particulièrement intéressants, car ils peuvent être utilisés pour d'autres fonctions, comme l'estimation de canal.
En particulier, on note qu'il peut être nécessaire d'ajouter une ou plusieurs colonnes de symboles de préambule nuls dans le préambule, avant la partie utile, tels que $p_{m,n+1} = 0$ pour $0 \le m \le M\text{-}1$.
L'ajout de ces colonnes de symbole de préambule nuls est facultatif pour les estimateurs temporels selon la première équation ($\hat{\tau}_{LS_1}$), et dépend dans ce cas de la longueur du filtre prototype utilisé en émission pour mettre en forme les préambules. Ainsi, pour un filtre prototype de longueur $L = M$, une seule colonne de préambule (formée des symboles de préambule à l'instant *n*) donne de bonnes performances, mais pour un filtre prototype de longueur supérieure, par exemple de longueur *L>2M*, il est possible d'ajouter des colonnes de données nulles (formées de symboles de prémambule nuls aux instants *n*+1, *n* + 2, etc) pour améliorer les performances.

L'ajout d'au moins une colonne de symboles de préambule nuls est en revanche nécessaire pour les estimateurs temporels selon la deuxième équation ($\hat{\tau}_{LS_2}$).

Selon un troisième exemple du premier mode de réalisation, pour des symboles de préambule $p_{m,n}$ définis en entrée de l'étape de transformation du domaine fréquentiel vers le domaine temporel mise en oeuvre en émission par :

$$\begin{cases} p_{2m,n} = \sqrt{2}\,/\,2 \\ p_{2m+1,n} = 0 \end{cases} \text{pour } 0 \leq m \leq M\,/\,2 - 1$$

l'estimateur temporel met en oeuvre la première sous-étape d'estimation d'un décalage en temps selon l'une des équations suivantes :

$$\hat{\tau}_{LS_1} = \underset{\tilde{\tau}}{arg\,max} \left| r(M\,/\,4 - 1 + \tilde{\tau})r(M\,/\,4 + \tilde{\tau}) \right|,$$

$$\hat{\tau}_{LS_2} = \underset{\tilde{\tau}}{arg\,max} \left| r(3M\,/\,4 - 1 + \tilde{\tau})r(3M\,/\,4 + \tilde{\tau}) \right|,$$

$$\hat{\tau}_{LS_3} = \underset{\tilde{\tau}}{arg\,max} \left| r(M\,/\,4 - 1 + \tilde{\tau})r(3M\,/\,4 + \tilde{\tau}) + r(M\,/\,4 + \tilde{\tau})r(3M\,/\,4 - 1 + \tilde{\tau}) \right|,$$

avec :

$\hat{\tau}_{LS_1}$, $\hat{\tau}_{LS_2}$ ou $\hat{\tau}_{LS_3}$ l'estimation dudit décalage en temps en sortie dudit estimateur temporel ; M le nombre de sous-porteuses d'un symbole OQAM dudit signal multiporteuse ;
$\tilde{\tau}$ un entier tel que $0 \leq \tilde{\tau} \leq \tilde{\tau}_{max}$ avec $\tilde{\tau}_{max}$ une valeur maximale prédéterminée de $\tilde{\tau}$
$r(k)$ un signal multiporteuse reçu, tel que $r(k) = s(k\text{-}\tau)e^{j\phi}+b(k)$ ;
$k$ un entier, par exemple $0 \leq k \leq M/2$ ;
$s(k)$ un signal multiporteuse émis ;
$b(k)$ un bruit blanc gaussien ;
$\tau$ un décalage en temps du signal multiporteuse reçu par rapport au signal multiporteuse émis ;
$\phi$ un décalage en phase du signal multiporteuse reçu par rapport au signal multiporteuse émis.

Selon un quatrième exemple du premier mode de réalisation, pour des symboles de préambule $p_{m,n}$ définis en entrée de l'étape de transformation du domaine fréquentiel vers le domaine temporel mise en oeuvre en émission par :

$$\begin{cases} p_{2m,n} = (-1)^m \sqrt{2}\,/\,2 \\ p_{2m+1,n} = 0 \end{cases} \text{pour } 0 \leq m \leq M\,/\,2 - 1$$

l'estimateur temporel met en oeuvre la première sous-étape d'estimation d'un décalage en temps selon l'une des équations suivantes :

$$\hat{\tau}_{LS_1} = \underset{\tilde{\tau}}{arg\,max} \left| r(\tilde{\tau})r(M\,/\,2 - 1 + \tilde{\tau}) \right|,$$

$$\hat{\tau}_{LS_2} = \underset{\tilde{\tau}}{arg\,max} \left| r(M\,/\,2 + \tilde{\tau})r(M - 1 + \tilde{\tau}) \right|,$$

$$\hat{\tau}_{LS_3} = \arg\max_{\tilde{\tau}} \left| r(\tilde{\tau})r(M-1+\tilde{\tau}) + r(M/2-1+\tilde{\tau})r(M/2+\tilde{\tau}) \right|,$$

avec :

$\hat{\tau}_{LS_1}$, $\hat{\tau}_{LS_2}$ ou $\hat{\tau}_{LS_3}$ l'estimation dudit décalage en temps en sortie dudit estimateur temporel ; M le nombre de sous-porteuses d'un symbole OQAM dudit signal multiporteuse ;
$\tilde{\tau}$ un entier tel que $0 \leq \tilde{\tau} \leq \tilde{\tau}_{max}$ avec $\tilde{\tau}_{max}$ une valeur maximale prédéterminée de $\tilde{\tau}$
r(k) un signal multiporteuse reçu, tel que $r(k) = s(k-\tau)e^{j\phi} + b(k)$ ;
k un entier, par exemple $0 \leq k \leq M/2$ ;
s(k) un signal multiporteuse émis ;
b(k) un bruit blanc gaussien ;
$\tau$ un décalage en temps du signal multiporteuse reçu par rapport au signal multiporteuse émis ;
$\phi$ un décalage en phase du signal multiporteuse reçu par rapport au signal multiporteuse émis.

Selon un cinquième exemple du premier mode de réalisation, pour des symboles de préambule $p_{m,n}$ définis en entrée de ladite étape de transformation du domaine fréquentiel vers le domaine temporel mise en oeuvre en émission par :

$$\begin{cases} p_{m,n} = 1 & \text{si } \mathrm{mod}(m,4) = 0 \\ p_{m,n} = 0 & \text{sinon} \end{cases} \quad \text{pour } 0 \leq m \leq M-1$$

l'estimateur temporel met en oeuvre la première sous-étape d'estimation d'un décalage en temps selon l'une des équations suivantes :

$$\hat{\tau}_{LS_1} = \arg\max_{\tilde{\tau}} \left| r(\tilde{\tau})r(M/2-1+\tilde{\tau}) + r(M/4-1+\tilde{\tau})r(M/4+\tilde{\tau}) \right|$$

$$\hat{\tau}_{LS_2} = \arg\max_{\tilde{\tau}} \left| r(M/2+\tilde{\tau})r(M-1+\tilde{\tau}) + r(3M/4-1+\tilde{\tau})r(3M/4+\tilde{\tau}) \right|$$

$$\hat{\tau}_{LS_3} = \arg\max_{\tilde{\tau}} \left| r(\tilde{\tau})r(M-1+\tilde{\tau}) + r(M/4-1+\tilde{\tau})r(3M/4+\tilde{\tau}) \right.$$
$$\left. + r(M/4+\tilde{\tau})r(3M/4-1+\tilde{\tau}) + r(M/2-1+\tilde{\tau})r(M/2+\tilde{\tau}) \right|$$

avec :

$\hat{\tau}_{LS_1}$, $\hat{\tau}_{LS_2}$ ou $\hat{\tau}_{LS_3}$ l'estimation dudit décalage en temps en sortie dudit estimateur temporel ; M le nombre de sous-porteuses d'un symbole OQAM dudit signal multiporteuse ;
$\tilde{\tau}$ un entier tel que $0 \leq \tilde{\tau} \leq \tilde{\tau}_{max}$ avec $\tilde{\tau}_{max}$ une valeur maximale prédéterminée de $\tilde{\tau}$
r(k) un signal multiporteuse reçu, tel que $r(k) = s(k-\tau)e^{j\phi} + b(k)$ ;
k un entier, par exemple $0 \leq k \leq M/2$ ;
s(k) un signal multiporteuse émis ;
b(k) un bruit blanc gaussien ;
$\tau$ un décalage en temps du signal multiporteuse reçu par rapport au signal multiporteuse émis ;
$\phi$ un décalage en phase du signal multiporteuse reçu par rapport au signal multiporteuse émis.

Selon ces trois derniers exemples du premier mode de réalisation, on considère un système de transmission OQAM mettant en oeuvre un nombre de porteuses M multiple de 4 et un délai D tel que D=qM-1, ce qui permet d'obtenir d'autres relations particulières entre les sorties de l'étape de transformation du domaine fréquentiel vers le domaine temporel mise en oeuvre en émission, et donc de simplifier encore les estimateurs.

A nouveau, comme noté en relation avec les deux premiers exemples, il peut être nécessaire d'ajouter une ou plusieurs colonne(s) de symboles de préambule nuls dans le préambule, avant la partie utile, tels que $p_{m,n+1}=0$ pour $0{\le}m{\le}M$-1 et $i$=1,2,... . L'ajout de ces symboles de préambule nuls est toujours facultatif pour les estimateurs temporels selon la première équation ($\hat{\tau}_{LS_1}$), mais nécessaire pour les estimateurs temporels selon la deuxième équation ($\hat{\tau}_{LS_2}$) et la troisième équation ($\hat{\tau}_{LS_3}$).

Selon un aspect particulier du deuxième mode de réalisation focalisé sur l'estimation d'un décalage en temps et en fréquence, l'étape d'estimation tient compte du fait qu'au moins un des symboles de préambule comprend sensiblement une sous-porteuse sur deux ayant une valeur nulle.

Plus précisément, pour des symboles de préambule $p_{m,n}$ définis en entrée de l'étape de transformation du

$$\begin{cases} p_{2m,0} = d \\ p_{2m+1,0} = 0 \end{cases}$$

domaine fréquentiel vers le domaine temporel, le premier symbole émis à l'instant $n = 0$ étant tel que :

avec $d \in \Re$ ou $d \in \Im$ ou $\begin{cases} p_{2m,0} = 0 \\ p_{2m+1,0} = d \end{cases}$ avec $d \in \Re$ ou $d \in \Im$ avec $p_{m,n}$ un symbole de préambule associé à une sous-porteuse d'indice $m$ à l'instant $n = 0$ , et $0{\le}m{\le}M/2$-1, avec M le nombre de sous-porteuses d'un symbole OQAM du signal multiporteuse ;

tandis que le symbole suivant émis à l'instant $n$=1 correspond à un symbole nul tel que :

$p_{m,n}$=0, pour $0{\le}m{\le}M$-1

l'estimateur temporel peut mettre en oeuvre la première sous-étape d'estimation d'un décalage en temps selon l'équation suivante :

$$\hat{\tau}_{LS} = \underset{\tilde{\tau}}{arg\,max}\left\{2\left|R_1(\tilde{\tau})\right| - Q_1(\tilde{\tau})\right\},$$

et l'estimateur fréquentiel met en oeuvre ladite seconde sous-étape d'estimation d'un décalage en fréquentiel selon l'équation suivante :

$$\hat{\Delta f}_{LS} = \frac{1}{\pi M}arg\left\{R_1(\hat{\tau}_{LS})\right\},$$

avec :

$$R_1(\tilde{\tau}) = \sum_{k=0}^{M/2-1} h(k)h(k+M/2)r*(k+\tilde{\tau})r(k+M/2+\tilde{\tau}),$$

$$Q_1(\tilde{\tau}) = \sum_{k=0}^{M/2-1} h(k)^2\left|r(k+\tilde{\tau})\right|^2 + h(k+M/2)^2\left|r(k+M/2+\tilde{\tau})\right|^2,$$

$\hat{\tau}_{LS}$ l'estimation dudit décalage en temps en sortie de l'estimateur temporel ;

$\hat{\Delta f}_{LS}$ l'estimation dudit décalage en fréquence en sortie de l'estimateur de phase ;

M le nombre de sous-porteuses d'un symbole OQAM du signal multiporteuse ;

$k$ un entier tel que $0{\le}k{\le}M/2$-1 ;

$\tilde{\tau}$ un entier tel que $0{\le}\tilde{\tau}{\le}\tilde{\tau}_{max}$ avec $\tilde{\tau}_{max}$ une valeur maximale prédéterminée de $\tilde{\tau}$

$h(k)$ des coefficients dudit filtre prototype utilisé en émission ;

$r(k)$ un signal multiporteuse reçu, tel que $r(k) = e^{j2\pi\Delta f}[c(k){\otimes}s(k{-}\tau)]+b(k)$ si le décalage fréquentiel intervient par exemple à l'émission. Il est également possible de prendre en compte un décalage fréquentiel introduit à la réception;

$\otimes$ un produit de convolution ;

$c(k)$ un canal multi-trajet

$s(k)$ un signal multiporteuse émis ;

$b(k)$ un bruit blanc gaussien ;

$\tau$ le décalage en temps du signal multiporteuse reçu par rapport au signal multiporteuse émis ; $\Delta f$ le décalage en fréquence du signal multiporteuse reçu par rapport au signal multiporteuse émis.

Les estimateurs en temps et en fréquence proposés reposent donc sur une connaissance du filtre prototype utilisé à l'émission pour mettre en forme le préambule, et permettent de diminuer la complexité de calcul des estimations du décalage en temps et en fréquence du fait des relations de symétrie obtenues en sortie du module de transformation fréquence/temps du signal multiporteuse OQAM.

En outre, du fait de cette symétrie, les estimateurs en temps et en fréquence selon l'invention sont basés sur la sélection d'un préambule tel que la moitié des porteuses est nulle, ce qui a pour effet de créer une « pseudo-périodicité » à la sortie du modulateur.

Les estimateurs en temps et en fréquence selon l'invention se distinguent des estimateurs en temps et en fréquence selon l'art antérieur du document Fusco relatif à l'estimation conjointe des décalages en temps et en fréquence, en ce que la périodicité n'est pas créée par transmission du même préambule durant un certaine durée, mais du fait des relations de symétrie obtenues en sortie du module de transformation fréquence/temps du signal multiporteuse OQAM ce qui permet d'obtenir une synchronisation fréquentielle sur un intervalle fréquentiel deux fois plus important que celui du document Fusco relatif à l'estimation conjointe des décalages en temps et en fréquence.

Selon un exemple particulier du deuxième mode de réalisation, pour des symboles de préambule $p_{m,n}$, définis en entrée de ladite étape de transformation du domaine fréquentiel vers le domaine temporel le premier symbole émis à l'instant $n = 0$ étant tel que :

$$\begin{cases} p_{2m,0} = d & \text{avec} \quad d \in \Re \quad ou \quad d \in \Im \\ p_{2m+1,0} = 0 \end{cases} \quad ou \quad \begin{cases} p_{2m,0} = 0 \\ p_{2m+1,0} = d & \text{avec} \quad d \in \Re \quad ou \quad d \in \Im \end{cases}$$

avec $p_{m,n}$ un symbole de préambule associé à une sous-porteuse d'indice $m$ à l'instant $n = 0$ , et $0 \le m \le M/2-1$, avec M le nombre de sous-porteuses d'un symbole OQAM dudit signal multiporteuse ;

tandis que le symbole suivant émis à l'instant $n=1$ correspond à un symbole nul tel que :

$p_{m,1}=0$, pour $0 \le m \le M-1$

l'étape d'estimation tient également compte de la position d'au moins une paire de valeurs maximales obtenues en émission pour ledit signal multiporteuse,

la position étant définie par rapport aux sorties d'une étape de transformation du domaine fréquentiel vers le domaine temporel d'un ensemble de symboles de données destinés à former le préambule, dits symboles de préambule.

L'estimateur temporel met en oeuvre la première sous-étape d'estimation d'un décalage en temps selon l'équation suivante :

$$\hat{\tau}_{LS} = \underset{\tilde{\tau}}{arg\,max} \left\{ \left| R_1(\tilde{\tau}) \right| Q_1(\tilde{\tau}) \right\},$$

et l'estimateur fréquentiel met en oeuvre ladite seconde sous-étape d'estimation d'un décalage en fréquentiel selon l'équation suivante :

$$\hat{\Delta f}_{LS} = \frac{1}{2\pi N} arg \left\{ R_1(\hat{\tau}_{LS}) \right\},$$

avec pour $k$ un entier, M le nombre de sous-porteuses d'un symbole OQAM dudit signal multiporteuse, et lesdites positions de valeurs maximales suivantes k, M/2 - 1-k, M/2+k, M-1-k:

$$R(\tilde{\tau}) = h(k)h(k+M/2)r*(k+\tilde{\tau})r(k+M/2+\tilde{\tau})$$
$$+h(M/2-1-k)h(M-1-k)r*(M/2-1-k+\tilde{\tau})r(M-1-k+\tilde{\tau})$$

$$Q(\tilde{\tau}) = h(k+M/2)^2 \left| r(k+\tilde{\tau}) \right|^2 + h(M-1-k)^2 \left| r(M/2-1-k+\tilde{\tau}) \right|^2$$
$$+h(k) \left| r(M/2+k+\tilde{\tau}) \right|^2 h(M/2-1-k)^2 \left| r(M-1-k+\tilde{\tau}) \right|^2$$

$\hat{\tau}_{LS}$ l'estimation dudit décalage en temps en sortie de l'estimateur temporel ;

$\Delta\hat{f}_{LS}$ l'estimation dudit décalage en fréquence en sortie de l'estimateur de phase ;

M le nombre de sous-porteuses d'un symbole OQAM dudit signal multiporteuse ;

$\tilde{\tau}$ un entier tel que $0 \leq \tilde{\tau} \leq \tilde{\tau}_{max}$ avec $\tilde{\tau}_{max}$ une valeur maximale prédéterminée de $\tilde{\tau}$

h(k) des coefficients dudit filtre prototype utilisé en émission ;

r(k) un signal multiporteuse reçu, tel que $r(k) = e^{j2\pi\Delta f}[c(k) \otimes s(k-\tau)] + b(k)$ si le décalage fréquentiel intervient par exemple à l'émission. Il est également possible de prendre en compte un décalage fréquentiel introduit à la réception;

$\otimes$ un produit de convolution ;

c(k) un canal multi-trajet

s(k) un signal multiporteuse émis ;

b(k) un bruit blanc gaussien ;

$\tau$ le décalage en temps du signal multiporteuse reçu par rapport audit signal multiporteuse émis ;

$\Delta f$ le décalage en fréquence du signal multiporteuse reçu par rapport audit signal multiporteuse émis.

De même que souligné précédemment pour les estimateurs en temps et en phase selon le premier mode de réalisation, les inventeurs de la présente demande de brevet ont mis en évidence, dans ce mode de réalisation, des relations particulières de conjugaison entre les différentes sorties de l'étape de transformation du domaine fréquentiel vers le domaine temporel mise en oeuvre en émission (par une transformation de Fourier rapide inverse par exemple). Du fait de la nature du signal multiporteuse OQAM et de ces relations de conjugaison, on met en évidence une « pseudo-périodicité » dans le signal multiporteuse en sortie du modulateur, que l'on exploite en réception.

L'estimation des décalages en temps et/ou en fréquence selon le deuxième mode de réalisation de l'invention peut donc être effectuée plus rapidement et plus simplement.

En particulier, le procédé de réception selon l'invention peut comprendre une étape de suppression des échantillons temporels du signal multiporteuse présentant une amplitude inférieure à un seuil prédéterminé, mise en oeuvre préalablement à l'étape d'estimation.

De cette façon, il est possible de ne pas tenir compte des échantillons du signal multiporteuse reçu présentant une faible valeur, ces échantillons étant fortement perturbés par le canal de transmission. On conserve alors uniquement les échantillons du signal multiporteuse reçu correspondant aux valeurs crêtes obtenues en sortie du module de transformée fréquence/temps, ces échantillons étant peu affectés par le bruit et le canal.

Connaissant les positions de ces valeurs crêtes ou maximales correspondant par exemple à k, M/2 - 1-k, M/2+k, M-1-k, il est possible de définir des estimateurs en temps et en fréquence simplifiés pour l'étape d'estimation.

Il est à noter que les symboles de préambule $p_{m,n}$ tels que définis selon cet aspect particulier du deuxième mode de réalisation, comprennent notamment les symboles de préambules relatifs au troisième et au quatrième exemple du premier mode de réalisation, si bien que les estimateurs simplifiés proposés selon cet aspect particulier du deuxième mode de réalisation permettent outre l'estimation d'un décalage en temps suivie de l'estimation d'un décalage en fréquence, l'estimations d'un décalage en phase.

Dans un autre mode de réalisation, l'invention concerne un dispositif de réception d'un signal multiporteuse de type OQAM, comprenant des moyens d'estimation, dans le domaine temporel, d'au moins un décalage en temps, en phase et/ou en fréquence du signal multiporteuse. Les moyens d'estimation comprennent au moins un estimateur pour l'estimation du décalage en temps, dit estimateur temporel, et/ou au moins un estimateur pour l'estimation du décalage en phase, dit estimateur de phase, et/ou au moins un estimateur pour l'estimation dudit décalage en fréquence, dit estimateur en fréquence,

Selon l'invention, le signal multiporteuse comprenant au moins un préambule, au moins un des estimateurs tient compte des coefficients d'un filtre prototype utilisé en émission pour mettre en forme au moins un préambule inséré dans ledit signal multiporteuse.

Un tel dispositif de réception est notamment adapté à mettre en oeuvre le procédé de réception décrit précédemment. Il s'agit par exemple d'un récepteur mettant en oeuvre un démodulateur OFDM/OQAM ou BFDM/OQAM.

Un tel récepteur pourra bien sûr comporter les différentes caractéristiques relatives au procédé de réception selon l'invention, qui peuvent être combinées ou prises isolément. Ainsi, les caractéristiques et avantages de ce récepteur sont les mêmes que ceux du procédé de réception, et ne sont donc pas détaillés plus amplement.

L'invention concerne également un programme d'ordinateur comportant des instructions pour la mise en oeuvre d'un procédé de réception tel que décrit précédemment lorsque le programme est exécuté par un processeur.

En effet, le procédé selon l'invention peut être mis en oeuvre de diverses manières, notamment sous forme câblée ou sous forme logicielle.

## 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1, décrite en relation avec l'art antérieur, présente un schéma de modulation OFDM/OQAM classique ;
- les figures 2A et 2B illustrent respectivement un système général de transmission mettant en oeuvre une technique de réception selon un mode de réalisation de l'invention, et l'étape d'estimation mise en oeuvre ;
- la figure 3 représente l'amplitude des sorties du module de transformation fréquence/temps pour un préambule donné ;
- les figures 4 et 5 illustrent l'effet des filtres prototypes sur les valeurs pics obtenues en sorties du module de transformation fréquence/temps pour des préambules spécifiques ;
- les figures 6 et 7 illustrent les fonctions de coût de deux exemples d'estimateurs de décalage en phase et/ou en temps selon le premier mode de réalisation de l'invention;
- les figure 8 et 9 montrent les performances obtenues en utilisant des exemples d'estimateurs de décalage en phase et/ou en temps selon le premier mode de réalisation de l'invention ;
- les figures 10 et 11 représentent l'amplitude des sorties du module de transformation fréquence/temps pour un préambule requis pour l'estimation d'un décalage en temps et/ou en fréquence ;
- la figure 12 illustre la fonction de coût d'un exemple d'estimateurs de décalage en temps et en fréquence selon l'invention ;
- la figure 13 montre les performances obtenues en utilisant des exemples d'estimateurs de décalage en temps et en fréquence selon l'invention ;
- la figure 14 présente la structure simplifiée d'un récepteur mettant en oeuvre une technique de réception selon un mode de réalisation de l'invention.

## 5. Description d'un mode de réalisation de l'invention

### 5.1 Principe général

L'invention se place dans le contexte des systèmes de transmission mettant en oeuvre une modulation de type OFDM/OQAM ou BFDM/OQAM et mettant en oeuvre des préambules, et propose une technique permettant de simplifier l'opération de synchronisation des récepteurs.

On note que ces systèmes de transmission pouvant être implémentés sous forme de bancs de filtres, ils sont également appelés FBMC/OQAM (en anglais « Filter Bank Multicarrier/OQAM »), ou plus simplement OQAM.

Le principe général de l'invention repose sur l'utilisation, côté réception, d'un estimateur pour au moins un décalage en temps, en phase et/ou en fréquence du signal multiporteuse, chacun de ces estimateurs tenant compte du filtre prototype utilisé en émission pour mettre en forme le préambule. Un tel filtre prototype peut être très court et générer, à l'émission, un préambule localisé sur un unique symbole multiporteuse OQAM.

En particulier, si l'on considère un canal multi-trajets, les estimateurs proposés selon l'invention permettent d'estimer le retard maximal introduit par le canal, et donc de compenser correctement les effets du canal.

### 5.2 Exemple de mise en oeuvre

### 5.2.1 Système de transmission

On présente, en relation avec la figure 2A, un système général de transmission mettant en oeuvre une technique de réception selon l'invention.

Plus précisément, les opérations mises en oeuvre côté émission, à savoir les opérations de pré-traitement, conversion du domaine fréquentiel vers le domaine temporel et filtrage, du modulateur 10 sont connues, et ont d'ores et déjà été décrites en relation avec la figure 1.

Nous notons toutefois que dans le cas d'un système de transmission mettant en oeuvre un préambule, les symboles de données entrants à transmettre sur une sous-porteuse $m$ à l'instant $n$ peuvent être notés $c_{m,n}$ au lieu de $a_{m,n}$, et être à valeur complexe pour les symboles de préambule au lieu d'être à valeur réelle pour les symboles de données utiles. Par exemple, les symboles de données aux instants $n=0$ et $n=1$ sont des symboles de préambule, notés $p_{m,n}$, et les symboles de données aux instants suivants sont des symboles de données utiles, notés $a_{m,n}$.

Le signal multiporteuse FBMC/OQAM en sortie du modulateur 10 peut donc s'exprimer sous la forme suivante :

$$s[k] = \sum_{m=0}^{M-1} \sum_{n=-\infty}^{n=+\infty} c_{m,n} h\left( kT_s - n\frac{M}{2}T_s \right) e^{j\frac{2\pi}{M}m(k-D/2)T_s} e^{j\phi_{m,n}} \,,$$

avec $c_{m,n} = p_{m,n}$ des symboles de données à valeur complexe pour la mise en forme du préambule (préférentiellement à valeur réelle ou imaginaire pure), et $c_{m,n} = a_{m,n}$ des symboles de données à valeur réelle pour la mise en forme de la partie utile, $T_s$ le temps d'échantillonnage choisi tel que la durée symbole $T = MT_s$ avec $M = 2N$ le nombre de porteuses. A nouveau, on rappelle que des filtres prototypes distincts peuvent être utilisés pour mettre en forme le préambule et la partie utile du signal multiporteuse $s[k]$.

Le passage dans le canal de transmission peut déformer le signal multiporteuse $s[k]$, en introduisant un bruit additif blanc gaussien, un décalage en temps $\tau$ (également appelé retard), et/ou un décalage en phase $\phi$, et/ou un décalage en fréquence $\Delta f$ du signal multiporteuse.

Le signal multiporteuse reçu peut donc s'exprimer sous la forme suivante :

$$r[k] = s[k-\tau]e^{j\phi} + b[k] \quad \text{et/ou} \quad r(k) = e^{j2\pi\Delta f}\big[c(k) \otimes s(k-\tau)\big] + b(k)$$

si le décalage fréquentiel intervient par exemple à l'émission. Il est également possible de prendre en compte un décalage fréquentiel introduit à la réception.

avec $b[k]$ un bruit blanc additif gaussien complexe circulaire centré de densité spectrale $\sigma_b^2$, $\otimes$ représentant un produit de convolution et $c(k)$ la réponse d'un canal multi-trajet.

Côté réception, on cherche à estimer ces paramètres de décalage en temps $\tau$, décalage en phase $\phi$ et décalage en fréquence $\Delta f$ au cours d'une étape d'estimation 21, puis à compenser le signal multiporteuse reçu au cours d'une étape de compensation 22, afin de synchroniser le récepteur.

En sortie de l'étape de compensation 22, on obtient un signal synchronisé, qui peut s'exprimer sous la forme suivante :

$$r_{synchro}[k] = r[k+\hat{\tau}]e^{-j\hat{\phi}} \text{ et/ou } r_{synchro}[k] = r[k+\hat{\tau}]e^{-j2\pi\Delta f}$$

Ce signal synchronisé peut alors être démodulé de manière classique, lors d'une étape de démodulation 23, afin d'obtenir une estimation des symboles de données émis $\tilde{c}_{m,n}$.

*5.2.2 Estimation des décalages en temps et en phase selon le premier mode de réalisation*

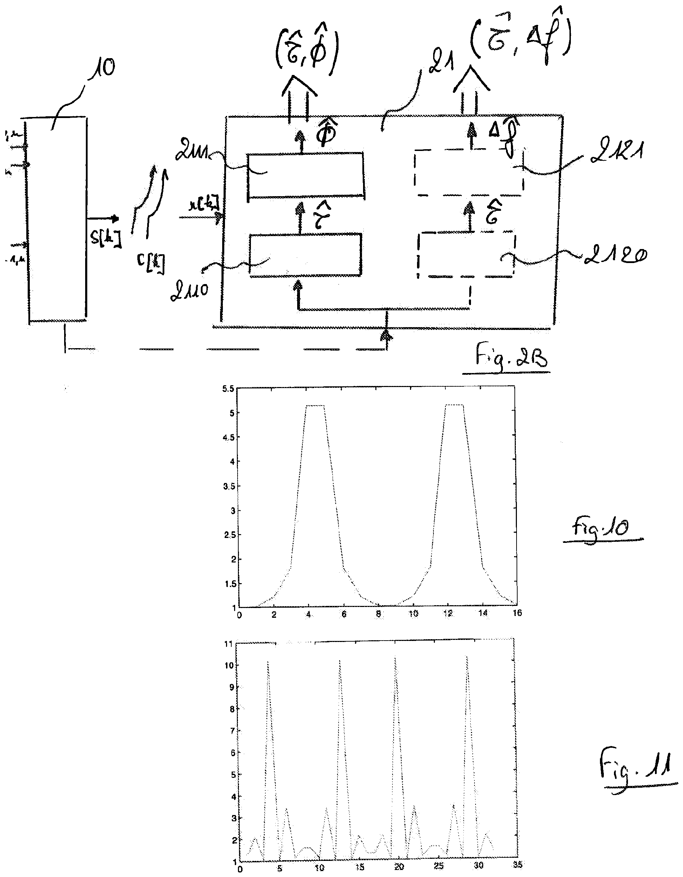

On décrit ci-après plus en détail l'étape d'estimation 21 selon un premier mode de réalisation des paramètres de décalage en temps T et décalage en phase $\phi$, notamment représentée par la figure 2B.

Les inventeurs de la présente demande de brevet, également inventeurs de la demande de brevet français FR 1151590 déposée le 28 février 2011 au nom du même Demandeur, ont mis en évidence dans la demande de brevet précitée des relations particulières entre les différentes sorties des modules de transformation fréquence/temps 12 et de filtrage polyphase 13 mis en oeuvre en émission.

Plus précisément, ils ont démontré que les sorties du module de transformation fréquence/temps sont conjuguées deux à deux, et les composantes polyphasés du filtre prototype sont para-conjuguées deux à deux.

Il est donc possible d'utiliser cette symétrie pour réutiliser une partie des résultats des multiplications survenant à des instants de filtrage différents, et réduire ainsi la complexité du filtrage.

Il est également possible, selon l'invention en objet, d'utiliser ces relations pour réduire la complexité des estimateurs mis en oeuvre lors de l'étape d'estimation 21.

Ainsi, en choisissant un délai tel que $D=qM$-1, avec $q$ un entier, les inventeurs ont démontré qu'on obtient les relations suivantes en sortie du module de transformation fréquence/temps 12, quels que soient les symboles de donnés entrants (données utile ou de préambule) :

$$\begin{cases} u_{k,n} = (-1)^n u^*_{M/2-k-1,n} & \text{pour} \quad 0 \le k \le M/4-1 \\ u_{M/2+k,n} = (-1)^n u^*_{M-k-1,n} & \text{pour} \quad 0 \le k \le M/4-1 \end{cases}$$

avec :

- $u_{m,n}$ un symbole transformé associé à la sortie d'indice $m$ de l'étape de transformation fréquence/temps 12 à un instant $n$ ;
- * l'opérateur conjugué.

Par conséquent, si on se place à l'instant $n = 0$ et quel que soit le type de préambule (aléatoire ou déterministe), on aura pour $0 \le k \le M/4$-1 et un filtre prototype de longueur $L = qM$, avec q un entier tel que $q \ge 1$ :

$$h[M/2-1-k]s[k] = h[k]s^*[M/2-1-k]$$

et

$$h[M-1-k]s[M/2+k] = h[M/2+k]s^*[M-1-k]$$

En l'absence de bruit, c'est-à-dire si l'on considère $r[k]=s[k$-$\tau]e^{j\phi}$, ces relations peuvent également s'écrire :

$$h[M/2-1-k]r[k+\tau] = h[k]r^*[M/2-1-k+\tau]e^{j2\phi} \qquad (1)$$

$$h[M-1-k]r[M/2+k+\tau] = h[M/2+k]r^*[M-1-k+\tau]e^{j2\phi} \qquad (2)$$

pour $0 \le k \le M/4$-1.

Il est possible de définir deux estimateurs se basant sur une mesure de type « moindres carrés » (en anglais LS ou « Least Square ») entre les sorties du module de transformation fréquence/temps 12 vérifiant une propriété de conjugaison.

Ainsi, en relation avec la figure 2B, selon ce premier mode de réalisation, l'étape d'estimation (21) met en en oeuvre successivement une première sous-étape d'estimation d'un décalage en temps (2110), suivie d'une seconde sous-étape d'estimation (2111) d'un décalage en phase.

Le premier estimateur mettant en oeuvre la première sous-étape d'estimation d'un décalage en temps (2110) est basé sur la relation (1) et consiste à minimiser la fonction de coût suivante :

$$\psi_1(\hat{\tau},\hat{\phi}) = \sum_{k=0}^{M/4-1} \left| h[M/2-1-k]r[k+\hat{\tau}] - h[k]r^*[M/2-1-k+\hat{\tau}]e^{j2\hat{\phi}} \right|^2$$

En développant cette équation, on obtient :

$$\psi_1(\hat{\tau},\hat{\phi}) = \sum_{k=0}^{M/4-1} h^2[M/2-1-k]\left|r[k+\hat{\tau}]\right|^2 + \sum_{k=0}^{M/4-1} h^2[k]\left|r[M/2-1-k+\hat{\tau}]\right|^2$$
$$-2\Re\left\{ e^{-2j\hat{\phi}} \sum_{k=0}^{M/4-1} h[k]h[M/2-1-k]r[k+\hat{\tau}]r[M/2-1-k+\hat{\tau}] \right\}$$

$$\psi_1\left(\hat{\tau},\hat{\phi}\right) = \alpha\left(\hat{\tau}\right) - \beta\left(\hat{\tau},\hat{\phi}\right),$$

avec :

$$\alpha\left(\hat{\tau}\right) = \sum_{k=0}^{M/2-1} h^2\left[M/2-1-k\right]\left|r\left[k+\hat{\tau}\right]\right|^2$$

et

$$\beta\left(\hat{\tau},\hat{\phi}\right) = 2\Re\left\{e^{-2j\hat{\phi}}\sum_{k=0}^{M/4-1} h[k]h[M/2-1-k]r[k+\hat{\tau}]r[M/2-1-k+\hat{\tau}]\right\}$$

On peut constater que la quantité $\alpha(\hat{\tau})$ est indépendante de l'estimation du décalage en phase $\hat{\phi}$ et faiblement liée à l'estimation du décalage temporel $\hat{\tau}$. Par suite, le premier estimateur LS revient à maximiser conjointement la fonction :

$$\left(\hat{\tau}_{LS},\hat{\phi}_{LS}\right) = \underset{\hat{\tau},\hat{\phi}}{arg\,max}\,\beta\left(\hat{\tau},\hat{\phi}\right)$$

Pour obtenir l'estimation du décalage en phase $\hat{\phi}_{LS}$ délivrée par la seconde sous-étape d'estimation (2111) d'un décalage en phase, on fixe l'estimation du décalage temporel $\hat{\tau}$ dans l'équation précédente, et on fait varier l'estimation du décalage en phase $\hat{\phi}$, ce qui aboutit à l'estimateur de phase suivant :

$$\hat{\phi}_{LS_1} = \frac{1}{2}\angle\left\{\sum_{k=0}^{M/4-1} h(k)h(M/2-1-k)r(k+\hat{\tau})r(M/2-1-k+\hat{\tau})\right\}$$

où $\angle\{.\}$ désigne l'argument d'un nombre complexe.

Par conséquent, en se basant sur les équations précédentes, on obtient l'estimateur suivant pour le décalage temporel :

$$\hat{\tau}_{LS_1} = \underset{\tilde{\tau}}{arg\,max}\left|\sum_{k=0}^{M/4-1} h(k)h(M/2-1-k)r(k+\tilde{\tau})r(M/2-1-k+\tilde{\tau})\right| \qquad (3).$$

On note que pour cet estimateur temporel, le préambule utilisé peut être égal à un seul symbole multiporteuse FBMC/OQAM (de durée M/2) parce que les relations sur lesquelles se base cet estimateur (relations entre les premiers M/2 échantillons) restent valables et ne sont pas affectées par le symbole multiporteuse FBMC/OQAM suivant, qui est décalé de M/2 échantillons par rapport au préambule. Cette remarque s'applique même pour une longueur du filtre prototype supérieure à M.

Le deuxième estimateur est basé sur la relation (2) et consiste à minimiser la fonction de coût suivante :

$$\psi_2\left(\hat{\tau},\hat{\phi}\right) = \sum_{k=0}^{M/4-1}\left|h[M-1-k]r[M/2+k+\hat{\tau}] - h[M/2+k]r^*[M-1-k+\hat{\tau}]e^{j2\hat{\phi}}\right|^2$$

En suivant le même développement que ci-dessus, on obtient les estimateurs de phase et temporel suivants :

$$\hat{\phi}_{LS_2} = \frac{1}{2} \angle \left\{ \sum_{k=0}^{M/4-1} h(M-1-k)h(M/2+k)r(M/2+k+\hat{\tau})r(M-1-k+\hat{\tau}) \right\}$$

$$\hat{\tau}_{LS_2} = \arg \max_{\tilde{\tau}} \left| \sum_{k=0}^{M/4-1} h(M-1-k)h(M/2+k)r(M/2+k+\tilde{\tau})r(M-1-k+\tilde{\tau}) \right| \quad (4)$$

On note que pour cet estimateur temporel, le préambule comprend de manière préférentielle un symbole multiporteuse FBMC/OQAM nul avant les données utiles. Le préambule utilisé peut donc être égal à deux symboles multiporteuses FBMC/OQAM.

On constate que les deux estimateurs de phase et les deux estimateurs temporels proposés nécessitent une connaissance a priori sur le filtre prototype utilisé en émission, mais sur une plage de corrélation plus courte ($M/2$ échantillons au lieu de $M$). La complexité de calcul des estimateurs est donc diminuée de moitié.

*5.2.3 Exemples de préambules et d'estimateurs temporels simplifiés selon le premier mode de réalisation*

Afin d'améliorer l'estimation de la synchronisation temporelle effectuée préalablement à la synchronisation en phase, on propose ci-après deux types de préambules et les estimateurs associés, permettant de diminuer encore la complexité de mise en oeuvre de la synchronisation.

Ainsi, une simplification au niveau des calculs peut être faite pour les estimateurs proposés ci-dessus et pour des préambules spécifiques, aboutissant à des estimateurs plus performants. Cette simplification est due à la présence de valeurs pics à la sortie du module de transformation fréquence/temps, encore appelées valeurs crêtes ou valeurs maximales, pour le préambule. La position de ces valeurs pics dépend du préambule utilisé. La performance des estimateurs est liée à la position de ces valeurs pics par rapport aux coefficients du filtre prototype utilisé en émission. Un choix optimal de la position de ces valeurs pics est fait de sorte qu'elles soient filtrées par des coefficients de filtre assez importants.

Pour ce faire, on propose différents exemples de préambules, permettant de remplir au moins l'un des critères suivants :

- la quantité de données contenues dans le préambule, et donc la longueur du préambule, doit être réduite au maximum, afin d'augmenter l'efficacité spectrale ;
- la possibilité de réaliser de bonnes performances, i.e. la capacité à estimer précisément le retard $\hat{\tau}$, qui dépend également de la conception de l'estimateur ;
- la possibilité d'être utilisé pour d'autres fonctionnalités, comme l'estimation du canal de transmission.

Dans les exemples ci-après, en se basant sur ces critères, les inventeurs ont proposé deux principaux types de préambule, avec pour chacun plusieurs variantes, et les estimateurs correspondants. Les choix de préambules et d'estimateurs sont évalués en considérant un filtre prototype optimisé pour la localisation temps-fréquence et de longueur L = M, noté TFL.

Toutefois, l'invention ne se limite pas à l'utilisation d'un tel filtre prototype, et le principe proposé s'applique de manière équivalente à des filtres prototypes présentant une longueur arbitraire, notamment un multiple de M, avec M pair.

*A) Premier type de préambule*

On présente tout d'abord deux nouveaux préambules particulièrement intéressants, car ils peuvent être utilisés pour d'autres fonctions, comme l'estimation de canal.

Selon un premier exemple, on considère un préambule émis à l'instant $n$ présentant la structure suivante :

$$\begin{cases} p_{m,n} = \sqrt{2}/2 & \text{pour} \quad m = 4p \quad \text{et} \quad m = 1+4p \\ p_{m,n} = -\sqrt{2}/2 & \text{pour} \quad m = 2+4p \quad \text{et} \quad m = 3+4p \end{cases}$$

avec $p_{m,n}$ un symbole de préambule associé à une sous-porteuse d'indice $m$ à l'instant $n$, $p$ un entier, et $0 \leq m \leq M$-1.

Selon un deuxième exemple, on considère un préambule émis à l'instant $n$ présentant la structure suivante :

$$\begin{cases} p_{2m,n} = \sqrt{2}\,/2 \\ p_{2m+1,n} = j\sqrt{2}\,/2 \end{cases} \text{pour } 0 \le m \le M\,/\,2 - 1 \,.$$

En particulier, on rappelle qu'il peut être nécessaire d'ajouter une ou plusieurs colonnes de symboles de préambules nuls avant la partie utile, tels que $p_{m,n+i}$=0 pour $i$=1,2,....

L'ajout d'une telle colonne de symboles de préambule nuls permet de séparer le premier symbole multiporteuse OQAM du préambule (correspondant à $n$=0) de la partie utile du signal multiporteuse, afin de conserver les propriétés de conjugaison.

En utilisant l'estimateur temporel $\hat{\tau}_{LS_1}$ défini à l'équation (3), le préambule peut être formé d'une seule colonne de symboles de préambule (pour $n$ = 0 par exemple), puisque les relations de conjugaison obtenues entre les premiers $M$/2 échantillons du signal multiporteuse sont valables même si la colonne suivante (pour $n$=1 par exemple) appartient à la partie utile du signal multiporteuse.

En revanche, si l'on utilise l'estimateur temporel $\hat{\tau}_{LS_2}$ défini à l'équation (4), le préambule doit être formé d'au moins deux colonnes de symboles de préambule, dont une première définie par les équations précédentes avec

$$p_{2m,n} = \sqrt{2}\,/2 \text{ et } p_{2m+1,n} = j\sqrt{2}\,/2 \,, \text{ et au moins une deuxième définie par } p_{m,n+1}\text{=0}.$$

Un préambule selon le deuxième exemple permet d'obtenir des valeurs pics aux sorties d'indices $M$/4-1 et $M$/4 de l'étape de transformation fréquence/temps plutôt qu'aux sorties d'indices 0 et $M$/2-1 selon le premier exemple. Ceci présente un intérêt, car si l'on considère un préambule selon le premier exemple, après filtrage par le coefficient $h$[0] du filtre prototype, la valeur pic de la sortie d'indice 0 va être atténuée, et par suite, la multiplication des deux valeurs pics aux sorties d'indices 0 et $M$/2-1 dans l'équation de l'estimateur temporel $\hat{\tau}_{LS_1}$ définie à l'équation (3) va être perturbée par le bruit et le canal multi-trajets. Il est donc souhaitable de proposer ce deuxième exemple de préambule, qui permet de décaler la position des valeurs pics.

Les préambules selon ces deux premiers exemples présentent donc des paires de valeurs pics en sortie de l'étape de transformation fréquence/temps en émission à des positions différentes.

Ainsi, le préambule selon le premier exemple présente des valeurs maximales aux sorties du module de transformation fréquence/temps 12 d'indices 0, $M$/2-1, $M$/2 et $M$-1. Le préambule selon le deuxième exemple présente des valeurs maximales aux sorties du module de transformation fréquence/temps 12 d'indices $M$/4- 1, $M$/4, 3$M$/4-1 et 3$M$/4.

En utilisant le fait que des paires de valeurs pics peuvent être générées par le modulateur FBMC/OQAM à des positions particulières en choisissant un préambule approprié et en tenant compte des propriétés de symétrie/conjugaison intrinsèques au modulateur, il est possible simplifier encore l'opération d'estimation des décalages en phase et en temps du signal multiporteuse, en réduisant la complexité de calculs associés aux estimateurs.

Plus précisément, on peut déduire que les valeurs pics du signal reçu contribuent majoritairement au calcul du retard en utilisant les estimateurs précédents définis aux équations (3) et (4). Ces valeurs pics sont les moins affectées en présence de bruit ou d'un canal multi-trajet. Par suite, on peut rendre ces estimateurs plus robustes et moins complexes en négligeant le calcul de produits des échantillons qui ne correspondent pas à des valeurs pics. On obtient alors des estimateurs LS simplifiés ou réduits.

Par suite, ayant une connaissance a priori sur les valeurs pics du signal émis, on peut obtenir, pour chaque préambule, les estimateurs LS réduits correspondants aux estimateurs précédents.

Ainsi, si l'on considère le préambule selon le premier exemple, le premier estimateur réduit correspondant à l'estimateur $\hat{\tau}_{LS_1}$ défini à l'équation (3) peut s'exprimer sous la forme suivante :

$$\hat{\tau}_{LS_1} = \underset{\tilde{\tau}}{\arg\max} \left| r(\tilde{\tau})r(M\,/\,2 - 1 + \tilde{\tau}) \right|,$$

puisque la première paire de valeurs pics est obtenue aux sorties d'indices 0 et $M$/2-1,
et le deuxième estimateur réduit correspondant à l'estimateur $\hat{\tau}_{LS_2}$ défini à l'équation (4) peut s'exprimer sous la forme suivante :

$$\hat{\tau}_{LS_2} = \underset{\tilde{\tau}}{\arg\max} \left| r(M\,/\,2 + \tilde{\tau})r(M - 1 + \tilde{\tau}) \right|,$$

puisque la deuxième paire de valeurs pics est obtenue aux sorties d'indices $M/2$ et $M$-1.

Si l'on considère le préambule selon le deuxième exemple, le premier estimateur réduit correspondant à l'estimateur $\hat{\tau}_{LS_1}$ défini à l'équation (3) peut s'exprimer sous la forme suivante :

$$\hat{\tau}_{LS_1} = \arg\max_{\tilde{\tau}} |r(M/4 - 1 + \tilde{\tau})r(M/4 + \tilde{\tau})|,$$

puisque la première paire de valeurs pics est obtenue aux sorties d'indices $M/4$-1 et $M/4$ ;
et le deuxième estimateur réduit correspondant à l'estimateur $\hat{\tau}_{LS_2}$ défini à l'équation (4) peut s'exprimer sous la forme suivante :

$$\hat{\tau}_{LS_2} = \arg\max_{\tilde{\tau}} |r(3M/4 - 1 + \tilde{\tau})r(3M/4 + \tilde{\tau})|,$$

puisque la deuxième paire de valeurs pics est obtenue aux sorties d'indices $3M/4$-1 et $3M/4$.

*B) Deuxième type de préambule*

On présente ci-après trois autres exemples de préambules formés d'une colonne de symboles de préambule dont la moitié des porteuses présente une valeur nulle, et éventuellement d'une ou plusieurs colonnes de symboles de préambule dont toutes les porteuses présentent une valeur nulle, dits symboles nuls.

De tels préambules sont particulièrement intéressants du fait qu'ils permettent d'obtenir une propriété de conjugaison supplémentaire.

Ainsi, si l'on se place dans le contexte d'un système de transmission FBMC/OQAM mettant en oeuvre un nombre $M$ de porteuses multiple de 4 et un délai $D=qM$-1 (avec $D=L$-1 dans le cas orthogonal et $D \leq L$-1 dans le cas bi-orthogonal), et que l'on suit le raisonnement décrit dans la demande de brevet FR 1151590 susmentionnée, il est possible de montrer que les sorties de l'étape de transformation fréquence/temps appliquée symboles de préambule sont liées comme suit :

$$\begin{cases} u_{k,n} = (-1)^n u^*_{M/2-k-1,n} & \text{pour} \quad 0 \leq k \leq M/4 - 1 \\ u_{M/2+k,n} = (-1)^n u^*_{M-k-1,n} & \text{pour} \quad 0 \leq k \leq M/4 - 1 \\ u_{k,n} = (-1)^n u^*_{M-k-1,n} & \text{pour} \quad 0 \leq k \leq M/2 - 1 \end{cases}$$

avec :

- $u_{m,n}$ un symbole transformé associé à la sortie d'indice $m$ de l'étape de transformation fréquence/temps 12 à un instant n *;*
- \* l'opérateur conjugué.

On considère par exemple que la première colonne de symboles de préambule est émise à un instant n pair.

Tenant compte de cette nouvelle propriété de conjugaison, un nouvel estimateur peut être défini. En effet, on a pour $0 \leq k \leq M/4$-1 la relation suivante, si le filtre prototype est symétrique et de longueur $L = M$ :

$$s[k] = s^*[M - 1 - k] \text{ pour } 0 \leq k \leq M/2 - 1.$$

On note que si l'on considère un filtre prototype de longueur $L = qM$, il est souhaitable d'ajouter $2q$-1 colonnes de symboles de préambule nuls en fin de préambule pour séparer le préambule (après modulation) des données utiles. La relation ci-dessus reste donc valable pour $0 \leq k \leq qM/2$-1.

En l'absence de bruit, la relation ci-dessus conduit à l'expression suivante du signal reçu :

$$r[k+\tau] = r^*[M-1-k+\tau]e^{j2\phi} \text{ pour } 0 \le k \le M/2-1 :$$

A partir de cette relation, il est possible de définir un nouvel estimateur, ne nécessitant pas la mise à zéro du premier coefficient du filtre prototype. En effet, la fonction de coût à minimiser est donnée par :

$$\psi_3(\hat{\tau},\hat{\phi}) = \sum_{k=0}^{M/2-1} \left| r[k+\hat{\tau}] - r^*[M-1-k+\hat{\tau}]e^{j2\hat{\phi}} \right|^2$$

ce qui conduit à l'estimateur de phase et à l'estimateur temporel suivants :

$$\hat{\phi}_{LS_3} = \frac{1}{2} \angle \left\{ \sum_{k=0}^{M/2-1} r(k+\hat{\tau})r(M-1-k+\hat{\tau}) \right\}$$

et

$$\hat{\tau}_{LS_3} = \underset{\tilde{\tau}}{arg\,max} \left| \sum_{k=0}^{M/2-1} r(k+\tilde{\tau})r(M-1-k+\tilde{\tau}) \right| \qquad (5).$$

De tels estimateurs présentent notamment de bonnes performances s'ils sont combinés à l'utilisation de l'un des préambules suivants.

Ainsi, selon un troisième exemple, on considère un préambule émis à l'instant $n$ présentant la structure suivante :

$$\begin{cases} p_{2m,n} = \sqrt{2}/2 \\ p_{2m+1,n} = 0 \end{cases} \text{ pour } 0 \le m \le M/2-1$$

avec $p_{m,n}$ un symbole de préambule associé à une sous-porteuse d'indice $m$ à l'instant $n$.

Selon un quatrième exemple, on considère un préambule émis à l'instant $n$ présentant la structure suivante :

$$\begin{cases} p_{2m,n} = (-1)^m \sqrt{2}/2 \\ p_{2m+1,n} = 0 \end{cases} \text{ pour } 0 \le m \le M/2-1.$$

Les préambules selon le troisième et quatrième exemples permettent d'obtenir des paires de valeurs pics en sortie de l'étape de transformation fréquence/temps à des positions différentes.

Ainsi, le préambule selon le troisième exemple permet d'obtenir des valeurs maximales aux sorties du module de transformation fréquence/temps 12 d'indices $M/4$--1, $M/4$, $3M/4$-1 et $3M/4$. Le préambule selon le quatrième exemple permet d'obtenir des valeurs maximales aux sorties du module de transformation fréquence/temps 12 d'indices 0, $M/2$-1, $M/2$ et $M$-1. Or comme déjà indiqué, la position et le nombre de ces pics peut impacter la complexité et les performances de l'estimateur.

On propose ci-après un cinquième exemple de préambule, permettant de limiter la valeur maximale des paires de pics obtenus en sortie de l'opération de transformation fréquence/temps, afin de limiter le PAPR (en anglais « Peak to Average Power Ratio », en français « facteur de crête ») du signal multiporteuse émis.

Le préambule selon ce cinquième exemple, à l'instant $n$, présente par exemple la structure suivante :

$$\begin{cases} p_{m,n} = 1 & \text{si } \mathrm{mod}(m,4) = 0 \\ p_{m,n} = 0 & \text{sinon} \end{cases} \text{ pour } 0 \le m \le M-1.$$

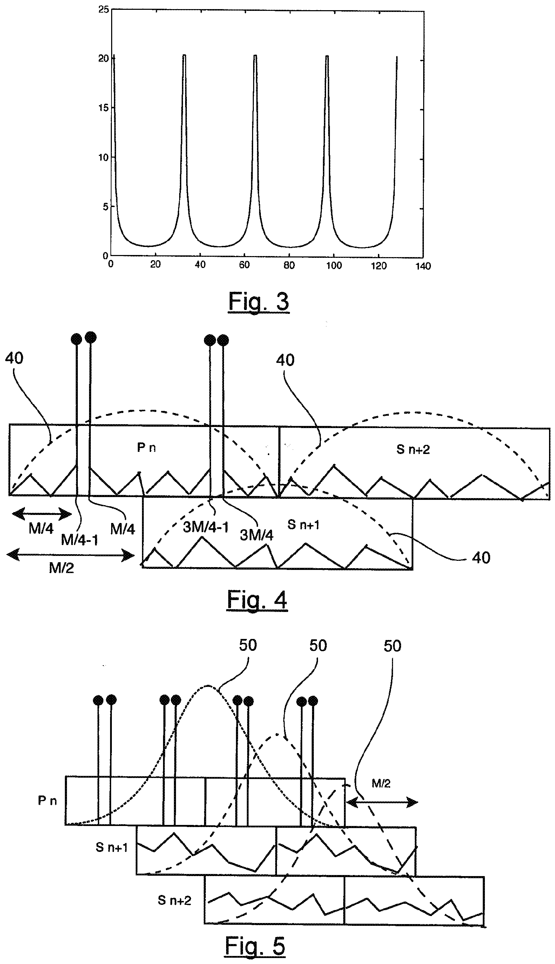

Dans ce cas, les valeurs maximales sont obtenues sur les sorties d'indice 0, *M*/4-1, *M*/4, *M*/2-1, *M*/2 et *M*-1, comme illustré en figure 3 pour un nombre de porteuses *M*=128, où l'axe des abscisses représente les indices des sorties du module de transformation fréquence/temps, et l'axe des ordonnées représente l'amplitude du préambule en sortie du module de transformation fréquence/temps.

Un tel préambule permet donc de distribuer les valeurs maximales sur plus de sorties du module de transformation fréquence/temps, avec des amplitudes moins élevées, et donc de réduire le PAPR du signal émis.

Comme déjà indiqué en relation avec les deux premiers exemples de préambule, il peut être nécessaire d'ajouter dans ces trois derniers exemples une ou plusieurs colonnes de symboles de préambule nuls dans le préambule après modulation, avant la partie utile, afin de conserver les propriétés de conjugaison après filtrage.

Ainsi, si l'on utilise l'estimateur temporel $\hat{\tau}_{LS_2}$ défini à l'équation (4) ou l'estimateur temporel $\hat{\tau}_{LS_3}$ défini à l'équation (5), le préambule doit être formé d'au moins deux colonnes de symboles de préambule, dont une première définie par les équations précédentes, et au moins une deuxième définie par $p_{m,n+1} = 0$ pour $0 \leq m \leq M$-1. Plus précisément, pour utiliser un filtre prototype de longueur $L = qM$, il est souhaitable d'insérer $2q$-1 colonnes de symboles de préambules nuls dans le préambule, pour séparer la première colonne de symboles de préambule définie par les équations précédentes et les données utiles.

En revanche, pour utiliser l'estimateur temporel $\hat{\tau}_{LS_1}$ défini à l'équation (3), le préambule peut n'être formé que d'une seule colonne de symboles de préambule (pour $n = 0$ par exemple).

Comme décrit précédemment en relation avec les deux premiers exemples de préambule, il est également possible de réduire/simplifier les estimateurs proposés et d'augmenter leurs performances en tenant compte de la position des paires de valeurs pics générées par le modulateur FBMC/OQAM.

Ainsi, si l'on considère le préambule selon le troisième exemple, le premier estimateur réduit correspondant à l'estimateur $\hat{\tau}_{LS_3}$ défini à l'équation (3) peut s'exprimer sous la forme suivante :

$$\hat{\tau}_{LS_1} = \underset{\tilde{\tau}}{arg\,max} \left| r(M/4 - 1 + \tilde{\tau}) r(M/4 + \tilde{\tau}) \right|,$$

puisque la première paire de valeurs pics est obtenue aux sorties d'indices *M*/4-1 et *M*/4,
le deuxième estimateur réduit correspondant à l'estimateur $\hat{\tau}_{LS_2}$ défini à l'équation (4) peut s'exprimer sous la forme suivante :

$$\hat{\tau}_{LS_2} = \underset{\tilde{\tau}}{arg\,max} \left| r(3M/4 - 1 + \tilde{\tau}) r(3M/4 + \tilde{\tau}) \right|,$$

puisque la deuxième paire de valeurs pics est obtenue aux sorties d'indices 3M/4-1 et 3*M*/4, et
le troisième estimateur réduit correspondant à l'estimateur $\hat{\tau}_{LS_3}$ défini à l'équation (5) peut s'exprimer sous la forme suivante :

$$\hat{\tau}_{LS_3} = \underset{\tilde{\tau}}{arg\,max} \left| r(M/4 - 1 + \tilde{\tau}) r(3M/4 + \tilde{\tau}) + r(M/4 + \tilde{\tau}) r(3M/4 - 1 + \tilde{\tau}) \right|,$$

puisque les deux paires de pics sont obtenues aux sorties d'indices *M*/4-1, *M*/4, 3*M*/4-1 et 3*M*/4.

Si l'on considère le préambule selon le quatrième exemple, le premier estimateur réduit correspondant à l'estimateur $\hat{\tau}_{LS_1}$ défini à l'équation (3) peut s'exprimer sous la forme suivante :

$$\hat{\tau}_{LS_1} = \underset{\tilde{\tau}}{arg\,max} \left| r(\tilde{\tau}) r(M/2 - 1 + \tilde{\tau}) \right|,$$

puisque la première paire de valeurs pics est obtenue aux sorties d'indices 0 et *M*/2-1;
le deuxième estimateur réduit correspondant à l'estimateur $\hat{\tau}_{LS_2}$ défini à l'équation (4) peut s'exprimer sous la forme suivante :

$$\hat{\tau}_{LS_2} = \underset{\tilde{\tau}}{arg\,max} \left| r(M/2 + \tilde{\tau}) r(M - 1 + \tilde{\tau}) \right|,$$

puisque la deuxième paire de valeurs pics est obtenue aux sorties d'indices $M/2$ et $M$-1,
et le troisième estimateur réduit correspondant à l'estimateur $\hat{\tau}_{LS_3}$ défini à l'équation (5) peut s'exprimer sous la forme suivante :

$$\hat{\tau}_{LS_3} = arg\,\max_{\tilde{\tau}} \left| r(\tilde{\tau})r(M-1+\tilde{\tau}) + r(M/2-1+\tilde{\tau})r(M/2+\tilde{\tau}) \right|,$$

puisque les deux paires de pics sont obtenues aux sorties d'indices 0, $M/2$-1, $M/2$ et $M$-1.

Si l'on considère le préambule selon le cinquième exemple, le premier estimateur réduit correspondant à l'estimateur $\hat{\tau}_{LS_1}$ défini à l'équation (3) peut s'exprimer sous la forme suivante :

$$\hat{\tau}_{LS_1} = arg\,\max_{\hat{\tau}} \left| r(\hat{\tau})r(M/2-1+\hat{\tau}) + r(M/4-1+\hat{\tau})r(M/4+\hat{\tau}) \right|$$

puisque les valeurs pics sont obtenues aux sorties d'indices 0, $M/2$-1, $M/4$-1 et $M/4$ ;
le deuxième estimateur réduit correspondant à l'estimateur $\hat{\tau}_{LS_2}$ défini à l'équation (4) peut s'exprimer sous la forme suivante :

$$\hat{\tau}_{LS_2} = arg\,\max_{\tilde{\tau}} \left| r(M/2+\tilde{\tau})r(M-1+\tilde{\tau}) + r(3M/4-1+\tilde{\tau})r(3M/4+\tilde{\tau}) \right|$$

puisque les valeurs pics sont obtenues aux sorties d'indices $M/2$, $M$-1, $3M/4$-1, $3M/4$,
et le troisième estimateur réduit correspondant à l'estimateur $\hat{\tau}_{LS_3}$ défini à l'équation (5) peut s'exprimer sous la forme suivante :

$$\hat{\tau}_{LS_3} = arg\,\max_{\tilde{\tau}} \left| r(\tilde{\tau})r(M-1+\tilde{\tau}) + r(M/4-1+\tilde{\tau})r(3M/4+\tilde{\tau}) \right.$$
$$\left. + r(M/4+\tilde{\tau})r(3M/4-1+\tilde{\tau}) + r(M/2-1+\tilde{\tau})r(M/2+\tilde{\tau}) \right|$$

On constate donc que les estimateurs simplifiés/réduits proposés selon l'invention présentent de bonnes performances par rapport aux estimateurs non simplifiés.

En effet, en présence de bruit et d'un canal multi-trajet, les échantillons du signal multiporteuse à faibles amplitudes vont être perturbés et par suite diminuer la performance de l'estimateur. On propose donc selon au moins un mode de réalisation de l'invention d'éliminer ces échantillons et de ne conserver que les valeurs pics du signal multiporteuse, qui sont elles moins affectées par le bruit et le canal.

Ceci conduit à l'obtention d'estimateurs réduits qui présentent de meilleures performances que les estimateurs non simplifiés, tels que définis aux équations (3), (4) et (5), car ces estimateurs simplifiés permettent de réduire le nombre des valeurs crêtes autour de la valeur à estimer.

*5.2.4 Estimation des décalages en temps et en fréquence selon le deuxième mode de réalisation*

On décrit ci-après plus en détail l'étape d'estimation 21 selon un deuxième mode de réalisation des paramètres de décalage en temps $\tau$ et décalage en fréquence $\Delta f$, notamment représentée par la figure 2B.

De même que pour le premier mode de réalisation, sur la base de la demande de brevet français FR 1151590 déposée le 28 février 2011 au nom du même Demandeur, le deuxième mode de réalisation de l'invention délivrant un estimation temporelle et fréquentielle tire profit des relations particulières entre les différentes sorties des modules de transformation fréquence/temps 12 et de filtrage polyphasé 13 mis en oeuvre en émission, en s'appuyant sur la démonstration des inventeurs qui démontre que les sorties du module de transformation fréquence/temps sont conjuguées deux à deux, et les composantes polyphases du filtre prototype sont para-conjuguées deux à deux.

Il est donc possible d'utiliser cette symétrie pour réutiliser une partie des résultats des multiplications survenant à des instants de filtrage différents, et réduire ainsi la complexité du filtrage.

Il est également possible, selon l'invention en objet, d'utiliser ces relations pour réduire la complexité des estimateurs temporels et fréquentiels mis en oeuvre lors des sous-étapes successives d'estimation temporelle (2120) et d'estimation fréquentielle (2121) de l'étape d'estimation 21 selon un deuxième mode de réalisation.

Ainsi, en choisissant un délai tel que $D = qM - 1$, avec $q$ un entier, et pour un préambule particulier composé de deux symboles FBMC/OQAM dont la moitié des porteuses (paire ou impaire) est nulle tel que :

le premier symbole émis à l'instant $n = 0$ étant tel que : $\begin{cases} p_{2m,0} = d \\ p_{2m+1,0} = 0 \end{cases}$ avec $d \in \Re$ *ou* d $\in \Im$ ou

$\begin{cases} p_{2m,0} = 0 \\ p_{2m+1,0} = d \end{cases}$ avec $d \in \Re$ ou d $\in \Im$ avec $p_{m,n}$ un symbole de préambule associé à une sous-porteuse d'indice $m$ à l'instant $n=0$, et $0 \leq m \leq M/2-1$, avec M le nombre de sous-porteuses d'un symbole OQAM dudit signal multiporteuse, la valeur de $d$, réel pur ou imaginaire pur pouvant être ajustée en fonction d'un compromis entre la performance de l'estimateur et la valeur PAPR (en anglais « Peak to Average Power Ratio », en français « facteur de crête ») du signal multiporteuse émis ;

tandis que le symbole suivant émis à l'instant $n=1$ correspond à un symbole nul tel que :

$$p_{m,1} = 0, \text{ pour } 0 \leq m \leq M-1$$

les inventeurs ont démontré qu'on obtient les relations suivantes, en sortie du module de transformation fréquence/temps 12, pour ce choix de préambule :

$$u_{k,n} = (-1)^n u_{M/2+k,n} \text{ pour } 0 \leq k \leq M/2-1$$

avec :

$u_{m,n}$ un symbole transformé associé à la sortie d'indice $m$ de l'étape de transformation fréquence/temps 12 à un instant $n$ ;

Par conséquent, si on réécrit la relation représentant le signal multiporteuse FBMC/OQAM en sortie du modulateur exprimé sous la forme suivante :

$$s[k] = \sum_{m=0}^{M-1} \sum_{n=-\infty}^{n=+\infty} c_{m,n} h\left(kT_s - n\frac{M}{2}T_s\right) e^{j\frac{2\pi}{M}m(k-D/2)T_s} e^{j\phi_{m,n}}$$

avec $c_{m,n} = p_{m,n}$ des symboles de données à valeur complexe pour la mise en forme du préambule (préférentiellement à valeur réelle ou imaginaire pure), et $c_{m,n} = a_{m,n}$ des symboles de données à valeur réelle pour la mise en forme de la partie utile, $T_s$ le temps d'échantillonnage choisi tel que la durée symbole $T = MT_s$ avec $M = 2N$ le nombre de porteuses. A nouveau, on rappelle que des filtres prototypes distincts peuvent être utilisés pour mettre en forme le préambule et la partie utile du signal multiporteuse $s[k]$,

on obtient en se limitant aux M-1 premiers échantillons et pour $0 \leq k \leq M/2-1$ un signal de préambule modulé donné par la relation suivante :

$$s_p[k] = \sum_{m=0}^{M-1} p_{m,0} h[k] e^{j\frac{2\pi}{M}m(k-D/2)} e^{j\phi_{m,0}} = h[k] \underbrace{\sum_{m=0}^{M-1} p_{m,0} e^{j\frac{2\pi}{M}m(k-D/2)} e^{j\phi_{m,0}}}_{u_{k,0}}$$

Compte tenu de la relation précédente entre chaque symbole transformé $u_{m,n}$ pour les préambules particuliers utilisés pour l'estimation du décalage en temps et du décalage en fréquence selon le deuxième mode de réalisation de l'invention, le signal de préambule pondéré de manière appropriée, en multipliant par les coefficients du filtre prototype, par exemple à l'instant k par le coefficient $h[M/2+k]$, et à l'instant M/2+k par $h[k]$, présente une «pseudo-périodicité» s'exprimant pour $0 \leq k \leq M/2-1$ par la relation :

$$h\left[M/2+k\right]s_p\left[k\right]=h\left[k\right]s_p\left[M/2+k\right] \quad (6)$$

En l'absence de bruit et pour un canal plat ($c(k)=1$), c'est-à-dire si l'on considère $r[k]=e^{j2\pi\Delta f}s[k-\tau]$, minimiser les deux termes de la relation (6) revient à minimiser la quantité suivante :

$$\left(\hat{\Delta f},\hat{\tau}\right)=\underset{\hat{\Delta f},\tilde{\tau}}{arg\,min}\left\{\sum_{k=0}^{M/2-1}\left|h\left[k+M/2\right]r\left[k+\tilde{\tau}\right]-h\left[k\right]r\left[k+\tilde{\tau}+M/2\right]e^{-j2\pi\Delta\tilde{f}\frac{M}{2}}\right|^2\right\} (7)$$

Il est possible de définir deux estimateurs se basant sur une mesure de type « moindres carrés » (en anglais LS ou « Least Square ») entre les sorties du module de transformation fréquence/temps 12 vérifiant une propriété de conjugaison.

Ainsi, en relation avec la figure 2B, selon ce premier mode de réalisation, l'étape d'estimation (21) met en en oeuvre successivement une première sous-étape d'estimation d'un décalage en temps (2120), suivie d'une seconde sous-étape d'estimation (2121) d'un décalage en fréquence.

Le premier estimateur mettant en oeuvre la première sous-étape d'estimation d'un décalage en temps (2120) est basé sur la minimisation de la relation (7) et consiste à minimiser la fonction de coût suivante en posant $A=h[k+M/2]r[k+\tilde{\tau}]$, $B=h[k]r[k+\tilde{\tau}+M/2]$ et $\alpha=2\pi\Delta\tilde{f}\dfrac{M}{2}$ et en se rappelant que $|A-B|^2=(A-B)(A^*-B^*)$ :

$$\left(\hat{\Delta f},\hat{\tau}\right)=\underset{\Delta\tilde{f},\tilde{\tau}}{arg\,min}\left\{\sum_{k=0}^{M/2-1}\left\{(A-B)(A^*-B^*e^{-j\alpha})\right\}\right\}$$

$$=\underset{\Delta\tilde{f},\tilde{\tau}}{arg\,min}\left\{\sum_{k=0}^{M/2-1}\left\{|A|^2+|B|^2-2\Re\left\{AB^*e^{-j\alpha}\right\}\right\}\right\}$$

$$=\underset{\Delta\tilde{f},\tilde{\tau}}{arg\,min}\left\{\sum_{k=0}^{M/2-1}\left\{|A|^2+|B|^2\right\}-\left|2\sum_{k=0}^{M/2-1}AB^*\right|cos(-\alpha+\angle\sum_{k=0}^{M/2-1}AB^*)\right\}$$

On obtient un minimum par rapport au décalage fréquentiel $\Delta\tilde{f}$ quand le cosinus est égal à 1, i.e $\alpha=\angle AB^*$, à partir de ces développements on obtient alors l'estimateur temporel mettant en oeuvre la première sous-étape d'estimation d'un décalage en temps selon l'équation suivante :

$$\hat{\tau}_{LS}=\underset{\tilde{\tau}}{arg\,max}\left\{2\left|R_1\left(\tilde{\tau}\right)\right|-Q_1\left(\tilde{\tau}\right)\right\},$$

et l'estimateur fréquentiel mettant en oeuvre la seconde sous-étape d'estimation d'un décalage en fréquentiel selon l'équation suivante :

$$\hat{\Delta f}_{LS}=\frac{1}{2\pi N}arg\left\{R_1(\hat{\tau}_{LS})\right\},$$

avec :

$$R_1(\tilde{\tau}) = \sum_{k=0}^{M/2-1} h(k)h(k+M/2)r*(k+\tilde{\tau})r(k+M/2+\tilde{\tau}),$$

$$Q_1(\tilde{\tau}) = \sum_{k=0}^{M/2-1} h(k)^2 \left|r(k+\tilde{\tau})\right|^2 + h(k+M/2)^2 \left|r(k+M/2+\tilde{\tau})\right|^2,$$

$\hat{\tau}_{LS}$ l'estimation du décalage en temps en sortie dudit estimateur temporel ;

$\Delta \hat{f}_{LS}$ l'estimation du décalage en fréquence en sortie dudit estimateur de phase ;

M le nombre de sous-porteuses d'un symbole OQAM dudit signal multiporteuse ;

$k$ un entier tel que $0 \leq k \leq M/2-1$ ;

$\tilde{\tau}$ un entier tel que $0 \leq \tilde{\tau} \leq \tilde{\tau}_{max}$ avec $\tilde{\tau}_{max}$ une valeur maximale prédéterminée de $\tilde{\tau}$

$h(k)$ des coefficients dudit filtre prototype utilisé en émission ;

$r(k)$ un signal multiporteuse reçu, tel que $r(k) = e^{j2\pi\Delta f}[c(k) \otimes s(k-\tau)]+b(k)$ si le décalage fréquentiel intervient par exemple à l'émission. Il est également possible de prendre en compte un décalage fréquentiel introduit à la réception;

$\otimes$ un produit de convolution ;

$c(k)$ la réponse d'un canal multi-trajet

$s(k)$ un signal multiporteuse émis ;

$b(k)$ un bruit blanc gaussien ;

$\tau$ le décalage en temps du signal multiporteuse reçu par rapport au signal multiporteuse émis ;

$\Delta f$ le décalage en fréquence du signal multiporteuse reçu par rapport au signal multiporteuse émis.

*5.2.5 Exemples de préambules et d'estimateurs temporels et fréquentiels simplifiés selon le deuxième mode de réalisation*

Afin d'améliorer l'estimation de la synchronisation temporelle effectuée préalablement à la synchronisation en fréquence, on propose ci-après une réduction de la complexité des calculs qui peut être faite pour les estimateurs proposés ci-dessus et pour des préambules spécifiques, aboutissant à des estimateurs plus performants.

Cette simplification est due à la présence de valeurs pics à la sortie du module de transformation fréquence/temps, encore appelées valeurs crêtes ou valeurs maximales, pour le préambule. La position de ces valeurs pics dépend du préambule utilisé. La performance des estimateurs est liée à la position de ces valeurs pics par rapport aux coefficients du filtre prototype utilisé en émission. Un choix optimal de la position de ces valeurs pics est fait de sorte qu'elles soient filtrées par des coefficients de filtre assez importants.

Ainsi, en utilisant le préambule particulier proposé précédemment pour la synchronisation temporelle et fréquentielle composé de deux symboles FBMC/OQAM dont la moitié des porteuses (paire ou impaire) est nulle tel que :

le premier symbole émis à l'instant $n = 0$ étant tel que : $\begin{cases} p_{2m,0} = d \\ p_{2m+1,0} = 0 \end{cases}$ avec $d \in \Re$ ou $d \in \Im$ ou $\begin{cases} p_{2m,0} = 0 \\ p_{2m+1,0} = d \end{cases}$

avec $d \in \Re$ ou $d \in \Im$

avec $p_{m,n}$ un symbole de préambule associé à une sous-porteuse d'indice $m$ à l'instant $n = 0$ , et $0 \leq m \leq M/2-1$, avec M le nombre de sous-porteuses d'un symbole OQAM dudit signal multiporteuse, la valeur de $d$ pouvant être ajustée en fonction d'un compromis entre la performance de l'estimateur et la valeur PAPR (en anglais « Peak to Average Power Ratio », en français « facteur de crête ») du signal multiporteuse émis ;

tandis que le symbole suivant émis à l'instant $n=1$ correspond à un symbole nul tel que :

$p_{m,1}=0$, pour $0 \leq m \leq M-1$,

et en se limitant aux seules sorties du module de transformation fréquence/temps d'amplitude importante, c'est-à-dire en se limitant aux valeurs pics, il est possible d'obtenir des estimateurs temporels et fréquentiels simplifiés.

En d'autres termes, cet exemple de préambule « paire » sera forcément de la forme $p_{2m+1}=0$ et $p_{2m}=\pm d$, avec $d$ réel pur ou imaginaire pur. le signe de $d$ dépendant de la valeur de $m$.

En effet, en se basant à nouveau sur la minimisation de la relation (7), en posant $A=h[k+M/2]r[k+\tilde{\tau}]$,

$B=h[k]r[k+\tilde{\tau}+M/2]$ et $\alpha = 2\pi\Delta\tilde{f}\dfrac{M}{2}$ et en se rappelant que $|A-Be^{-j\alpha}|^2=(A-Be^{-j\alpha})(A^*-B^*e^{j\alpha})$, on minimise la fonction de coût suivante :

$$\left(\Delta \hat{f}, \hat{\tau}\right) = \underset{\Delta \tilde{f}, \tilde{\tau}}{arg\,min}\left\{\sum_{k=0}^{M/2-1}\left\{(A - Be^{-j\alpha})(A^* - B^*e^{j\alpha})\right\}\right\}$$

$$= \underset{\Delta \tilde{f}, \tilde{\tau}}{arg\,min}\left\{\sum_{k=0}^{M/2-1}\left\{|A|^2 + |B|^2 - 2\Re\left\{AB^*e^{-j\alpha}\right\}\right\}\right\} \qquad (8)$$

$$= \underset{\Delta \tilde{f}, \tilde{\tau}}{arg\,min}\left\{\sum_{k=0}^{M/2-1}\left\{|A|^2 + |B|^2\right\} - \left|2\sum_{k=0}^{M/2-1}AB^*\right|cos(-\alpha + \angle\sum_{k=0}^{M/2-1}AB^*)\right\}$$

Les expressions de A et B ne dépendant que de $\tau$, en utilisant le préambule particulier proposé précédemment pour la synchronisation temporelle et fréquentielle, et en se limitant aux seules sorties du module de transformation fréquence/temps d'amplitude importante, c'est-à-dire en se limitant aux valeurs pics, par exemple pour les positions de valeurs maximales suivantes k, M/2 - 1-k, M/2+k, M-1-k, avec $k$ un entier, on obtient un minimum de l'équation (8) par rapport au décalage fréquentiel $\Delta \tilde{f}$ quand le cosinus est égal à 1, i.e $\tilde{\alpha}(\tilde{\tau}) = \angle R(\tilde{\tau})$, avec :

$$R(\tilde{\tau}) = h(k)h(k + M/2)r^*(k + \tilde{\tau})r(k + M/2 + \tilde{\tau})$$
$$+ h(M/2 - 1 - k)h(M - 1 - k)r^*(M/2 - 1 - k + \tilde{\tau})r(M - 1 - k + \tilde{\tau})$$

Du fait que le cosinus est égal à 1, on obtient alors l'estimée temporelle suivante :
A partir de ces développements on obtient alors l'estimateur temporel mettant en oeuvre la première sous-étape d'estimation d'un décalage en temps selon l'équation suivante :

$$\hat{\tau}_{LS} = \underset{\tilde{\tau}}{arg\,max}\left\{2\left|R_1(\tilde{\tau})\right| - Q_1(\tilde{\tau})\right\} \quad (9)$$

où

$$Q(\tilde{\tau}) = h(k + M/2)^2\left|r(k + \tilde{\tau})\right|^2 + h(M - 1 - k)^2\left|r(M/2 - 1 - k + \tilde{\tau})\right|^2$$
$$+ h(k)\left|r(M/2 + k + \tilde{\tau})\right|^2 h(M/2 - 1 - k)^2\left|r(M - 1 - k + \tilde{\tau})\right|^2$$

Une fois le décalage temporel estimé on pourra estimer le décalage fréquentiel :

$$\tilde{\alpha}(\tilde{\tau}) = \angle R(\tilde{\tau})$$

En outre, du fait que $|R(\tilde{\tau})|$ et $Q(\tilde{\tau})$ présente des valeurs pics pour $\tilde{\tau}=\tilde{\tau}$ on peut remplacer la différence de l'équation (9) par le produit selon l'équation suivante :

$$\hat{\tau}_{LS} = \underset{\tilde{\tau}}{arg\,max}\left\{\left|R_1(\tilde{\tau})\right|Q_1(\tilde{\tau})\right\} \quad (10),$$

ce qui permet de réduire la complexité de la sous-étape d'estimation temporelle.
En conséquence, on obtient l'estimateur fréquentiel simplifié mettant en oeuvre la seconde sous-étape d'estimation d'un décalage en fréquentiel selon l'équation suivante :

$$\Delta \hat{f}_{LS} = \frac{1}{2\pi N}arg\left\{R_1(\hat{\tau}_{LS})\right\},$$

avec M le nombre de sous-porteuses d'un symbole OQAM dudit signal multiporteuse:

$\tilde{\tau}_{LS}$ l'estimation dudit décalage en temps en sortie dudit estimateur temporel ;

$\Delta \tilde{f}_{LS}$ l'estimation dudit décalage en fréquence en sortie dudit estimateur de phase ;

M le nombre de sous-porteuses d'un symbole OQAM dudit signal multiporteuse ;

$\tilde{\tau}$ un entier tel que $0 \le \tilde{\tau} \le \tilde{\tau}_{max}$ avec $\tilde{\tau}_{max}$ une valeur maximale prédéterminée de $\tilde{\tau}$ h(k) des coefficients dudit filtre prototype utilisé en émission ;

r(k) un signal multiporteuse reçu, tel que $r(k) = e^{j2\pi\Delta f}[c(k)\otimes s(k-\tau)]+b(k)$ ; $\otimes$ un produit de convolution ;

c(k) la réponse d'un canal multi-trajet

s(k) un signal multiporteuse émis ;

b(k) un bruit blanc gaussien ;

$\tau$ le décalage en temps du signal multiporteuse reçu par rapport audit signal multiporteuse émis ;

$\Delta f$ le décalage en fréquence du signal multiporteuse reçu par rapport audit signal multiporteuse émis.

Ainsi, pour une valeur de k égale à M/4-1 on obtient les expressions de $R(\tilde{\tau})$ et $Q(\tilde{\tau})$ suivantes :

$$R(\tilde{\tau}) = h(M/4-1)h(3M/4-1)r*(M/4-1+\tilde{\tau})r(3M/4-1+\tilde{\tau})$$
$$+h(M/4)h(3M/4)r*(M/4+\tilde{\tau})r(3M/4+\tilde{\tau})$$

et

$$Q(\tilde{\tau}) = h(3M/4-1)^2|r(M/4-1+\tilde{\tau})|^2 + h(3M/4)^2|r(M/4+\tilde{\tau})|^2$$
$$+h(M/4-1)|r(3M/4-1+\tilde{\tau})|^2 h(M/4)^2|r(3M/4+\tilde{\tau})|^2 .$$

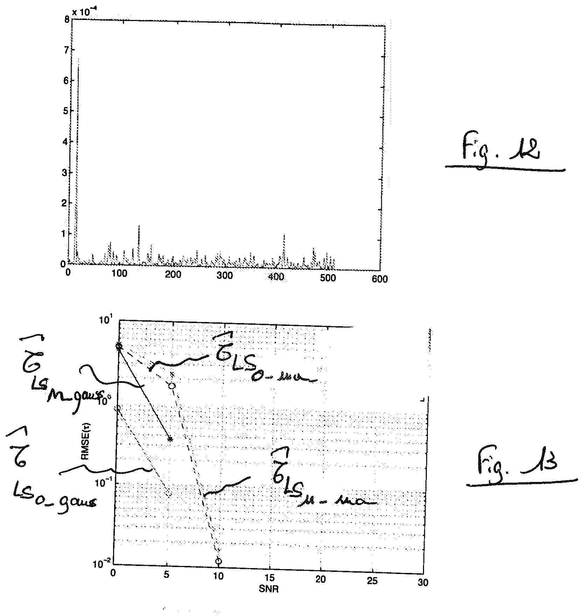

La figure 12 illustre la fonction de coût de cet estimateur en utilisant un filtre prototype de type TFL et de longueur L=M, pour un rapport signal à bruit de 10dB, un nombre de porteuses M=128, un retard $\tau/Ts$=13 et un décalage fréquentiel $\Delta f$=0,002, ce qui revient à la valeur normalisée $\Delta v$=0,256. On observe clairement sur cette figure 12, une valeur pic très significative pour la valeur de décalage temporel introduite dans le système.

*5.3 Génération des préambules*

*5.3.1 Génération des préambules pour l'estimation d'un décalage temporel et d'un décalage en phase selon le premier mode de réalisation*

Bien entendu, d'autres préambules peuvent être utilisés, permettant d'obtenir une ou plusieurs paires de valeurs pics en sortie du module de transformation fréquence/temps à des positions spécifiques. De tels préambules présentent de bonnes performances lorsqu'ils sont utilisés par un récepteur selon l'invention, et peuvent également être utilisés par un récepteur classique quelconque.

On propose ci-après deux exemples d'algorithmes permettant de générer de tels préambules. On suppose pour ce faire que le nombre de porteuses M est une puissance de 2 telle que $M \ge 8$, que la longueur du filtre prototype est L = M et que, de même, le nombre de symboles de préambule $p_{m,n}$ non nul est limité à M, soit une seule colonne de symboles de préambule à un instant donné. Comme déjà indiqué, si un filtre prototype plus long est utilisé, il suffit d'ajouter des colonnes de symboles de préambule nuls dans le préambule pour le séparer des données utiles.

Sous ces hypothèses, seuls les symboles de préambules $p_{m,0}$ correspondant à la colonne de symboles de préambule à l'instant $n = 0$ , également appelés pilotes, sont à prendre en compte, et le signal en sortie du module de transformation fréquence/temps peut s'écrire, en ne considérant en entrée et sortie que des séquences discrètes et en s'affranchissant de l'indice temporel $n$, sous la forme suivante :

$$u_k = \sum_{m=0}^{M-1} p_m e^{j\frac{2\pi}{M}m(k-(M-1)/2)} e^{j\frac{\pi}{2}m}$$

qui après simplification donne :

$$u_k = \sum_{m=0}^{M-1} p_m e^{-j\frac{\pi}{2}m} e^{j\frac{\pi m}{M}} e^{j\frac{2\pi mk}{M}} = \sum_{m=0}^{M-1} p_m e^{j\theta_{m,k}}$$

avec

$$\theta_{m,k} = -\frac{\pi}{2}m + \frac{\pi m}{M} + 2\pi\frac{mk}{M}.$$

La détermination des préambules peut être mise en oeuvre en :

- recherchant les valeurs des pilotes produisant une ou deux paires de valeurs pics $u_k$ à valeurs maximales (en sortie du module de transformation fréquence/temps) ;
- supposant, dans un premier temps que les pilotes sont soit réels purs, soit imaginaires purs.

Du fait des relations de symétrie en sortie du module de transformation fréquence/temps précédemment exposées, i.e. $u_{M/2-1-k}=u_k{}^*$ et $u_{M-1-k}=u^*{}_{M/2+k}$ pour $0 \le k \le M/4-1$, les pics se produisent toujours par paire.

Par ailleurs, il est souhaitable que ces paires de pics apparaissent en nombre limité pour éviter que leur énergie soit dispersée sur un nombre trop important de sorties $u_k$ du module de transformation fréquence/temps.

Par exemple, si l'on cherche à obtenir une paire de valeurs pics d'amplitude maximale en $k_0$ et ($M/2-1-k_0$), il faut déterminer les valeurs de pilotes $p_m$ donnant le maximum de l'expression $\max_{pm}|u_{k_0}|^2$. Sachant que $\sum_k|u_k|^2=|u_{k_0}|^2+\sum_{k,k \ne k_0}|u_k|^2$, le choix de la fonction objective devrait en même temps garantir qu'en dehors des positions des valeurs pics, les valeurs des sorties $u_k$ du module de transformation fréquence/temps présentent une faible énergie.

Les deux algorithmes proposés ci-après permettent de déterminer des préambules purement réels produisant respectivement une ou deux paires de valeurs pics. Ils peuvent bien entendu s'étendre à la génération de préambules purement imaginaires ou de préambules mixtes, combinant des symboles de préambule purement réels et purement imaginaires, ou même complexes.

*5.3.1.1 Détermination d'une paire unique de valeurs pics*

Comme indiqué ci-dessus, obtenir une valeur crête (pic) à la sortie d'indice $k_0$ du module de transformation fréquence/temps revient à maximiser l'expression $|u_{k_0}|$.

Or d'après l'équation simplifiée de la valeur $u_k$ proposée ci-dessus, on constate que toutes les phases d'indices $m$ et $M-m$, pour $1 \le m \le M/2-1$, sont symétriques par rapport à l'axe imaginaire. En effet, les quantités $e^{j\theta_{0,k_0}}$ et $e^{j\theta_{M/2,k_0}}$ sont réelle et imaginaire pures respectivement, et sont égales à 1 et $j(-1)^{k_0}$ en supposant que $M=2^q$ avec $q \ge 3$ entier.

En effet, le terme de la phase d'indice $M-m$ est tel que :

$$\theta_{M-m,k_0} = -\frac{\pi}{2}(M-m) + \frac{\pi(M-m)}{M} + 2\pi\frac{(M-m)k_0}{M}$$

$$\theta_{M-m,k_0} = \frac{\pi}{2}m + \pi - \frac{\pi m}{M} - 2\pi\frac{mk_0}{M} = \pi - \theta_{m,k_0}$$

Par suite on peut écrire l'équation simplifiée de la valeur $u_k$ de la manière suivante :

$$u_{k_0} = p_0 + j(-1)^k p_{M/2} + \sum_{m=1}^{M/2-1} p_m e^{-j\frac{\pi}{2}m} e^{j\frac{\pi m}{M}} e^{j2\pi\frac{mk_0}{M}} - \sum_{m=1}^{M/2-1} p_{M-m} e^{j\frac{\pi}{2}m} e^{-j2\pi\frac{mk_0}{M}}$$

$$u_{k_0} = p_0 + j(-1)^k p_{M/2} + \sum_{m=1}^{M/2-1} \left\{ p_m e^{j\theta_{m,k_0}} - p_{M-m} e^{-j\theta_{m,k_0}} \right\}$$

Si l'on suppose que les symboles de préambules $p_m$ ont des valeurs provenant d'une constellation issue d'une modulation de phase à deux états (en anglais BPSK pour « *Binary phase-shift keying* »), le problème revient à déterminer les signes des symboles de préambules $p_m$.

Or, les couples de symboles de préambule $p_m$ et $p_{M-m}$ qui contribuent à la somme dans l'équation ci-dessus ont des arguments $\theta_{m,k}$ et $(-\theta_{m,k}+\pi)$ qui les positionnent de manière symétrique par rapport à l'axe imaginaire. Donc en fonction de leurs signes respectifs, le vecteur résultant associé à chacun de ces symboles de préambule est soit réel pur, soit imaginaire pur.

La procédure de maximisation peut donc être mise en oeuvre par l'algorithme suivant :

1) préciser la valeur désirée de la position $k_0$ pour la valeur pic ;
2) choisir les signes des symboles de préambule $p_0$ et $p_{M/2}$ ;
3) calculer, pour chaque indice $m$ tel que $1{\leq}m{\leq}M/2$- 1, la valeur de $\theta_{m,k_0}$ et comparer sa projection sur l'axe des réels (cosinus) et sa projection sur l'axe des imaginaires (sinus), ce qui revient à tester la condition suivante: si $|\cos(\theta_{m,k_0})|{\geq}|\sin(\theta_{m,k_0})|$ alors *bool(m)*=0 sinon *bool(m)* =1, où l'opérateur *bool* représente une variable à deux états ;
4) si *bool(m)*=0, affecter des signes opposés aux symboles de préambule $p_m$ et $p_{M-m}$, c'est-à-dire $p_m$=-$p_{M-m}$. Ce signe est choisi tel que $Sign(p_m)*Sign(\cos(\theta_{m,k_0}))=Sign(p_0)$. Si *bool(m)*=1, affecter le même signe aux symboles de préambule $p_m$ et $p_{M-m}$, c'est-à-dire $p_m$=$p_{M-m}$. Ce signe est choisi tel que $Sign(p_m)*Sign(\sin(\theta_{m,k_0}))=Sign((-1)^{k_0}p_{M/2})$.

A titre d'exemple, on suppose que l'on cherche à obtenir une valeur pic à la position d'indice $k_0$=$M/4$. On considère des symboles de préambule tels que $p_0$=$p_{M/2}$=1. La phase associée est telle que $\theta_{m,k_0}$=$\pi m/M$, ce qui implique que $|\cos(_{\theta m,k_0})|{\geq}|\sin(\theta_{m,k_0})|$ pour $1{\leq}m{\leq}M/4$ *et* $|\cos(\theta_{m,k_0})|{<}|\sin(\theta_{m,k_0})|$ pour $M/4+1{\leq}m{\leq}M/2-1$.

En respectant les différentes étapes de l'algorithme proposé ci-dessus, on obtient le préambule suivant :

$$p_m = \begin{cases} 1 & \text{pour} & 0 \leq m \leq 3M/4 \\ -1 & \text{pour} & 3M/4+1 \leq m \leq M-1 \end{cases}$$

Si l'on considère que les symboles de préambule peuvent également prendre des valeurs imaginaires, il est possible d'obtenir d'autres préambules encore plus performants, du fait de la présence de degrés de liberté supplémentaires.

*5.3.1.2 Détermination de deux paires de valeurs pics*

On propose ci-après un deuxième algorithme permettant de générer un préambule conduisant à l'obtention de deux paires de valeurs pics en sortie du module de transformation fréquence/temps.

On suppose ici que les symboles de préambule présentent une valeur telle que $p_m$=$\pm$1, et on cherche à déterminer deux paires de valeurs pics séparées de M/2 échantillons. Les deux premières valeurs pics à maximiser sont alors localisées aux positions $k_0$ et $M/2+k_0$, et les deux autres valeurs se déduisent à partir des relations de symétrie.

La sortie du module de transformation fréquence/temps correspondant à l'indice $M/2+k_0$ peut s'exprimer sous la forme suivante :

$$u_{M/2+k_0} = \sum_{m=0}^{M-1} p_m e^{-j\frac{\pi}{2}m} e^{j\frac{\pi m}{M}} e^{j\frac{2\pi m(M/2+k_0)}{M}} = \sum_{m=0}^{M-1} (-1)^m p_m e^{-j\frac{\pi}{2}m} e^{-j\frac{\pi m}{M}} e^{j\frac{2\pi m k_0}{M}}$$

En comparant cette équation et l'équation simplifiée de la valeur $u_k$ proposée en relation avec le premier algorithme, on peut remarquer que l'optimisation (c'est-à-dire la maximisation) des deux sorties d'indices $k_0$ et $M/2+k_0$ aboutit à une contradiction au niveau des signes.

En effet, si l'on fait des choix d'optimisation identiques pour $u_{k0}$ et $u_{M/2+k_0}$ (ce qui revient à fixer les signes de $p_0$ et $p_{M/2}$), on peut remarquer que l'optimisation des indices pairs de $m$ aboutit à la même distribution des signes pour $u_{k_0}$ et $u_{M/2+k_0}$. Par contre, l'optimisation des indices impairs aboutit à deux choix qui ont des signes opposés. Par suite, si l'on gagne sur l'un des vecteurs résultant de $u_{k_0}$, on perd sur le même vecteur résultant de $u_{M/2+k_0}$ et vice versa.

Pour obtenir des valeurs pics de même amplitude pour les valeurs $u_{k_0}$ et $u_{M/2+k_0}$, il faut donc conserver l'optimisation des indices pairs et choisir correctement les vecteurs résultants des indices impairs de $u_{k_0}$ et $u_{M/2+k_0}$, de façon à maximiser les résultantes finales pour lesquelles on impose d'avoir la même amplitude.

Pour ce faire, on peut tout d'abord remarquer que la phase de l'indice $m$ (pair ou impair) et celle de l'indice $M/2+m$ sont décalées de $\pi/2$. En effet, on a :

$$\theta_{M/2+m,k_0} = -\frac{\pi}{2}(M/2+m) + \frac{\pi(M/2+m)}{M} + 2\pi\frac{(M/2+m)k_0}{M}$$

$$\theta_{M/2+m,k_0} = -\frac{\pi}{2}m + \frac{\pi}{2} + \frac{\pi m}{M} + \pi k_0 + 2\pi\frac{mk_0}{M} = \frac{\pi}{2} + \pi k_0 + \theta_{m,k_0}$$

Donc la différence de phase entre $\theta_{M/2+m,k_0}$ et $\theta_{m,k_0}$ est $\pm\pi/2$, avec un signe qui dépend de la parité de $k_0$. Ceci implique que si l'on maximise $p_m$ pour optimiser les sorties $u_{k_0}$ d'indices pairs, le vecteur résultant imaginaire est égal, en norme, à la résultante réelle.

Il faut désormais choisir la manière optimale pour ajouter les vecteurs résultants des indices impairs, sachant que les vecteurs résultants de $u_{k_0}$ sont opposés à ceux résultants de $u_{M/2+k_0}$, comme indiqué précédemment.

Dans les deux cas, on peut dire que si l'optimisation du couple ($m,M-m$) a une projection maximale sur l'axe des réels, l'optimisation du couple ($M/2+m,M/2-m$) a, nécessairement, une projection maximale sur l'axe des imaginaires et vice versa. Or on rappelle que les vecteurs résultants de ces deux couples ont la même amplitude.

La solution optimale est donc d'obtenir un vecteur résultant des indices impairs qui est perpendiculaire à celui des indices pairs. Ceci peut être réalisé en choisissant, par exemple, le couple ($p_m,p_{M-m}$) qui maximise le vecteur résultant réel de $u_{k_0}$ et le couple ($p_{M/2+m},p_{M/2-m}$) qui maximise le vecteur résultant imaginaire de $u_{M/2+k_0}$.

La procédure d'optimisation peut donc être mise en oeuvre par l'algorithme suivant :

1) préciser la valeur de la position $k_0$ pour la valeur pic et déduire la valeur de la position $M/2+k_0$ ;
2) choisir les signes des symboles de préambule $p_0$ et $p_{M/2}$ ;
3) calculer, pour chaque indice $m$ tel que $1 \leq m \leq M/2-1$, la valeur de $\theta_{m,k_0}$ et comparer sa projection sur l'axe des réels (cosinus) et sa projection sur l'axe des imaginaires (sinus), ce qui revient à tester la condition suivante : si $|\cos(\theta_{m,k_0})| \geq |\sin(\theta_{m,k_0})|$ alors *bool(m)*= 0 sinon *bool(m)*=1, où l'opérateur *bool* représente une variable à deux états ;
4) si *bool(m)* = 0 :

si $m$ est impair : affecter des signes opposés aux symboles de préambule $p_m$ et $p_{M-m}$. Ce signe est choisi tel que $Sign(p_m)*Sign(\cos(\theta_{m,k_0}))=Sign(p_0)$ dans un premier cas, ou $Sign(p_m)*Sign(\cos(\theta_{m,k_0}))=Sign(p_0)$ dans un deuxième cas ;
si $m$ est pair : affecter des signes opposés aux symboles de préambule $p_m$ et $p_{M-m}$, tels que $Sign(p_m)*Sign(\cos(\theta_{m,k_0}))=Sign(p_0)$ ;
si *bool(m)*=1 :
affecter des signes opposés aux symboles de préambule $p_m$ et $p_{M-m}$. Ce signe est choisi tel que $Sign(p_m)*Sign(\sin(\theta_{m,k_0}))=Sign((-1)^{k_0}p_{M/2})$ dans le premier cas, ou $Sign(p_m)*Sign(\sin(\theta_{m,k_0}))=Sign((-1)^{k_0}p_{M/2})$ dans le deuxième cas.

On note que plusieurs choix sont possibles sur les directions finales des résultantes impaires.

A titre d'exemple, on suppose que l'on cherche à obtenir une valeur pic à la position d'indice $k_0=M/4$ et en respectant les différentes étapes de l'algorithme proposé ci-dessus, on obtient le même préambule que pour le premier algorithme, en inversant les signes des indices impairs pour $1 \leq m \leq M/4-1$ et pour $3M/4+1 \leq m \leq M-1$.

A nouveau, comme pour le premier algorithme, si l'on considère que les symboles de préambule peuvent également prendre des valeurs imaginaires, il est possible d'obtenir d'autres préambules encore plus performants, du fait de la présence de degrés de liberté supplémentaires.

*5.3.2 Génération des préambules pour l'estimation d'un décalage temporel et d'un décalage en fréquence selon le deuxième mode de réalisation*

Comme mentionné précédemment, le cas particulier de l'estimation conjointe des décalages temporels et fréquentiels requiert des préambules particuliers composé de deux symboles FBMC/OQAM dont la moitié des porteuse (paire ou impaire) est nulle tel que :

le premier symbole émis à l'instant $n = 0$ étant tel que :

$$\begin{cases} p_{2m,0} = d & \text{avec} \quad d \in \Re \quad ou \quad d \in \Im \\ p_{2m+1,0} = 0 \end{cases}$$

et avec $p_{m,n}$ un symbole de préambule associé à une sous-porteuse d'indice $m$ à l'instant $n = 0$ , et $0 \leq m \leq M/2-1$, avec M le nombre de sous-porteuses d'un symbole OQAM dudit signal multiporteuse, la valeur de $d$ pouvant être ajustée en fonction d'un compromis entre la performance de l'estimateur et la valeur PAPR (en anglais « Peak to Average Power Ratio », en français « facteur de crête ») du signal multiporteuse émis ;
tandis que le symbole suivant émis à l'instant $n = 1$ correspond à un symbole nul tel que :

$$p_{m,1} = 0, \text{ pour } 0 \leq m \leq M - 1.$$

La forme des préambules ci-dessus correspond aux préambules dits « préambules pairs ». En revanche, il est à noter que lorsque les zéros sont placés aux indices pairs, les préambules obtenus sont dits « impairs ».
La méthode de génération des préambules pour l'estimation d'un décalage en temps et en fréquence reprend les principes explicités au regard de la génération de préambules pour l'estimation d'un décalage en temps et en phase et notamment les relations de symétrie en sortie du module de transformation fréquence/temps précédemment exposées, i.e. $u_{M/2-1-k} = u_k^*$ et $u_{M-1-k} = u_{M/2+k}^*$ pour $0 \leq k \leq M / 4 - 1$, impliquant que les pics se produisent toujours par paire.
Par ailleurs, le type de préambules particulier exposé ci-dessus et requis pour l'estimation d'un décalage en temps et en fréquence implique une symétrie supplémentaire donnée par :

$$u_k = u_{M/2+k,n} \text{ pour } 0 \leq k \leq M / 2 - 1 \ (11).$$

En conséquence, un tel préambule implique au minimum deux paires de valeurs de pics.
Lorsque l'on souhaite obtenir exactement deux paires de valeurs de pics, on utilise l'algorithme mettant en oeuvre la procédure de maximisation utilisée pour la détermination d'une paire unique de valeurs pics, relative à l'estimation d'un décalage en temps et d'un décalage en phase telle que détaillée précédemment (paragraphe 5.3.1.1) selon deux approches :

- mise en oeuvre des étapes 1 à 4 de l'algorithme et ajout d'une étape 5) mettant à zéro les pilotes d'indices impairs, i.e $p_{2m+1,0} = 0$,
- afin d'éviter de réaliser des calculs inutiles l'étape 3 est effectuée en ne considérant que des valeurs de $m$ qui sont paires ou impaires.

Il est à noter que l'algorithme mettant en oeuvre la procédure de maximisation utilisée pour la détermination de deux paires de valeurs pics, relative à l'estimation d'un décalage en temps et d'un décalage en phase telle que détaillée précédemment (paragraphe 5.3.1.2) ne permet pas de produire plus de paires de valeurs pics pour le préambule particulier requis pour l'estimation d'un décalage en temps et en fréquence. En effet, du fait de la relation de symétrie (11), les valeurs pics supplémentaires obtenues se retrouvent aux mêmes positions mais avec des amplitudes plus faibles.
Ainsi, un seul algorithme est mis en oeuvre pour l'estimation d'un décalage en temps et en fréquence, cet algorithme fournissant aux positions paires une valeur égale à $\pm d$ selon les valeurs de $m$, avec $d$ réel pur ou imaginaire pur.
Dans tels préambules sont illustrés par les figures 10 et 11 respectivement pour un nombre de porteuses $M = 16$ et pour $k = M / 4 - 1$, ou pour un nombre de porteuses $M = 32$ et pour $k = M / 8 - 1$, où l'axe des abscisses représente les indices des sorties du module de transformation fréquence/temps, et l'axe des ordonnées représente l'amplitude du préambule en sortie du module de transformation fréquence/temps.
En particulier, dans le cas où pour un nombre de porteuses $M = 32$ et pour $k = M / 8 - 1$, l'algorithme de génération de préambule relatif à l'estimation d'un décalage en temps et d'un décalage en fréquence délivre un préambule tel que :

$$\left\{p_{2m,0}\right\} = \left\{1,1,-1,-1,1,-1,-1,1,1,-1,-1,1,-1,-1,1,1\right\}.$$

*5.4 Effet du filtre prototype*

Si l'on considère à nouveau le schéma du modulateur FBMC/OQAM des figures 1 et 2, on constate que les symboles de données obtenus en sortie du module de pré-traitement 11, et entrant dans le module de transformation fréquence/temps 12, dépendent du délai D introduit par le filtre prototype.

Or pour avoir les trois relations de conjugaison présentées en relation avec le deuxième type de préambule, à savoir :

$$\begin{cases} u_{k,n} = (-1)^n u^{*}_{M/2-k-1,n} & \text{pour} \quad 0 \leq k \leq M/4-1 \\ u_{M/2+k,n} = (-1)^n u^{*}_{M-k-1,n} & \text{pour} \quad 0 \leq k \leq M/4-1 \\ u_{k,n} = (-1)^n u^{*}_{M-k-1,n} & \text{pour} \quad 0 \leq k \leq M/2-1 \end{cases}$$

il faut que le délai D soit tel que $D = qM - 1$, avec q un entier supérieur ou égal à 1 (ce qui correspond à $L = qM$ pour le cas OFDM/OQAM).

De plus, pour pouvoir utiliser le troisième estimateur $\hat{\tau}_{LS_3}$ défini à l'équation (5), il faut que la longueur de préambule soit égale à la longueur de filtre prototype. Par suite et à titre d'exemple, pour une longueur $L = qM$, le préambule doit être composé de *2q* colonnes de symboles de préambule (correspondant aux instants *n, n* + 1, ..., *n* + *2q* - 1). Comme décrit précédemment, la première colonne de symboles de préambule comprend des pilotes spécifiques, et les autres *2q* - 1 colonnes de symboles de préambule des valeurs nulles.

Les inventeurs de la présente demande de brevet ont constaté que le filtre prototype utilisé en émission influe directement sur la performance des estimateurs. En effet, pour conserver une amplitude importante des valeurs pics obtenues en sortie du module de transformation fréquence/temps, ces valeurs doivent être filtrées (i.e. multipliées) par des coefficients de filtrage qui ne sont pas négligeables par rapport aux autres coefficients. Ainsi, si le pic obtenu doit être filtré par un coefficient de faible valeur, il est souhaitable d'augmenter la taille du préambule pour décaler la position de ce pic.

Il est bien entendu possible d'utiliser le premier estimateur $\hat{\tau}_{LS_1}$ défini à l'équation (3) et le deuxième estimateur $\hat{\tau}_{LS_2}$ défini à l'équation (4) pour des filtres prototypes de longueur $L = qM$ en utilisant les préambules définis précédemment, éventuellement en ajoutant une seule colonne de symboles de préambule nuls.

Toutefois, il est bien connu que les coefficients les plus significatifs de la plupart des filtres prototypes localisés en temps et en fréquence sont distribués sur les M/2 coefficients qui sont autour du centre de ces filtres prototypes.

Par suite, en utilisant à titre d'exemple les préambules selon les deuxième ou troisième exemples ci-dessus et les estimateurs réduits correspondants, on peut profiter de l'une des deux paires de valeurs pics obtenues aux positions {*M* / 4-1, *M* / 4} ou {3*M* / 4-1, 3*M* / 4} en sortie du module de transformation fréquence/temps, en ajoutant *q* - 1 colonnes de symboles de préambule nuls au préambule et en filtrant le préambule par les coefficients h[*qM* / 2 - *M* / 4 - 1] et h[*qM* / 2 - *M* / 4].

A titre d'exemple, la figure 4 illustre les valeurs pics obtenues aux positions {*M* / 4-1, *M* / 4} et {3*M* / 4-1, 3*M* / 4} en sortie du module de transformation fréquence/temps, avant filtrage, en utilisant un préambule Pn émis à l'instant n selon le troisième exemple décrit ci-dessus, à savoir :

$$\begin{cases} p_{2m,n} = \sqrt{2}/2 \\ p_{2m+1,n} = 0 \end{cases} \text{pour } 0 \leq m \leq M/2-1$$

On considère un filtre prototype 40, illustré en pointillé, présentant une longueur $L = M$. Les valeurs pics vont donc être filtrées par les coefficients {h[*M* / 4 - 1], h[*M* / 4], h[3*M* / 4 - 1], h [3*M* / 4]} du filtre prototype, qui ont des amplitudes assez importantes pour conserver des valeurs pics une fois le signal émis.

On note que les *M* / 2 premiers échantillons du signal multiporteuse émis (correspondant au préambule dont la première paire de valeurs crêtes fait partie) préservent une relation de conjugaison (à un coefficient près) même si le symbole multiporteuse OQAM suivant émis à l'instant $n+1$, noté $Sn+1$, n'est pas nul. Par suite, le premier estimateur $\hat{\tau}_{LS_1}$ défini à l'équation (3) peut être utilisé. En revanche, les M/2 échantillons suivant perdent les relations de conjugaison si le symbole $Sn+1$ n'est pas nul, et le deuxième estimateur $\hat{\tau}_{LS_2}$ défini à l'équation (4) ne peut pas être appliqué.

La figure 5 illustre un autre exemple des valeurs pics obtenues aux positions en sortie du module de transformation fréquence/temps, avant filtrage, en utilisant un préambule P$n$ émis à l'instant $n$ selon le troisième exemple décrit ci-dessus, et considérant un filtre prototype 50, illustré en pointillé, présentant une longueur $L = qM = 2M$.

On peut remarquer que pour les M/2 premiers échantillons du signal multiporteuse émis (correspondant au préambule dont la première paire de valeurs crêtes correspondant aux positions {$M / 4 - 1$, $M / 4$} fait partie), la première paire de valeurs pics va être affaiblie à cause du filtrage par des coefficients à faibles amplitudes. Il est donc préférable d'utiliser la deuxième paire de valeurs pics (correspondant aux positions {$3M / 4 - 1$, $3M / 4$}), qui est filtrée par un couple de coefficients d'amplitudes importantes {$h[3M / 4 - 1]$, $h[3M / 4]$}, pour estimer le décalage temporel.

En particulier, pour que la deuxième paire de valeurs pics ne soit pas perturbée par les symboles multiporteuses OQAM émis aux instants suivants, le symbole multiporteuse OQAM émis à l'instant $n+1$, noté $Sn+1$, est de préférence nul. On note toutefois que dans le cas illustré en figure 5, même si le symbole $Sn+1$ n'est pas nul, la perturbation engendrée par les échantillons de ce symbole $Sn+1$ n'est pas trop gênante car ces échantillons, qui vont s'ajouter aux valeurs pics, sont filtrés par des coefficients faibles.

Plus généralement, on constate que la première paire de valeurs pics est préférentiellement utilisée dans le calcul de l'estimateur réduit pour q impair, et que la deuxième paire de valeurs pics est préférentiellement utilisée dans le calcul de l'estimateur réduit pour q pair.

Par suite, il est possible de généraliser la réduction du premier estimateur défini à l'équation (3) et du deuxième estimateur défini à l'équation (4), quelque soit q, entier supérieur ou égal à 1, par l'équation suivante :

$$\hat{\tau}_{LS_4} = \underset{\tilde{\tau}}{arg\,max}\left|r(qM / 2 - M / 4 - 1 + \tilde{\tau})r(qM / 2 - M / 4 + \tilde{\tau})\right| \qquad (6).$$

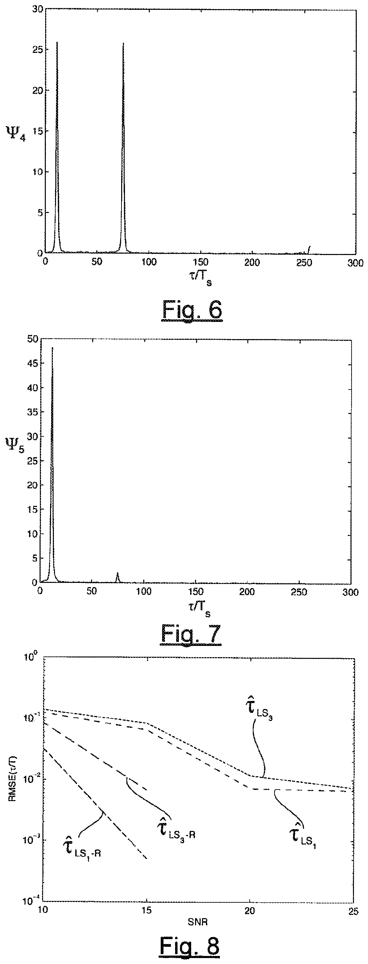

La figure 6 illustre la fonction de coût $\psi_4$ de cet estimateur en utilisant un filtre prototype de type TFL et de longueur $L = 4M$, pour un rapport signal à bruit de 15dB, un nombre de porteuses $M = 128$, un retard $\tau / Ts = 10$ et un préambule selon le troisième exemple décrit ci-dessus.

On constate sur cette figure 6 la présence de deux pics distants de $M / 2$ échantillons. Le premier pic est dû à la multiplication des deux valeurs maximales obtenues en sortie du module de transformée fréquence/temps localisées aux positions {$3M / 4 - 1$, $3M / 4$}, et filtrées par les coefficients du filtre prototype {$h[qM / 2 - M / 4 - 1]$, $h[qM / 2 - M / 4]$}. Le deuxième pic est dû à la multiplication des deux valeurs maximales obtenues en sortie du module de transformée fréquence/temps localisées aux positions {$M / 4 - 1$, $M / 4$}, et filtrées par les coefficients du filtre prototype {$h[qM / 2 + M / 4 - 1]$, $h[qM / 2 + M / 4]$}, ce qui est équivalent à $\tau + M / 2$ dans le quatrième estimateur $\hat{\tau}_{LS_4}$ défini à l'équation (6). On note que la relation $h[qM / 2 + M / 4]s[qM / 2 + M / 4 - 1] = h[qM / 2 + M / 4 - 1]s*[qM / 2 + M / 4]$ reste valable même si l'on ajoute $q - 1$ colonnes de symboles de préambule nuls dans le préambule, car la qième colonne n'aura pas d'effet sur les valeurs pics {$M / 4 - 1$, $M / 4$} de préambule après filtrage, ces valeurs pics étant situées dans la première moitié des sorties du module de transformation fréquence/temps.

Il est également possible de profiter des deux paires de valeurs pics obtenues en sortie du module de transformation fréquence/temps aux positions {$M - 1,0$} ou {$M / 2 - 1$, $M / 2$}, en utilisant à titre d'exemple le préambule selon le quatrième exemple ci-dessus et les estimateurs réduits correspondants

Dans ce cas, les deux paires de valeurs pics obtenues aux positions précitées doivent être filtrées par des coefficients de filtrage {$h[qM / 2 - 1]$, $h[qM / 2]$}, et il faut ajouter q colonnes de symboles de préambule M nuls dans le préambule.

Plus généralement, on constate que la paire de valeurs pics correspondant aux positions {$M - 1,0$} est préférentiellement utilisée dans le calcul de l'estimateur réduit pour q pair, et que la paire de valeurs pics correspondant aux positions {$M / 2 - 1$, $M / 2$} est préférentiellement utilisée dans le calcul de l'estimateur réduit pour q impair.

Par suite, il est possible de généraliser la réduction du premier estimateur défini à l'équation (3) et du deuxième estimateur défini à l'équation (4), quelque soit q, entier supérieur ou égal à 1, par l'équation suivante :

$$\hat{\tau}_{LS_5} = \underset{\tilde{\tau}}{arg\,max}\left|r(qM / 2 - 1 + \tilde{\tau})r(qM / 2 + \tilde{\tau})\right| \qquad (7)$$

La figure 7 illustre la fonction de coût $\psi_5$ de cet estimateur en utilisant un filtre prototype de type TFL et de longueur $L = 4M$, pour un rapport signal à bruit de 15dB, un nombre de porteuses $M = 128$, un retard $\tau / Ts = 10$ et un préambule selon le quatrième exemple décrit ci-dessus.

Si l'on ajoute $q - 1$ colonnes de symboles de préambule nuls dans le préambule, on obtient pratiquement les mêmes performances en termes de coût, car le symbole multiporteuse OQAM utile suivant le préambule, correspondant à la colonne de symboles de données utiles à l'instant q, qui va s'ajouter au préambule, sera filtré par les $M$ premiers coefficients de filtre prototype, qui ont généralement une faible amplitude par rapport aux $M$ coefficients suivants.

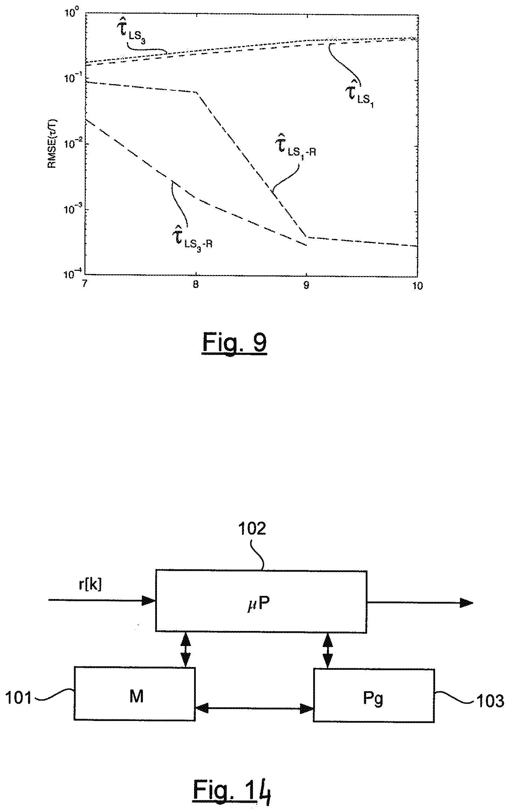

Les performances des estimateurs selon l'invention sont présentées en relation avec les figures 8 et 9 pour les estimateurs relatifs à l'estimation d'un décalage en temps et d'un décalage en phase selon le premier mode de réalisation, et avec les figures 13 à 16 pour les estimateurs relatifs à l'estimation d'un décalage en temps et d'un décalage en fréquence selon le deuxième mode de réalisation.

Plus précisément, la figure 8 propose une comparaison entre le premier estimateur $\hat{\tau}_{LS_1}$ défini à l'équation (3) et le troisième estimateur $\hat{\tau}_{LS_3}$ défini à l'équation (5), avant et après simplification en utilisant les préambules selon le deuxième type de préambule présenté. Le premier estimateur $\hat{\tau}_{LS_1}$ réduit en utilisant le préambule selon le quatrième exemple est noté $\hat{\tau}_{LS_1\text{-}R}$. Le troisième estimateur $\hat{\tau}_{LS_3}$ réduit en utilisant le préambule selon le troisième exemple est noté $\hat{\tau}_{LS_3\text{-}R}$.

Les courbes obtenues illustrent la performance des estimateurs après simplification en terme d'erreur quadratique moyenne RMSE (en anglais « Root Mean Square Error ») par rapport au rapport signal à bruit SNR (en anglais « Signal to Noise »). La performance des estimateurs réduits est notamment due à l'amélioration de leur robustesse contre l'effet d'un canal multi-trajets et du bruit gaussien, en éliminant les échantillons les plus perturbés.

L'erreur quadratique moyenne s'exprime ici sous la forme suivante :

$$RMSE\left(\tau / T\right) = \frac{1}{M}\sqrt{\frac{1}{re}\sum_{i=1}^{re}\left(\tau - \hat{\tau}_i\right)^2}$$

où $re$ est le nombre de réalisations, $\hat{\tau}_i$ la valeur estimée du retard $\tau$ à la $i$ème itération et T le temps symbole (avec T = M en discret).

Selon la figure 8, le premier estimateur $\hat{\tau}_{LS_1\text{-}R}$ réduit en utilisant le préambule selon le quatrième exemple est le plus performant.

La figure 9 illustre les performances des mêmes estimateurs, en terme de RMSE en fonction de nombre de porteuses, pour un rapport signal à bruit de 10 dB et en présence d'un canal de transmission de type Ma. Les estimateurs montrent toujours un gain après réduction. Le premier estimateur $\hat{\tau}_{LS_1\text{-}R}$ réduit en utilisant le préambule selon le quatrième exemple est toujours le plus performant, du fait que les échantillons qui entrent dans le calcul de l'estimateur ont les amplitudes les plus importantes après filtrage, et, par suite, sont les moins perturbés lors de la transmission.

Au niveau de la complexité, les premier et deuxième estimateurs définis par les équations (3) et (4), qui utilisent la corrélation entre la première ou la deuxième moitié des échantillons du préambule après filtrage sont moins complexes, en termes de calcul opératoire, que le troisième estimateur défini par l'équation (5) utilisant la corrélation entre tous les échantillons de préambule. Après simplification de ces estimateurs, en exploitant la présence des valeurs pics après l'étape de transformation fréquence/temps, la complexité de ces estimateurs devient négligeable.

La figure 13 illustre les performances d'un estimateur de décalage en temps selon le premier mode de réalisation correspondant à l'estimateur $\hat{\tau}_{LS_1\text{-}R}$ réduit en utilisant le préambule selon le quatrième exemple appelé $\hat{\tau}_{LS_o}$, et d'un estimateur de décalage en temps selon le deuxième mode de réalisation relatif à l'équation (10) appelé $\hat{\tau}_{LS_n}$, en présence d'un bruit gaussien et en présence d'un canal de transmission de type Ma.

Pour l'estimateur $\hat{\tau}_{LS_o}$, le résultat est obtenu pour un préambule tel que :

$$\begin{cases} p_{2m,0} = (-1)^m \sqrt{2} / 2 \\ p_{2m+1,n} = 0 \end{cases} \qquad \text{pour } 0 \le m \le M / 2 - 1,$$

et $p_{m,n+1} = 0$, pour $0 \le m \le M - 1$

Ce préambule vérifie notamment la propriété requise impérativement pour l'estimation d'un décalage en temps et en fréquence selon le deuxième mode de réalisation, une porteuse sur deux étant nulle, les deux préambules des deux estimateurs comparés selon le premier et le deuxième mode de réalisation ont donc la même énergie.

En présence, d'un bruit purement gaussien, il apparaît que l'estimateur $\hat{\tau}_{LS_n}$ est plus performant, tandis qu'en présence d'un canal de transmission de type Ma, l'estimateur $\hat{\tau}_{LS_o}$ procure un léger avantage.

*5.5 Structure du récepteur*

On présente finalement, en relation avec la figure 14, la structure simplifiée d'un récepteur comprenant un démodulateur OFDM/OQAM ou BFDM/OQAM mettant en oeuvre une technique de réception selon un exemple décrit ci-dessus.

Un tel récepteur comprend une mémoire 101 comprenant une mémoire tampon, une unité de traitement 102, équipée par exemple d'un microprocesseur $\mu P$, et pilotée par le programme d'ordinateur 103, mettant en oeuvre le procédé de réception selon l'invention.

A l'initialisation, les instructions de code du programme d'ordinateur 103 sont par exemple chargées dans une mémoire RAM avant d'être exécutées par le processeur de l'unité de traitement 102. L'unité de traitement 102 reçoit en entrée un signal multiporteuse $r[k]$. Le microprocesseur de l'unité de traitement 102 met en oeuvre les étapes du procédé de réception décrit précédemment, selon les instructions du programme d'ordinateur 103, pour effectuer une estimation des retards en temps et/ou en phase et/ou en fréquence affectant le signal multiporteuse reçu $r[k]$. Pour cela, le récepteur comprend, outre la mémoire tampon 101, des moyens d'estimation comprenant au moins un estimateur estimateur de décalage en temps, et/ou au moins un estimateur de décalage en phase, et/ou au moins un estimateur de décalage en fréquence tenant compte des coefficients d'un filtre prototype utilisé en émission pour mettre en forme le préambule. Ces moyens sont pilotés par le microprocesseur de l'unité de traitement 102.

**Revendications**

1. Procédé de réception d'un signal multiporteuse de type OQAM mettant en oeuvre une étape d'estimation (21), dans le domaine temporel, d'au moins un décalage en temps, en phase et/ou en fréquence dudit signal multiporteuse, ladite étape d'estimation (21) mettant en oeuvre au moins un estimateur pour l'estimation dudit décalage en temps, dit estimateur temporel, et/ou au moins un estimateur pour l'estimation dudit décalage en phase, dit estimateur de phase, et/ou au moins un estimateur pour l'estimation dudit décalage en fréquence, dit estimateur en fréquence, **caractérisé en ce qu'**au moins un desdits estimateurs met en oeuvre une étape d'estimation selon une équation ayant au moins pour paramètres des coefficients d'un filtre prototype utilisé en émission pour mettre en forme au moins un préambule inséré dans ledit signal multiporteuse.

2. Procédé de réception selon la revendication 1, **caractérisé en ce qu'**au moins un desdits estimateurs met en oeuvre une pseudo-périodicité tenant compte dudit préambule et dudit filtre prototype.

3. Procédé de réception selon la revendication 1, **caractérisé en ce que** ladite étape d'estimation (21) met en oeuvre, dans le domaine temporel, une première sous-étape d'estimation d'un décalage en temps (2110, 2120), suivie d'une seconde sous-étape d'estimation (2111) d'un décalage en phase ou d'une seconde sous-étape d'estimation (2121) d'un décalage en fréquence.

4. Procédé de réception selon la revendication 3, **caractérisé en ce que** ledit estimateur temporel met en oeuvre ladite première sous-étape d'estimation d'un décalage en temps selon l'une des équations suivantes :

$$\hat{\tau}_{LS_1} = \underset{\tilde{\tau}}{arg\,max} \left| \sum_{k=0}^{M/4-1} h(k)h(M/2-1-k)r(k+\tilde{\tau})r(M/2-1-k+\tilde{\tau}) \right|$$

et

$$\hat{\tau}_{LS_2} = \underset{\tilde{\tau}}{arg\,max} \left| \sum_{k=0}^{M/4-1} h(M-1-k)h(M/2+k)r(M/2+k+\tilde{\tau})r(M-1-k+\tilde{\tau}) \right|$$

et/ou **en ce que** ledit estimateur de phase met en oeuvre ladite seconde sous-étape d'estimation d'un décalage en phase selon l'une des équations suivantes :

$$\hat{\phi}_{LS_1} = \frac{1}{2} \angle \left\{ \sum_{k=0}^{M/4-1} h(k)h(M/2-1-k)r(k+\hat{\tau})r(M/2-1-k+\hat{\tau}) \right\}$$

et

$$\hat{\phi}_{LS_2} = \frac{1}{2} \angle \left\{ \sum_{k=0}^{M/4-1} h(M-1-k)h(M/2+k)r(M/2+k+\hat{\tau})r(M-1-k+\hat{\tau}) \right\}$$

avec :

$\hat{\tau}_{LS_1}$ ou $\hat{\tau}_{LS_2}$ l'estimation dudit décalage en temps en sortie dudit estimateur temporel, et
$\tilde{\tau}$ l'estimation du décalage temporel fixée en entrée de l'estimateur du décalage en phase ;
$\hat{\phi}_{LS_1}$ ou $\hat{\phi}_{LS_2}$ l'estimation dudit décalage en phase en sortie dudit estimateur de phase ;
$\angle\{.\}$ l'argument d'un nombre complexe ;
M le nombre de sous-porteuses d'un symbole OQAM dudit signal multiporteuse ;
$k$ un entier tel que $0 \le k \le M/4 - 1$ ;
$\tilde{\tau}$ un entier tel que $0 \le \tilde{\tau} \le \tilde{\tau}_{max}$ avec $\tilde{\tau}_{max}$ une valeur maximale prédéterminée de $\tilde{\tau}$ ;
$h(k)$ des coefficients dudit filtre prototype utilisé en émission ;
$r(k)$ un signal multiporteuse reçu, tel que $r(k) = s(k - \tau)e^{j\phi} + b(k)$ ;
$s(k)$ un signal multiporteuse émis ;
$b(k)$ un bruit blanc gaussien ;
$\tau$ ledit décalage en temps du signal multiporteuse reçu par rapport audit signal multiporteuse émis ;
$\phi$ ledit décalage en phase du signal multiporteuse reçu par rapport audit signal multiporteuse émis.

5.   Procédé de réception selon la revendication 3, **caractérisé en ce que** ladite étape d'estimation (21) tient également compte de la position d'au moins une paire de valeurs maximales obtenues en émission pour ledit signal multiporteuse,
ladite position étant définie par rapport aux sorties d'une étape de transformation du domaine fréquentiel vers le domaine temporel (12) d'un ensemble de symboles de données formant ledit préambule, dits symboles de préambule.

6.   Procédé de réception selon la revendication 5, **caractérisé en ce que**, pour des symboles de préambule $p_{m,n}$, définis en entrée de ladite étape de transformation du domaine fréquentiel vers le domaine temporel mise en oeuvre en émission par :

$$\begin{cases} p_{m,n} = \sqrt{2}/2 & \text{pour} \quad m = 4p \quad \text{et} \quad m = 1 + 4p \\ p_{m,n} = -\sqrt{2}/2 & \text{pour} \quad m = 2 + 4p \quad \text{et} \quad m = 3 + 4p \end{cases}$$

et

avec $p_{m,n}$ un symbole de préambule associé à une sous-porteuse d'indice $m$ à l'instant $n$, $p$ un entier, et $0 \le m \le M - 1$, ledit estimateur temporel met en oeuvre ladite première sous-étape d'estimation d'un décalage en temps selon l'une des équations suivantes :

$$\hat{\tau}_{LS_1} = \arg\max_{\tilde{\tau}} \left| r(\tilde{\tau})r(M/2-1+\tilde{\tau}) \right|,$$

$$\hat{\tau}_{LS_2} = \arg\max_{\tilde{\tau}} \left| r(M/2+\tilde{\tau})r(M-1+\tilde{\tau}) \right|,$$

avec :

$\hat{\tau}_{LS_1}$ ou $\hat{\tau}_{LS_2}$ l'estimation dudit décalage en temps en sortie dudit estimateur temporel ;

M le nombre de sous-porteuses d'un symbole OQAM dudit signal multiporteuse ;

$\tilde{\tau}$ un entier tel que $0 \leq \tilde{\tau} \leq \tilde{\tau}_{max}$ avec $\tilde{\tau}_{max}$ une valeur maximale prédéterminée de $\tilde{\tau}$,

$r(k)$ un signal multiporteuse reçu, tel que $r(k) = s(k - \tau)e^{j\phi} + b(k)$ ;

$k$ un entier ;

$s(k)$ un signal multiporteuse émis ;

$b(k)$ un bruit blanc gaussien ;

$\tau$ un décalage en temps du signal multiporteuse reçu par rapport au signal multiporteuse émis ;

$\phi$ un décalage en phase du signal multiporteuse reçu par rapport au signal multiporteuse émis.

7. Procédé de réception selon la revendication 5, **caractérisé en ce que**, pour des symboles de préambule $p_{m,n}$, définis en entrée de ladite étape de transformation du domaine fréquentiel vers le domaine temporel mise en oeuvre en émission par :

$$\begin{cases} p_{2m,n} = \sqrt{2} / 2 \\ p_{2m+1,n} = j\sqrt{2} / 2 \end{cases} \text{pour } 0 \leq m \leq M / 2 - 1$$

avec $p_{m,n}$ un symbole de préambule associé à une sous-porteuse d'indice $m$ à l'instant $n$, et $j^2 = -1$, ledit estimateur temporel met en oeuvre ladite première sous-étape d'estimation d'un décalage en temps selon l'une des équations suivantes :

$$\hat{\tau}_{LS_1} = \underset{\tilde{\tau}}{arg\,max} \left| r( M / 4 - 1 + \tilde{\tau} )r( M / 4 + \tilde{\tau} ) \right|,$$

$$\hat{\tau}_{LS_2} = \underset{\tilde{\tau}}{arg\,max} \left| r( 3M / 4 - 1 + \tilde{\tau} )r( 3M / 4 + \tilde{\tau} ) \right|,$$

avec :

$\tilde{\tau}_{LS_1}$ ou $\tilde{\tau}_{LS_2}$ l'estimation dudit décalage en temps en sortie dudit estimateur temporel ;

M le nombre de sous-porteuses d'un symbole OQAM dudit signal multiporteuse ;

$\tilde{\tau}$ un entier tel que $0 \leq \tilde{\tau} \leq \tilde{\tau}_{max}$ avec $\tilde{\tau}_{max}$ une valeur maximale prédéterminée de $\tilde{\tau}$ ;

$r(k)$ un signal multiporteuse reçu, tel que $r(k) = s(k - \tau)e^{j\phi} + b(k)$ ;

$k$ un entier ;

$s(k)$ un signal multiporteuse émis ;

$b(k)$ un bruit blanc gaussien ;

$\tau$ un décalage en temps du signal multiporteuse reçu par rapport au signal multiporteuse émis ;

$\phi$ un décalage en phase du signal multiporteuse reçu par rapport au signal multiporteuse émis.

8. Procédé de réception selon la revendication 5, **caractérisé en ce que**, pour des symboles de préambule $p_{m,n}$, définis en entrée de ladite étape de transformation du domaine fréquentiel vers le domaine temporel mise en oeuvre en émission par :

$$\begin{cases} p_{2m,n} = \sqrt{2} / 2 \\ p_{2m+1,n} = 0 \end{cases} \text{pour } 0 \leq m \leq M / 2 - 1$$

avec $p_{m,n}$ un symbole de préambule associé à une sous-porteuse d'indice $m$ à l'instant $n$, ledit estimateur temporel met en oeuvre ladite première sous-étape d'estimation d'un décalage en temps selon l'une des équations suivantes :

$$\hat{\tau}_{LS_1} = \arg\max_{\tilde{\tau}} \left| r(M/4 - 1 + \tilde{\tau})r(M/4 + \tilde{\tau}) \right|,$$

$$\hat{\tau}_{LS_2} = \arg\max_{\tilde{\tau}} \left| r(3M/4 - 1 + \tilde{\tau})r(3M/4 + \tilde{\tau}) \right|,$$

$$\hat{\tau}_{LS_3} = \arg\max_{\tilde{\tau}} \left| r(M/4 - 1 + \tilde{\tau})r(3M/4 + \tilde{\tau}) + r(M/4 + \tilde{\tau})r(3M/4 - 1 + \tilde{\tau}) \right|,$$

avec :

$\hat{\tau}_{LS_1}$, $\hat{\tau}_{LS_2}$ ou $\hat{\tau}_{LS_3}$ l'estimation dudit décalage en temps en sortie dudit estimateur temporel ; M le nombre de sous-porteuses d'un symbole OQAM dudit signal multiporteuse ;
$\tilde{\tau}$ un entier tel que $0 \le \tilde{\tau} \le \tilde{\tau}_{max}$ avec $\tilde{\tau}_{max}$ une valeur maximale prédéterminée de $\tilde{\tau}$ $r(k)$ un signal multiporteuse reçu, tel que $r(k) = s(k - \tau)e^{j\phi} + b(k)$ ;
$k$ un entier;
$s(k)$ un signal multiporteuse émis ;
$b(k)$ un bruit blanc gaussien ;
$\tau$ un décalage en temps du signal multiporteuse reçu par rapport au signal multiporteuse émis ;
$\phi$ un décalage en phase du signal multiporteuse reçu par rapport au signal multiporteuse émis.

9. Procédé de réception selon la revendication 5, **caractérisé en ce que**, pour des symboles de préambule $p_{m,n}$, définis en entrée de ladite étape de transformation du domaine fréquentiel vers le domaine temporel mise en oeuvre en émission par :

$$\begin{cases} p_{2m,n} = (-1)^m \sqrt{2}/2 \\ p_{2m+1,n} = 0 \end{cases} \text{pour } 0 \le m \le M/2 - 1$$

avec $p_{m,n}$ un symbole de préambule associé à une sous-porteuse d'indice $m$ à l'instant $n$,
ledit estimateur temporel met en oeuvre ladite première sous-étape d'estimation d'un décalage en temps selon l'une des équations suivantes :

$$\hat{\tau}_{LS_1} = \arg\max_{\tilde{\tau}} \left| r(\tilde{\tau})r(M/2 - 1 + \tilde{\tau}) \right|,$$

$$\hat{\tau}_{LS_2} = \arg\max_{\tilde{\tau}} \left| r(M/2 + \tilde{\tau})r(M - 1 + \tilde{\tau}) \right|,$$

$$\hat{\tau}_{LS_3} = \arg\max_{\tilde{\tau}} \left| r(\tilde{\tau})r(M - 1 + \tilde{\tau}) + r(M/2 - 1 + \tilde{\tau})r(M/2 + \tilde{\tau}) \right|,$$

avec :

$\hat{\tau}_{LS_1}$, $\hat{\tau}_{LS_2}$ ou $\hat{\tau}_{LS_3}$ l'estimation dudit décalage en temps en sortie dudit estimateur temporel ; M le nombre de sous-porteuses d'un symbole OQAM dudit signal multiporteuse ;
$\tilde{\tau}$ un entier tel que $0 \le \tilde{\tau} \le \tilde{\tau}_{max}$ avec $\tilde{\tau}_{max}$ une valeur maximale prédéterminée de $\tilde{\tau}$ $r(k)$ un signal multiporteuse reçu, tel que $r(k) = s(k - \tau)e^{j\phi} + b(k)$ ;
$k$ un entier ;
$s(k)$ un signal multiporteuse émis ;
$b(k)$ un bruit blanc gaussien ;

$\tau$ un décalage en temps du signal multiporteuse reçu par rapport au signal multiporteuse émis ;

$\phi$ un décalage en phase du signal multiporteuse reçu par rapport au signal multiporteuse émis.

**10.** Procédé de réception selon la revendication 5, **caractérisé en ce que** pour des symboles de préambule $p_{m,n}$, définis en entrée de ladite étape de transformation du domaine fréquentiel vers le domaine temporel mise en oeuvre en émission par :

$$\begin{cases} p_{m,n} = 1 & \text{si mod}(m,4) = 0 \\ p_{m,n} = 0 & \text{sinon} \end{cases} \quad \text{pour } 0 \le m \le M - 1$$

avec $p_{m,n}$ un symbole de préambule associé à une sous-porteuse d'indice $m$ à l'instant $n$,
ledit estimateur temporel met en oeuvre ladite première sous-étape d'estimation d'un décalage en temps selon l'une des équations suivantes :

$$\hat{\tau}_{LS_1} = \arg\max_{\tilde{\tau}} \left| r(\tilde{\tau})r(M/2 - 1 + \tilde{\tau}) + r(M/4 - 1 + \tilde{\tau})r(M/4 + \tilde{\tau}) \right|$$

$$\hat{\tau}_{LS_2} = \arg\max_{\tilde{\tau}} \left| r(M/2 + \tilde{\tau})r(M - 1 + \tilde{\tau}) + r(3M/4 - 1 + \tilde{\tau})r(3M/4 + \tilde{\tau}) \right|$$

$$\hat{\tau}_{LS_3} = \arg\max_{\tilde{\tau}} \left| r(\tilde{\tau})r(M - 1 + \tilde{\tau}) + r(M/4 - 1 + \tilde{\tau})r(3M/4 + \tilde{\tau}) \right.$$

$$\left. + r(M/4 + \tilde{\tau})r(3M/4 - 1 + \tilde{\tau}) + r(M/2 - 1 + \tilde{\tau})r(M/2 + \tilde{\tau}) \right|$$

avec :

$\hat{\tau}_{LS_1}$, $\hat{\tau}_{LS_2}$ ou $\hat{\tau}_{LS_3}$ l'estimation dudit décalage en temps en sortie dudit estimateur temporel ;
M le nombre de sous-porteuses d'un symbole OQAM dudit signal multiporteuse ;
$\tilde{\tau}$ un entier tel que $0 \le \tilde{\tau} \le \tilde{\tau}_{max}$ avec $\tilde{\tau}_{max}$ une valeur maximale prédéterminée de $\tilde{\tau}$ $r(k)$ un signal multiporteuse reçu, tel que $r(k) = s(k - \tau)e^{j\phi} + b(k)$ ;
$k$ un entier ;
$s(k)$ un signal multiporteuse émis ;
$b(k)$ un bruit blanc gaussien ;
$\tau$ un décalage en temps du signal multiporteuse reçu par rapport au signal multiporteuse émis ;
$\phi$ un décalage en phase du signal multiporteuse reçu par rapport au signal multiporteuse émis.

**11.** Procédé de réception selon la revendication 3, **caractérisé en ce que** ladite étape d'estimation tient compte du fait qu'au moins un des symboles de préambule comprend sensiblement une sous-porteuse sur deux ayant une valeur nulle.

**12.** Procédé de réception selon la revendication 11, **caractérisé en ce que**, pour des symboles de préambule $p_{m,n}$, définis en entrée de ladite étape de transformation du domaine fréquentiel vers le domaine temporel le premier symbole émis à l'instant $n = 0$ étant tel que :

$$\begin{cases} p_{2m,0} = d & \text{avec } d \in \Re \quad ou \quad d \in \Im \\ p_{2m+1,0} = 0 \end{cases} \quad ou \quad \begin{cases} p_{2m,0} = 0 \\ p_{2m+1,0} = d & \text{avec } d \in \Re \quad ou \quad d \in \Im \end{cases}$$

avec $p_{m,n}$ un symbole de préambule associé à une sous-porteuse d'indice $m$ à l'instant $n = 0$, et $0 \le m \le M/2 - 1$,
avec M le nombre de sous-porteuses d'un symbole OQAM dudit signal multiporteuse ;
tandis que le symbole suivant émis à l'instant $n = 1$ correspond à un symbole nul tel que :

$$p_{m,1} = 0, \text{ pour } 0 \le m \le M - 1$$

ledit estimateur temporel met en oeuvre ladite première sous-étape d'estimation d'un décalage en temps selon l'équation suivante :

$$\hat{\tau}_{LS} = \underset{\tilde{\tau}}{arg\,max} \left\{ 2\left|R_1(\tilde{\tau})\right| - Q_1(\tilde{\tau}) \right\},$$

et ledit estimateur fréquentiel met en oeuvre ladite seconde sous-étape d'estimation d'un décalage en fréquentiel selon l'équation suivante :

$$\Delta\hat{f}_{LS} = \frac{1}{\pi M} arg \left\{ R_1(\hat{\tau}_{LS}) \right\},$$

avec :

$$R_1(\tilde{\tau}) = \sum_{k=0}^{M/2-1} h(k)h(k+M/2)r^*(k+\tilde{\tau})r(k+M/2+\tilde{\tau}),$$

$$Q_1(\tilde{\tau}) = \sum_{k=0}^{M/2-1} h(k)^2 \left|r(k+\tilde{\tau})\right|^2 + h(k+M/2)^2 \left|r(k+M/2+\tilde{\tau})\right|^2,$$

$\hat{\tau}_{LS}$ l'estimation dudit décalage en temps en sortie dudit estimateur temporel ;
$\Delta\hat{f}_{LS}$ l'estimation dudit décalage en fréquence en sortie dudit estimateur de phase ;
M le nombre de sous-porteuses d'un symbole OQAM dudit signal multiporteuse ;
$k$ un entier tel que $0 \le k \le M/2 - 1$ ;
$\tilde{\tau}$ un entier tel que $0 \le \tilde{\tau} \le \tilde{\tau}_{max}$ avec $\tilde{\tau}_{max}$ une valeur maximale prédéterminée de $\tilde{\tau}$ $h(k)$ des coefficients dudit filtre prototype utilisé en émission ;
$r(k)$ un signal multiporteuse reçu, tel que $r(k) = e^{j2\pi\Delta f}[c(k) \otimes s(k-\tau)] + b(k)$ ;
$\otimes$ un produit de convolution ;
$c(k)$ la réponse d'un canal multi-trajet
$s(k)$ un signal multiporteuse émis ;
$b(k)$ un bruit blanc gaussien ;
$\tau$ ledit décalage en temps du signal multiporteuse reçu par rapport audit signal multiporteuse émis ;
$\Delta f$ ledit décalage en fréquence du signal multiporteuse reçu par rapport audit signal multiporteuse émis.

**13.** Procédé de réception selon la revendication 11, **caractérisé en ce que**, pour des symboles de préambule $p_{m,n}$, définis en entrée de ladite étape de transformation du domaine fréquentiel vers le domaine temporel le premier symbole émis à l'instant $n = 0$ étant tel que :

$$\begin{cases} p_{2m,0} = d & \text{avec} \quad d \in \Re \quad ou \quad d \in \Im \\ p_{2m+1,0} = 0 \end{cases} \quad ou \quad \begin{cases} p_{2m,0} = 0 \\ p_{2m+1,0} = d & \text{avec} \quad d \in \Re \quad ou \quad d \in \Im \end{cases}$$

avec $p_{m,n}$ un symbole de préambule associé à une sous-porteuse d'indice $m$ à l'instant $n = 0$, et $0 \le m \le M/2 - 1$, avec M le nombre de sous-porteuses d'un symbole OQAM dudit signal multiporteuse ;
tandis que le symbole suivant émis à l'instant $n = 1$ correspond à un symbole nul tel que :

$$p_{m,1} = 0, \text{ pour } 0 \le m \le M - 1$$

et **caractérisé en ce que** ladite étape d'estimation (21) tient également compte de la position d'au moins une paire de valeurs maximales obtenues en émission pour ledit signal multiporteuse,
ladite position étant définie par rapport aux sorties d'une étape de transformation du domaine fréquentiel vers le domaine temporel (12) d'un ensemble de symboles de données destinés à former ledit préambule, dits symboles de préambule.

ledit estimateur temporel met en oeuvre ladite première sous-étape d'estimation d'un décalage en temps selon l'équation suivante :

$$\hat{\tau}_{LS} = \underset{\tilde{\tau}}{arg\,max}\left\{|R_1(\tilde{\tau})||Q_1(\tilde{\tau})|\right\},$$

et ledit estimateur fréquentiel met en oeuvre ladite seconde sous-étape d'estimation d'un décalage en fréquentiel selon l'équation suivante :

$$\Delta\hat{f}_{LS} = \frac{1}{2\pi N} arg\left\{R_1(\hat{\tau}_{LS})\right\},$$

avec pour *k* un entier, M le nombre de sous-porteuses d'un symbole OQAM dudit signal multiporteuse, et lesdites positions de valeurs maximales suivantes k, M/2 - 1-k, M/2+k, M-1-k :

$$R(\tilde{\tau}) = h(k)h(k+M/2)r*(k+\tilde{\tau})r(k+M/2+\tilde{\tau})$$
$$+h(M/2-1-k)h(M-1-k)r*(M/2-1-k+\tilde{\tau})r(M-1-k+\tilde{\tau})$$

$$Q(\tilde{\tau}) = h(k+M/2)^2|r(k+\tilde{\tau})|^2 + h(M-1-k)^2|r(M/2-1-k+\tilde{\tau})|^2$$
$$+h(k)|r(M/2+k+\tilde{\tau})|^2 h(M/2-1-k)^2|r(M-1-k+\tilde{\tau})|^2,$$

$\hat{\tau}_{LS}$ l'estimation dudit décalage en temps en sortie dudit estimateur temporel ;
$\Delta\hat{f}_{LS}$ l'estimation dudit décalage en fréquence en sortie dudit estimateur de phase ;
M le nombre de sous-porteuses d'un symbole OQAM dudit signal multiporteuse ;
$\tilde{\tau}$ un entier tel que $0 \le \tilde{\tau} \le \tilde{\tau}_{max}$ avec $\tilde{\tau}_{max}$ une valeur maximale prédéterminée de $\tilde{\tau}$ *h(k)* des coefficients dudit filtre prototype utilisé en émission ;
*r(k)* un signal multiporteuse reçu, tel que $r(k) = e^{j2\pi\Delta f}[c(k) \otimes s(k - \tau)] + b(k)$ ;
$\otimes$ un produit de convolution ;
*c(k)* la réponse d'un canal multi-trajet ;
*s(k)* un signal multiporteuse émis ;
*b(k)* un bruit blanc gaussien ;
$\tau$ ledit décalage en temps du signal multiporteuse reçu par rapport audit signal multiporteuse émis ;
$\Delta f$ ledit décalage en fréquence du signal multiporteuse reçu par rapport audit signal multiporteuse émis.

**14.** Dispositif de réception d'un signal multiporteuse de type OQAM, comprenant des moyens d'estimation (21), dans le domaine temporel, d'au moins un décalage en temps, en phase et/ou en fréquence dudit signal multiporteuse, lesdits moyens d'estimation (21) comprenant au moins un estimateur pour l'estimation dudit décalage en temps, dit estimateur temporel, et/ou au moins un estimateur pour l'estimation dudit décalage en phase, dit estimateur de phase et/ou au moins un estimateur pour l'estimation dudit décalage en fréquence, dit estimateur en fréquence, **caractérisé en ce qu'**au moins un desdits estimateurs met en oeuvre une étape d'estimation selon une équation ayant au moins pour paramètres des coefficients d'un filtre prototype utilisé en émission pour mettre en forme au moins un préambule dans ledit signal multiporteuse.

**15.** Programme d'ordinateur comportant des instructions pour la mise en oeuvre d'un procédé selon la revendication 1 lorsque ledit programme est exécuté par un processeur.

**Patentansprüche**

1. Verfahren zum Empfangen eines OQAM-Mehrträgersignals, das einen Schritt der Schätzung (21) mindestens einer Zeit-, Phasen- und/oder Frequenzverschiebung der Frequenz des Mehrträgersignals im Zeitbereich einsetzt, wobei der Schätzungsschritt (21) mindestens einen Schätzer zur Schätzung der Zeitverschiebung, Zeitschätzer genannt, und/oder mindestens einen Schätzer zur Schätzung der Phasenverschiebung, Phasenschätzer genannt, und/oder mindestens einen Schätzer zur Schätzung der Frequenzverschiebung, Frequenzschätzer genannt, einsetzt,

   **dadurch gekennzeichnet, dass** mindestens einer der Schätzer einen Schritt der Schätzung nach einer Gleichung einsetzt, die als Parameter mindestens Koeffizienten eines Prototyp-Filters haben, der beim Senden verwendet wird, um mindestens eine in das Mehrträgersignal eingesetzte Präambel zu formen.

2. Empfangsverfahren nach Anspruch 1, **dadurch gekennzeichnet, dass** mindestens einer der Schätzer eine Pseudo-Periodizität einsetzt, die die Präambel und den Prototyp-Filter berücksichtigt.

3. Empfangsverfahren nach Anspruch 1, **dadurch gekennzeichnet, dass** der Schätzungsschritt (21) in dem Zeitbereich einen ersten Unterschritt einer Schätzung einer Zeitverschiebung (2110, 2120), gefolgt von einem zweiten Unterschritt einer Schätzung (2111) einer Phasenverschiebung oder einem zweiten Unterschritt der Schätzung (2121) einer Frequenzverschiebung einsetzt.

4. Empfangsverfahren nach Anspruch 3, **dadurch gekennzeichnet, dass** der Zeitschätzer den ersten Unterschritt einer Schätzung einer Zeitverschiebung nach einer der folgenden Gleichungen einsetzt:

$$\hat{\tau}_{LS_1} = \arg\max_{\tilde{\tau}} \left| \sum_{k=0}^{M/4-1} h(k)h(M/2-1-k)r(k+\tilde{\tau})r(M/2-1-k+\tilde{\tau}) \right|$$

und

$$\hat{\tau}_{LS_2} = \arg\max_{\tilde{\tau}} \left| \sum_{k=0}^{M/4-1} h(M-1-k)h(M/2+k)r(M/2+k+\tilde{\tau})r(M-1-k+\tilde{\tau}) \right|$$

und/oder dass der Phasenschätzer den zweiten Unterschritt einer Schätzung einer Phasenverschiebung nach einer der folgenden Gleichungen einsetzt:

$$\hat{\phi}_{LS_1} = \frac{1}{2} \angle \left\{ \sum_{k=0}^{M/4-1} h(k)h(M/2-1-k)r(k+\hat{\tau})r(M/2-1-k+\hat{\tau}) \right\}$$

und

$$\hat{\phi}_{LS_2} = \frac{1}{2} \angle \left\{ \sum_{k=0}^{M/4-1} h(M-1-k)h(M/2+k)r(M/2+k+\hat{\tau})r(M-1-k+\hat{\tau}) \right\}$$

wobei:

$\hat{\tau}_{LS_1}$ oder $\hat{\tau}_{LS_2}$ die Schätzung der Zeitverschiebung am Ausgang des Zeitschätzers sind, und
$\tau$ die Schätzung der Zeitverschiebung ist, die am Eingang des Schätzers der Phasenverschiebung festgesetzt wurde;
$\hat{\phi}_{LS_1}$ oder $\hat{\phi}_{LS_2}$ die Schätzung der Phasenverschiebung am Ausgang des Phasenschätzers sind;

$\angle\{.\}$ das Argument einer komplexen Zahl ist;

M die Anzahl von Unterträgern eines OQAM-Symbols des Mehrträgersignals ist;

$k$ eine ganze Zahl ist, so dass $0 \leq k \leq M / 4\text{-}1$;

$\tilde{\tau}$ eine ganze Zahl ist, so dass $0 \leq \tilde{\tau} \leq \tilde{\tau}_{max}$, wobei $\tilde{\tau}_{max}$ ein vorbestimmter Maximalwert von $\tilde{\tau}$ ist;

$h(k)$ Koeffizienten des beim Senden verwendeten Prototyp-Filters sind;

$r(k)$ ein empfangenes Mehrträgersignal ist, so dass $r(k)=s(k\text{-}\tau)e^{J\phi}+b(k)$;

$s(k)$ ein gesendetes Mehrträgersignal ist;

$b(k)$ ein weißes Gauss-förmiges Rauschen ist;

$\tau$ die Zeitverschiebung des empfangenen Mehrträgersignals in Bezug zum gesendeten Mehrträgersignal ist;

$\Phi$ die Phasenverschiebung des empfangenen Mehrträgersignals in Bezug zum gesendeten Mehrträgersignal ist.

5. Empfangsverfahren nach Anspruch 3, **dadurch gekennzeichnet, dass** der Schätzungsschritt (21) auch die Position mindestens eines Paars von Maximalwerten, die beim Senden für das Mehrträgersignal erhalten werden, berücksichtigt,

wobei die Position in Bezug zu den Ausgängen eines Umwandlungsschrittes des Frequenzbereichs in den Zeitbereich (12) einer Gesamtheit von Datensymbolen, die die Präambel bilden, Präambelsymbole genannt, definiert ist.

6. Empfangsverfahren nach Anspruch 5, **dadurch gekennzeichnet, dass** für Präambelsymbole $p_{m,n}$, die am Eingang des Umwandlungsschrittes vom Frequenzbereich in den Zeitbereich definiert sind, der beim Senden eingesetzt wird durch:

$$\begin{cases} p_{m,n} = \sqrt{2}/2 & \text{für} \quad m = 4p \quad \text{und} \quad m = 1 + 4p \\ p_{m,n} = -\sqrt{2}/2 & \text{für} \quad m = 2 + 4p \quad \text{und} \quad m = 3 + 4p \end{cases}$$

wobei $p_{m,n}$ ein Präambelsymbol ist, das einem Unterträger mit dem Index $m$ zum Zeitpunkt n zugeordnet ist, $p$ eine ganze Zahl ist, und $0 \leq m \leq M\text{-}1$ ist,

der Zeitschätzer den ersten Unterschritt der Schätzung einer Zeitverschiebung nach einer der folgenden Gleichungen einsetzt:

$$\hat{\tau}_{LS_1} = \underset{\tilde{\tau}}{arg\,max}\left|r(\tilde{\tau})r(M/2-1+\tilde{\tau})\right|,$$

$$\hat{\tau}_{LS_2} = \underset{\tilde{\tau}}{arg\,max}\left|r(M/2+\tilde{\tau})r(M-1+\tilde{\tau})\right|,$$

wobei:

$\hat{\tau}_{LS_1}$ oder $\hat{\tau}_{LS_2}$ die Schätzung der Zeitverschiebung am Ausgang des Zeitschätzers sind;

M die Anzahl von Unterträgern eines OQAM-Symbols des Mehrträgersignals ist;

$\tilde{\tau}$ eine ganze Zahl ist, so dass $0 \leq \tilde{\tau} \leq \tilde{\tau}_{max}$, wobei $\tilde{\tau}_{max}$ ein vorbestimmter Maximalwert von $\tilde{\tau}$ ist;

$r(k)$ ein empfangenes Mehrträgersignal ist, so dass $r(k)=s(k\text{-}\tau)e^{j\varphi}+b(k)$;

$k$ eine ganze Zahl ist;

$s(k)$ ein gesendetes Mehrträgersignal ist;

$b(k)$ ein weißes Gauss-förmiges Rauschen ist;

$\tau$ die Zeitverschiebung des empfangenen Mehrträgersignals in Bezug zum gesendeten Mehrträgersignal ist;

$\Phi$ die Phasenverschiebung des empfangenen Mehrträgersignals in Bezug zum gesendeten Mehrträgersignal ist.

7. Empfangsverfahren nach Anspruch 5, **dadurch gekennzeichnet, dass** für Präambelsymbole $p_{m,n}$, die am Eingang des Umwandlungsschrittes vom Frequenzbereich in den Zeitbereich definiert sind, der beim Senden eingesetzt wird durch:

$$\begin{cases} p_{2m,n} = \sqrt{2}/2 \\ p_{2m+1,n} = j\sqrt{2}/2 \end{cases} \text{für } 0 \le m \le M/2 - 1$$

wobei $p_{m,n}$ ein Präambelsymbol ist, das einem Unterträger mit dem Index $m$ zum Zeitpunkt n zugeordnet ist, und $j^2$=-1, der Zeitschätzer den ersten Unterschritt der Schätzung einer Zeitverschiebung nach einer der folgenden Gleichungen einsetzt:

$$\hat{\tau}_{LS_1} = \underset{\tilde{\tau}}{arg\,max}\left|r(M/4 - 1 + \tilde{\tau})r(M/4 + \tilde{\tau})\right|,$$

$$\hat{\tau}_{LS_2} = \underset{\tilde{\tau}}{arg\,max}\left|r(3M/4 - 1 + \tilde{\tau})r(3M/4 + \tilde{\tau})\right|,$$

wobei:

$\hat{\tau}_{LS_1}$,oder $\hat{\tau}_{LS_2}$ die Schätzung der Zeitverschiebung am Ausgang des Zeitschätzers sind;
M die Anzahl von Unterträgern eines OQAM-Symbols des Mehrträgersignals ist;
$\tilde{\tau}$ eine ganze Zahl ist, so dass $0 \le \tilde{\tau} \le \tilde{\tau}_{max}$, wobei $\tilde{\tau}_{max}$ ein vorbestimmter Maximalwert von $\tilde{\tau}$ ist;
r(k) ein empfangenes Mehrträgersignal ist, so dass $r(k)=s(k-\tau)e^{j\varphi}+b(k)$;
k eine ganze Zahl ist;
s(k) ein gesendetes Mehrträgersignal ist;
b(k) ein weißes Gauss-förmiges Rauschen ist;
$\tau$ die Zeitverschiebung des empfangenen Mehrträgersignals in Bezug zum gesendeten Mehrträgersignal ist;
$\Phi$ die Phasenverschiebung des empfangenen Mehrträgersignals in Bezug zum gesendeten Mehrträgersignal ist.

**8.** Empfangsverfahren nach Anspruch 5, **dadurch gekennzeichnet, dass** für Präambelsymbole $p_{m,n}$, die am Eingang des Umwandlungsschrittes vom Frequenzbereich in den Zeitbereich definiert sind, der beim Senden eingesetzt wird durch:

$$\begin{cases} p_{2m,n} = \sqrt{2}/2 \\ p_{2m+1,n} = 0 \end{cases} \text{für } 0 \le m \le M/2 - 1$$

wobei $p_{m,n}$ ein Präambelsymbol ist, das einem Unterträger mit dem Index m zum Zeitpunkt n zugeordnet ist, der Zeitschätzer den ersten Unterschritt der Schätzung einer Zeitverschiebung nach einer der folgenden Gleichungen einsetzt:

$$\hat{\tau}_{LS_1} = \underset{\tilde{\tau}}{arg\,max}\left|r(M/4 - 1 + \tilde{\tau})r(M/4 + \tilde{\tau})\right|,$$

$$\hat{\tau}_{LS_2} = \underset{\tilde{\tau}}{arg\,max}\left|r(3M/4 - 1 + \tilde{\tau})r(3M/4 + \tilde{\tau})\right|,$$

$$\hat{\tau}_{LS_3} = \underset{\tilde{\tau}}{arg\,max}\left|r(M/4 - 1 + \tilde{\tau})r(3M/4 + \tilde{\tau}) + r(M/4 + \tilde{\tau})r(3M/4 - 1 + \tilde{\tau})\right|,$$

wobei:

$\hat{\tau}_{LS_1}$, $\hat{\tau}_{LS_2}$ oder $\hat{\tau}_{LS_3}$ die Schätzung der Zeitverschiebung am Ausgang des Zeitschätzers sind;

M die Anzahl von Unterträgern eines OQAM-Symbols des Mehrträgersignals ist;

$\tilde{\tau}$ eine ganze Zahl ist, so dass $0 \leq \tilde{\tau} \leq \tilde{\tau}_{max}$, wobei $\tilde{\tau}_{max}$ ein vorbestimmter Maximalwert von $\tilde{\tau}$ ist;

$r(k)$ ein empfangenes Mehrträgersignal ist, so dass $r(k)=s(k-\tau)e^{j\varphi}+b(k)$;

$k$ eine ganze Zahl ist;

$s(k)$ ein gesendetes Mehrträgersignal ist;

$b(k)$ ein weißes Gauss-förmiges Rauschen ist;

$\tau$ die Zeitverschiebung des empfangenen Mehrträgersignals in Bezug zum gesendeten Mehrträgersignal ist;

$\Phi$ die Phasenverschiebung des empfangenen Mehrträgersignals in Bezug zum gesendeten Mehrträgersignal ist.

**9.** Empfangsverfahren nach Anspruch 5, **dadurch gekennzeichnet, dass** für Präambelsymbole $p_{m,n}$, die am Eingang des Umwandlungsschrittes vom Frequenzbereich in den Zeitbereich definiert sind, der beim Senden eingesetzt wird durch:

$$\begin{cases} p_{2m,n} = (-1)^m \sqrt{2}/2 \\ p_{2m+1,n} = 0 \end{cases} \text{für } 0 \leq m \leq M/2 - 1$$

wobei $p_{m,n}$ ein Präambelsymbol ist, das einem Unterträger mit dem Index $m$ zum Zeitpunkt n zugeordnet ist, der Zeitschätzer den ersten Unterschritt der Schätzung einer Zeitverschiebung nach einer der folgenden Gleichungen einsetzt:

$$\hat{\tilde{\tau}}_{LS_1} = \underset{\tilde{\tau}}{arg\,max}\left|r(\tilde{\tau})r(M/2-1+\tilde{\tau})\right|,$$

$$\hat{\tilde{\tau}}_{LS_2} = \underset{\tilde{\tau}}{arg\,max}\left|r(M/2+\tilde{\tau})r(M-1+\tilde{\tau})\right|,$$

$$\hat{\tilde{\tau}}_{LS_3} = \underset{\tilde{\tau}}{arg\,max}\left|r(\tilde{\tau})r(M-1+\tilde{\tau})+r(M/2-1+\tilde{\tau})r(M/2+\tilde{\tau})\right|,$$

wobei:

$\hat{\tilde{\tau}}_{LS_1}$, $\hat{\tilde{\tau}}_{LS_2}$ oder $\hat{\tilde{\tau}}_{LS_3}$ die Schätzung der Zeitverschiebung am Ausgang des Zeitschätzers sind;

M die Anzahl von Unterträgern eines OQAM-Symbols des Mehrträgersignals ist;

$\tilde{\tau}$ eine ganze Zahl ist, so dass $0 \leq \tilde{\tau} \leq \tilde{\tau}_{max}$, wobei $\tilde{\tau}_{max}$ ein vorbestimmter Maximalwert von $\tilde{\tau}$ ist;

$r(k)$ ein empfangenes Mehrträgersignal ist, so dass $r(k) = s(k-\tau)e^{j\Phi} + b(k)$ ;

$k$ eine ganze Zahl ist;

$s(k)$ ein gesendetes Mehrträgersignal ist;

$b(k)$ ein weißes Gauss-förmiges Rauschen ist;

$\tau$ die Zeitverschiebung des empfangenen Mehrträgersignals in Bezug zum gesendeten Mehrträgersignal ist;

$\Phi$ die Phasenverschiebung des empfangenen Mehrträgersignals in Bezug zum gesendeten Mehrträgersignal ist.

**10.** Empfangsverfahren nach Anspruch 5, **dadurch gekennzeichnet, dass** für Präambelsymbole $p_{m,n}$, die am Eingang des Umwandlungsschrittes vom Frequenzbereich in den Zeitbereich definiert sind, der beim Senden eingesetzt wird durch:

$$\begin{cases} p_{m,n} = 1 & \text{wenn } \mathrm{mod}(m,4) = 0 \\ p_{m,n} = 0 & \text{sonst} \end{cases} \text{für } 0 \leq m \leq M - 1$$

wobei $p_{m,n}$ ein Präambelsymbol ist, das einem Unterträger mit dem Index $m$ zum Zeitpunkt $n$ zugeordnet ist, der Zeitschätzer den ersten Unterschritt der Schätzung einer Zeitverschiebung nach einer der folgenden Gleichungen einsetzt:

$$\hat{\tau}_{LS_1} = \arg\max_{\tilde{\tau}} \left| r(\tilde{\tau})r(M/2-1+\tilde{\tau}) + r(M/4-1+\tilde{\tau})r(M/4+\tilde{\tau}) \right|$$

$$\hat{\tau}_{LS_2} = \arg\max_{\tilde{\tau}} \left| r(M/2+\tilde{\tau})r(M-1+\tilde{\tau}) + r(3M/4-1+\tilde{\tau})r(3M/4+\tilde{\tau}) \right|$$

$$\tau_{LS_3} = \arg\max_{\tilde{\tau}} \left| r(\tilde{\tau})r(M-1+\tilde{\tau}) + r(M/4-1+\tilde{\tau})r(3M/4+\tilde{\tau}) \right.$$
$$\left. + r(M/4+\tilde{\tau})r(3M/4-1+\tilde{\tau}) + r(M/2-1+\tilde{\tau})r(M/2+\tilde{\tau}) \right|$$

wobei:

$\hat{\tau}_{LS1}$, $\hat{\tau}_{LS2}$ oder $\hat{\tau}_{LS3}$, die Schätzung der Zeitverschiebung am Ausgang des Zeitschätzers sind;
$M$ die Anzahl von Unterträgern eines OQAM-Symbols des Mehrträgersignals ist;
$\tilde{\tau}$ eine ganze Zahl ist, so dass $0 \leq \tilde{\tau} \leq \tilde{\tau}_{max}$, wobei $\tilde{\tau}_{max}$ ein vorbestimmter Maximalwert von $\tilde{\tau}$ ist;
$r(k)$ ein empfangenes Mehrträgersignal ist, so dass $r(k)=s(k-\tau)e^{j\phi}+b(k)$;
$k$ eine ganze Zahl ist;
$s(k)$ ein gesendetes Mehrträgersignal ist;
$b(k)$ ein weißes Gauss-förmiges Rauschen ist;
$\tau$ die Zeitverschiebung des empfangenen Mehrträgersignals in Bezug zum gesendeten Mehrträgersignal ist;
$\Phi$ die Phasenverschiebung des empfangenen Mehrträgersignals in Bezug zum gesendeten Mehrträgersignal ist.

**11.** Empfangsverfahren nach Anspruch 3, **dadurch gekennzeichnet, dass** der Schätzungsschritt die Tatsache berücksichtigt, dass mindestens eines der Präambelsymbole im Wesentlichen einen Unterträger von zwei mit einem Wert gleich Null umfasst.

**12.** Empfangsverfahren nach Anspruch 11, **dadurch gekennzeichnet, dass** für Präambelsymbole $p_{m,n}$, die am Eingang des Umwandlungsschrittes vom Frequenzbereich in den Zeitbereich definiert sind, wobei das erste zum Zeitpunkt $n = 0$ gesendete Symbol ist:

$$\begin{cases} p_{2m,0} = d \quad \text{wobei } d \in \Re \text{ oder } d \in \Im \\ p_{2m+1,0} = 0 \end{cases} \text{oder} \begin{cases} p_{2m,0} = 0 \\ p_{2m+1,0} = d \quad \text{wobei } d \in \Re \text{ oder } d \in \Im \end{cases}$$

wobei $p_{m,n}$ ein Präambelsymbol ist, das einem Unterträger mit dem Index $m$ zum Zeitpunkt $n = 0$ zugeordnet ist, und $0 \leq m \leq M/2-1$, wobei $M$ die Anzahl von Unterträgern eines OQAM-Symbols des Mehrträgersignals ist; während das folgende zum Zeitpunkt $n = 1$ gesendete Symbol einem Nullsymbol entspricht, so dass:

$$p_{m,j} = 0, \text{ für } 0 \leq m \leq M-1$$

wobei der Zeitschätzer den ersten Unterschritt der Schätzung einer Zeitverschiebung nach folgender Formel einsetzt:

$$\hat{\tau}_{LS} = \arg\max_{\tilde{\tau}} \left\{ 2\left| R_1(\tilde{\tau}) \right| - Q_1(\tilde{\tau}) \right\},$$

und der Frequenzschätzer den zweiten Unterschritt der Schätzung einer Frequenzverschiebung nach folgender Gleichung einsetzt:

$$\Delta\hat{f}_{LS} = \frac{1}{\pi M} \arg\left\{ R_1(\hat{\tau}_{LS}) \right\},$$

...

wobei:

$$R_1(\tilde{\tau}) = \sum_{k=0}^{M/2-1} h(k)h(k + M/2)r^*(k + \tilde{\tau})r(k + M/2 + \tilde{\tau}),$$

wobei:

$$Q_1(\tilde{\tau}) = \sum_{k=0}^{M/2-1} h(k)^2 \left|r(k + \tilde{\tau})\right|^2 + h(k + M/2)^2 \left|r(k + M/2 + \tilde{\tau})\right|^2,$$

wobei:

$\hat{\tau}_{LS}$ die Schätzung der Zeitverschiebung am Ausgang des Zeitschätzers ist;
$\Delta\hat{f}_{LS}$ die Schätzung der Frequenzverschiebung am Ausgang des Phasenschätzers ist;
$M$ die Anzahl von Unterträgern eines OQAM-Symbols des Mehrträgersignals ist;
$k$ eine ganze Zahl ist, so dass $0 \le k \le M/2-1;$
$\tilde{\tau}$ eine ganze Zahl ist, so dass $0 \le \tilde{\tau} \le \tilde{\tau}_{max}$, wobei $\tilde{\tau}_{max}$ ein vorbestimmter Maximalwert von $\tilde{\tau}$ ist;
$h(k)$ Koeffizienten des beim Senden verwendeten Prototyp-Filters sind;
$r(k)$ ein empfangenes Mehrträgersignal ist, so dass $r(k)=e^{j2\pi\Delta f}[c(k)\otimes s(k-\tau)]+b(k)$;
$\otimes$ ein Konvolutionsprodukt ist;
$c(k)$ die Antwort eines Mehrwegkanals ist;
$s(k)$ ein gesendetes Mehrträgersignal ist;
$b(k)$ ein weißes Gauss-förmiges Rauschen ist;
$\tau$ die Zeitverschiebung des empfangenen Mehrträgersignals in Bezug zum gesendeten Mehrträgersignal ist;
$\Delta f$ die Frequenzverschiebung des empfangenen Mehrträgersignals in Bezug zum gesendeten Mehrträgersignal ist.

13. Empfangsverfahren nach Anspruch 11, **dadurch gekennzeichnet, dass** für Präambelsymbole $p_{m,n}$, die am Eingang des Umwandlungsschrittes vom Frequenzbereich in den Zeitbereich definiert sind, wobei das erste zum Zeitpunkt $n = 0$ gesendete Symbol ist:

$$\begin{cases} p_{2m,0} = d & \text{wobei } d \in \Re \text{ oder } d \in \Im \\ p_{2m+1,0} = 0 \end{cases} \text{oder} \begin{cases} p_{2m,0} = 0 \\ p_{2m+1,0} = d \text{ wobei } d \in \Re \text{ oder } d \in \Im \end{cases}$$

wobei $p_{m,n}$ ein Präambelsymbol ist, das einem Unterträger mit dem Index m zum Zeitpunkt $n = 0$ zugeordnet ist, und $0 \le m \le M/2-1$, wobei M die Anzahl von Unterträgern eines OQAM-Symbols des Mehrträgersignals ist; während das folgende zum Zeitpunkt $n = 1$ gesendete Symbol einem Nullsymbol entspricht, so dass:

$$p_{m,1} = 0, \text{ für } 0 \le m \le M-1$$

und **dadurch gekennzeichnet, dass** der Schätzungsschritt (21) auch die Position mindestens eines Paars von Maximalwerten, die beim Senden für das Mehrträgersignal erhalten werden, berücksichtigt, wobei die Position in Bezug zu den Ausgängen eines Umwandlungsschrittes vom Frequenzbereich in den Zeitbereich (12) einer Gesamtheit von Datensymbolen, die dazu bestimmt sind, die Präambel zu bilden, Präambelsymbole genannt, definiert ist, wobei der Zeitschätzer den ersten Unterschritt der Schätzung einer Zeitverschiebung nach folgender Formel einsetzt:

$$\hat{\tau}_{LS} = \arg\max_{\tilde{\tau}} \left\{ \left|R_1(\tilde{\tau})\right| Q_1(\tilde{\tau}) \right\},$$

und der Frequenzschätzer den zweiten Unterschritt der Schätzung einer Frequenzverschiebung nach folgender Gleichung einsetzt:

$$\Delta \hat{f}_{LS} = \frac{1}{2\pi N} arg\left\{R_1(\hat{\tau}_{LS})\right\},$$

wobei *k* eine ganze Zahl ist, M die Anzahl von Unterträgern eines OQAM-Symbols des Mehrträgersignals ist, und mit den folgenden Maximalwertpositionen k, M/2-1-k, M/2+k, M-1-k:

$$R(\tilde{\tau}) = h(k)h(k + M / 2)r*(k + \tilde{\tau})r(k + M / 2 + \tilde{\tau})$$
$$+h(M / 2 - 1 - k)h(M - 1 - k)r*(M / 2 - 1 - k + \tilde{\tau})r(M - 1 - k + \tilde{\tau})$$

$$Q(\tilde{\tau}) = h(k + M / 2)^2 \left|r(k + \tilde{\tau})\right|^2 + h(M - 1 - k)^2 \left|r(M / 2 - 1 - k + \tilde{\tau})\right|^2$$
$$+h(k)\left|r(M / 2 + k + \tilde{\tau})\right|^2 h(M / 2 - 1 - k)^2 \left|r(M - 1 - k + \tilde{\tau})\right|^2 $$

wobei:

$\hat{\tau}_{LS}$ die Schätzung der Zeitverschiebung am Ausgang des Zeitschätzers ist;
$\Delta\hat{f}_{LS}$ die Schätzung der Frequenzverschiebung am Ausgang des Phasenschätzers ist;
M die Anzahl von Unterträgern eines OQAM-Symbols des Mehrträgersignals ist;
$\tilde{\tau}$ eine ganze Zahl ist, so dass $0 \leq \tilde{\tau} \leq \tilde{\tau}_{max}$, wobei $\tilde{\tau}_{max}$ ein vorbestimmter Maximalwert von $\tilde{\tau}$ ist;
*h(k)* Koeffizienten des beim Senden verwendeten Prototyp-Filters sind;
*r(k)* ein empfangenes Mehrträgersignal ist, so dass $r(k) = e^{j2\pi\Delta f}[c(k)\otimes s(k-\tau)]+b(k)$;
$\otimes$ ein Konvolutionsprodukt ist;
*c(k)* die Antwort eines Mehrwegkanals ist;
*s(k)* ein gesendetes Mehrträgersignal ist;
*b(k)* ein weißes Gauss-förmiges Rauschen ist;
$\tau$ die Zeitverschiebung des empfangenen Mehrträgersignals in Bezug zum gesendeten Mehrträgersignal ist;
$\Delta f$ die Frequenzverschiebung des empfangenen Mehrträgersignals in Bezug zum gesendeten Mehrträgersignal ist.

14. Empfangsvorrichtung eines Mehrträgersignals vom Typ OQAM, umfassend Mittel zur Schätzung (21) mindestens einer Zeit-, Phasen- und/oder Frequenzverschiebung des Mehrträgersignals im Zeitbereich,
wobei die Schätzungsmittel (21) mindestens einen Schätzer zur Schätzung der Zeitverschiebung, Zeitschätzer genannt, und/oder mindestens einen Schätzer zur Schätzung der Phasenverschiebung, Phasenschätzer genannt, und/oder mindestens einen Schätzer zur Schätzung der Frequenzverschiebung, Frequenzschätzer genannt, umfassen,
**dadurch gekennzeichnet, dass** mindestens einer der Schätzer einen Schritt der Schätzung nach einer Gleichung einsetzt, die als Parameter mindestens Koeffizienten eines Prototyp-Filters haben, der beim Senden verwendet wird, um mindestens eine in das Mehrträgersignal eingesetzte Präambel zu formen.

15. Computerprogramm, umfassend Anweisungen für den Einsatz eines Verfahrens nach Anspruch 1, wenn das Programm von einem Prozessor ausgeführt wird.

## Claims

1. Method for receiving a multi-carrier signal of OQAM type, implementing a step (21) of estimating, in the temporal domain, at least one time shift, phase shift and/or frequency shift of said multi-carrier signal, said estimation step (21) implementing at least one estimator for estimating said time shift, termed temporal estimator, and/or at least one estimator for estimating said phase shift, termed phase estimator, and/or at least one estimator for estimating said frequency shift, termed frequency estimator, **characterized in that** at least one of said estimators implements an estimation step using an equation having at least, as parameters, coefficients of a prototype filter used during transmission for shaping at least one preamble that is inserted into said multi-carrier signal.

2. Reception method according to Claim 1, **characterized in that** at least one of said estimators implements a pseudo-periodicity taking into account said preamble and said prototype filter.

3. Reception method according to Claim 1, **characterized in that** said estimation step (21) implements, in the temporal domain, a first sub-step (2110, 2120) of estimating a time shift, followed by a second sub-step (2111) of estimating a phase shift or a second sub-step (2121) of estimating a frequency shift.

4. Reception method according to Claim 3, **characterized in that** said temporal estimator implements said first sub-step of estimating a time shift using one of the following equations:

$$\hat{\tau}_{LS_1} = \underset{\tilde{\tau}}{arg\,max} \left| \sum_{k=0}^{M/4-1} h(k)h(M/2-1-k)r(k+\tilde{\tau})r(M/2-1-k+\tilde{\tau}) \right|$$

and

$$\hat{\tau}_{LS_2} = \underset{\tilde{\tau}}{arg\,max} \left| \sum_{k=0}^{M/4-1} h(M-1-k)h(M/2+k)r(M/2+k+\tilde{\tau})r(M-1-k+\tilde{\tau}) \right|$$

and/or **in that** said phase estimator implements said second sub-step of estimating a phase shift using one of the following equations:

$$\hat{\phi}_{LS_1} = \frac{1}{2} \angle \left\{ \sum_{k=0}^{M/4-1} h(k)h(M/2-1-k)r(k+\hat{\tau})r(M/2-1-k+\hat{\tau}) \right\}$$

and

$$\hat{\phi}_{LS_2} = \frac{1}{2} \angle \left\{ \sum_{k=0}^{M/4-1} h(M-1-k)h(M/2+k)r(M/2+k+\hat{\tau})r(M-1-k+\hat{\tau}) \right\}$$

where $\hat{\tau}_{LS_1}$ or $\hat{\tau}_{LS_2}$ is the estimation of said time shift at the output of said temporal estimator, and $\hat{\tau}$ is the estimation of the fixed temporal shift at the input of the phase shift estimator;
$\hat{\phi}_{LS_1}$ or $\hat{\phi}_{LS_2}$ is the estimation of said phase shift at the output of said phase estimator;
$\angle\{.\}$ is the argument of a complex number;
M is the number of sub-carriers of an OQAM symbol of said multi-carrier signal;
$k$ is an integer such that $0 \le k \le M/4 - 1$;
$\tilde{\tau}$ is an integer such that $0 \le \tilde{\tau} \le \tilde{\tau}_{max}$, where $\tilde{\tau}_{max}$ is a predetermined maximum value of $\tilde{\tau}$;
$h(k)$ are coefficients of said prototype filter used during transmission;
$r(k)$ is a received multi-carrier signal, such that $r(k)$ ;
$s(k)$ is a transmitted multi-carrier signal;
$b(k)$ is a Gaussian white noise;
$\tau$ is said time shift of the received multi-carrier signal with respect to said transmitted multi-carrier signal;
$\phi$ is said phase shift of the received multi-carrier signal with respect to said transmitted multi-carrier signal.

5. Reception method according to Claim 3, **characterized in that** said estimation step (21) also takes into account the position of at least one pair of maximum values obtained during transmission for said multi-carrier signal, said position being defined with respect to the outputs of a step (12) of transforming, from the frequency domain to the temporal domain, a set of data symbols forming said preamble, termed preamble symbols.

6. Reception method according to Claim 5, **characterized in that**, for preamble symbols $p_{m,n}$, defined at the input of said step of transforming from the frequency domain to the temporal domain implemented during transmission by:

$$\begin{cases} p_{m,n} = \sqrt{2}\,/\,2 & \text{for} \quad m = 4p \quad \text{and} \quad m = 1 + 4p \\ p_{m,n} = -\sqrt{2}\,/\,2 & \text{for} \quad m = 2 + 4p \quad \text{and} \quad m = 3 + 4p \end{cases}$$

and where $p_{m,n}$ is a preamble symbol associated with a sub-carrier of index $m$ at the instant $n$, $p$ is an integer, and $0 \le m \le M - 1$,

said temporal estimator implements said first sub-step of estimating a time shift using one of the following equations:

$$\hat{\tau}_{LS_1} = \arg\max_{\tilde{\tau}} \left| r(\tilde{\tau}) r(M/2 - 1 + \tilde{\tau}) \right|,$$

$$\hat{\tau}_{LS_2} = \arg\max_{\tilde{\tau}} \left| r(M/2 + \tilde{\tau}) r(M - 1 + \tilde{\tau}) \right|,$$

where:

$\hat{\tau}_{LS_1}$ or $\hat{\tau}_{LS_2}$ is the estimation of said time shift at the output of said temporal estimator;
M is the number of sub-carriers of an OQAM symbol of said multi-carrier signal;
$\tilde{\tau}$ is an integer such that $0 \le \tilde{\tau} \le \tilde{\tau}_{max}$, where $\tilde{\tau}_{max}$ is a predetermined maximum value of $\tilde{\tau}$;
$r(k)$ is a received multi-carrier signal, such that $r(k) = s(k - \tau)e^{j\varphi} + b(k)$;
$k$ is an integer;
$s(k)$ is a transmitted multi-carrier signal;
$b(k)$ is a Gaussian white noise;
$\tau$ is a time shift of the received multi-carrier signal with respect to the transmitted multi-carrier signal;
$\phi$ is a phase shift of the received multi-carrier signal with respect to the transmitted multi-carrier signal.

7. Reception method according to Claim 5, **characterized in that**, for preamble symbols $p_{m,n}$, defined at the input of said step of transforming from the frequency domain to the temporal domain implemented during transmission by:

$$\begin{cases} p_{2m,n} = \sqrt{2}\,/\,2 \\ p_{2m+1,n} = j\sqrt{2}\,/\,2 \end{cases} \text{for} \quad 0 \le m \le M/2 - 1$$

where $p_{m,n}$ is a preamble symbol associated with a sub-carrier of index $m$ at the instant $n$, and $j^2 = -1$,
said temporal estimator implements said first sub-step of estimating a time shift using one of the following equations:

$$\hat{\tau}_{LS_1} = \arg\max_{\tilde{\tau}} \left| r(M/4 - 1 + \tilde{\tau}) r(M/4 + \tilde{\tau}) \right|,$$

$$\hat{\tau}_{LS_2} = \arg\max_{\tilde{\tau}} \left| r(3M/4 - 1 + \tilde{\tau}) r(3M/4 + \tilde{\tau}) \right|,$$

where:

$\hat{\tau}_{LS_1}$ or $\hat{\tau}_{LS_2}$ is the estimation of said time shift at the output of said temporal estimator;
M is the number of sub-carriers of an OQAM symbol of said multi-carrier signal;
$\tilde{\tau}$ is an integer such that $0 \le \tilde{\tau} \le \tilde{\tau}_{max}$ where $\tilde{\tau}_{max}$ is a predetermined maximum value of $\tilde{\tau}$;
$r(k)$ is a received multi-carrier signal, such that $r(k) = s(k - \tau)e^{j\varphi} + b(k)$;
$k$ is an integer;
$s(k)$ is a transmitted multi-carrier signal;

*b(k)* is a Gaussian white noise;

$\tau$ is a time shift of the received multi-carrier signal with respect to the transmitted multi-carrier signal;

$\phi$ is a phase shift of the received multi-carrier signal with respect to the transmitted multi-carrier signal.

8.  Reception method according to Claim 5, **characterized in that**, for preamble symbols $p_{m,n}$, defined at the input of said step of transforming from the frequency domain to the temporal domain implemented during transmission by:

$$\begin{cases} p_{2m,n} = \sqrt{2}\,/\,2 \\ p_{2m+1,n} = 0 \end{cases} \quad \text{for} \quad 0 \le m \le M\,/\,2 - 1$$

where $p_{m,n}$ is a preamble symbol associated with a sub-carrier of index *m* at the instant *n*,
said temporal estimator implements said first sub-step of estimating a time shift using one of the following equations:

$$\hat{\tau}_{LS_1} = \arg\max_{\tilde{\tau}} \left| r(M\,/\,4 - 1 + \tilde{\tau}) r(M\,/\,4 + \tilde{\tau}) \right|,$$

$$\hat{\tau}_{LS_2} = \arg\max_{\tilde{\tau}} \left| r(3M\,/\,4 - 1 + \tilde{\tau}) r(3M\,/\,4 + \tilde{\tau}) \right|,$$

$$\hat{\tau}_{LS_3} = \arg\max_{\tilde{\tau}} \left| r(M\,/\,4 - 1 + \tilde{\tau}) r(3M\,/\,4 + \tilde{\tau}) + r(M\,/\,4 + \tilde{\tau}) r(3M\,/\,4 - 1 + \tilde{\tau}) \right|,$$

where:

$\hat{\tau}_{LS_1}$, $\hat{\tau}_{LS_2}$ or $\hat{\tau}_{LS_3}$ is the estimation of said time shift at the output of said temporal estimator;
M is the number of sub-carriers of an OQAM symbol of said multi-carrier signal;
$\tilde{\tau}$ is an integer such that $0 \le \tilde{\tau} \le \tilde{\tau}_{max}$, where $\tilde{\tau}_{max}$ is a predetermined maximum value of $\tilde{\tau}$;
$r(k)$ is a received multi-carrier signal, such that $r(k)=s(k-\tau)e^{j\varphi}+b(k)$;
*k* is an integer;
*s(k)* is a transmitted multi-carrier signal;
*b(k)* is a Gaussian white noise;
$\tau$ is a time shift of the received multi-carrier signal with respect to the transmitted multi-carrier signal;
$\phi$ is a phase shift of the received multi-carrier signal with respect to the transmitted multi-carrier signal.

9.  Reception method according to Claim 5, **characterized in that**, for preamble symbols $p_{m,n}$, defined at the input of said step of transforming from the frequency domain to the temporal domain implemented during transmission by:

$$\begin{cases} p_{2m,n} = (-1)^m \sqrt{2}\,/\,2 \\ p_{2m+1,n} = 0 \end{cases} \quad \text{for} \quad 0 \le m \le M\,/\,2 - 1$$

where $p_{m,n}$ is a preamble symbol associated with a sub-carrier of index *m* at the instant *n*,
said temporal estimator implements said first sub-step of estimating a time shift using one of the following equations:

$$\hat{\tau}_{LS_1} = \arg\max_{\tilde{\tau}} \left| r(\tilde{\tau}) r(M\,/\,2 - 1 + \tilde{\tau}) \right|,$$

$$\hat{\tau}_{LS_2} = \underset{\tilde{\tau}}{arg\,max}\left|r(M/2+\tilde{\tau})r(M-1+\tilde{\tau})\right|,$$

$$\hat{\tau}_{LS_3} = \underset{\tilde{\tau}}{arg\,max}\left|r(\tilde{\tau})r(M-1+\tilde{\tau})+r(M/2-1+\tilde{\tau})r(M/2+\tilde{\tau})\right|,$$

where:

$\hat{\tau}_{LS_1}$, $\hat{\tau}_{LS_2}$ or $\hat{\tau}_{LS_3}$ is the estimation of said time shift at the output of said temporal estimator;
M is the number of sub-carriers of an OQAM symbol of said multi-carrier signal;
$\tilde{\tau}$ is an integer such that $0 \leq \tilde{\tau} \leq \tilde{\tau}_{max}$, where $\tilde{\tau}_{max}$ is a predetermined maximum value of $\tilde{\tau}$;
$r(k)$ is a received multi-carrier signal, such that $r(k) = s(k-\tau)e^{j\varphi}+b(k)$;
$k$ is an integer;
$s(k)$ is a transmitted multi-carrier signal;
$b(k)$ is a Gaussian white noise;
$\tau$ is a time shift of the received multi-carrier signal with respect to the transmitted multi-carrier signal;
$\phi$ is a phase shift of the received multi-carrier signal with respect to the transmitted multi-carrier signal.

**10.** Reception method according to Claim 5, charaterized in that, for preamble symbols $p_{m,n}$, defined at the input of said step of transforming from the frequency domain to the temporal domain implemented during transmission by:

$$\begin{cases} p_{m,n} = 1 & \text{if } \mathrm{mod}(m,4) = 0 \\ p_{m,n} = 0 & \text{else} \end{cases} \quad \text{for } 0 \leq m \leq M-1$$

where $p_{m,n}$ is a preamble symbol associated with a sub-carrier of index $m$ at the instant $n$,
said temporal estimator implements said first sub-step of estimating a time shift using one of the following equations:

$$\hat{\tau}_{LS_1} = \underset{\tilde{\tau}}{arg\,max}\left|r(\tilde{\tau})r(M/2-1+\tilde{\tau})+r(M/4-1+\tilde{\tau})r(M/4+\tilde{\tau})\right|$$

$$\hat{\tau}_{LS_2} = \underset{\tilde{\tau}}{arg\,max}\left|r(M/2+\tilde{\tau})r(M-1+\tilde{\tau})+r(3M/4-1+\tilde{\tau})r(3M/4+\tilde{\tau})\right|$$

$$\hat{\tau}_{LS_3} = \underset{\tilde{\tau}}{arg\,max}\left|r(\tilde{\tau})r(M-1+\tilde{\tau})+r(M/4-1+\tilde{\tau})r(3M/4+\tilde{\tau})\right.$$
$$\left.+r(M/4+\tilde{\tau})r(3M/4-1+\tilde{\tau})+r(M/2-1+\tilde{\tau})r(M/2+\tilde{\tau})\right|$$

where:

$\hat{\tau}_{LS_1}$, $\hat{\tau}_{LS_2}$ or $\hat{\tau}_{LS_3}$ is the estimation of said time shift at the output of said temporal estimator;
M is the number of sub-carriers of an OQAM symbol of said multi-carrier signal;
$\tilde{\tau}$ is an integer such that $0 \leq \tilde{\tau} \leq \tilde{\tau}_{max}$, where $\tilde{\tau}_{max}$ is a predetermined maximum value of $\tilde{\tau}$;
$r(k)$ is a received multi-carrier signal, such that $r(k) = s(k-\tau)e^{j\varphi}+b(k)$;
$k$ is an integer;
$s(k)$ is a transmitted multi-carrier signal;
$b(k)$ is a Gaussian white noise;
$\tau$ is a time shift of the received multi-carrier signal with respect to the transmitted multi-carrier signal;
$\phi$ is a phase shift of the received multi-carrier signal with respect to the transmitted multi-carrier signal.

**11.** Reception method according to Claim 3, **characterized in that** said estimation step takes into account the fact that at least one of the preamble symbols comprises substantially one sub-carrier out of two having a zero value.

**12.** Reception method according to Claim 11, **characterized in that**, for preamble symbols $p_{m,n}$, defined at the input of said step of transforming from the frequency domain to the temporal domain, the first symbol transmitted at the instant $n = 0$ being such that:

$$\begin{cases} p_{2m,0} = d \quad \text{where} \quad d \in \Re \quad \text{or} \quad d \in \Im \\ p_{2m+1,0} = 0 \end{cases} \quad \text{or} \quad \begin{cases} p_{2m,0} = 0 \\ p_{2m+1,0} = d \quad \text{where} \quad d \in \Re \quad \text{or} \quad d \in \Im \end{cases}$$

where $p_{m,n}$ is a preamble symbol associated with a sub-carrier of index $m$ at the instant $n = 0$, and $0 \leq m \leq M / 2 - 1$, where M is the number of sub-carriers of an OQAM symbol of said multi-carrier signal; whereas the following symbol transmitted at the instant $n = 1$ corresponds to a zero symbol such that: $p_{m,1} = 0$, for $0 \leq m \leq M - 1$
said temporal estimator implements said first sub-step of estimating a time shift using the following equation:

$$\hat{\tau}_{LS} = \arg\max_{\tilde{\tau}} \left\{ 2\left| R_1(\tilde{\tau}) \right| - Q_1(\tilde{\tau}) \right\},$$

and said frequency estimator implements said second sub-step of estimating a frequency shift using the following equation:

$$\hat{\Delta f}_{LS} = \frac{1}{\pi M} \arg\left\{ R_1(\hat{\tau}_{LS}) \right\},$$

where:

$$R_1(\tilde{\tau}) = \sum_{k=0}^{M/2-1} h(k)h(k + M / 2)r^*(k + \tilde{\tau})r(k + M / 2 + \tilde{\tau}),$$

$$Q_1(\tilde{\tau}) = \sum_{k=0}^{M/2-1} h(k)^2 \left| r(k + \tilde{\tau}) \right|^2 + h(k + M / 2)^2 \left| r(k + M / 2 + \tilde{\tau}) \right|^2,$$

$\hat{\tau}_{LS}$ is the estimation of said time shift at the output of said temporal estimator;
$\hat{\Delta f}_{LS}$ is the estimation of said frequency shift at the output of said phase estimator;
M is the number of sub-carriers of an OQAM symbol of said multi-carrier signal;
$k$ is an integer such that $0 \leq k \leq M / 2 - 1$;
$\tilde{\tau}$ is an integer such that $0 \leq \tilde{\tau} \leq \tilde{\tau}_{max}$, where $\tilde{\tau}_{max}$ is a predetermined maximum value of $\tilde{\tau}$;
$h(k)$ are coefficients of said prototype filter used during transmission;
$r(k)$ is a received multi-carrier signal, such that $r(k)=e^{j2\pi\Delta f}[c(k)\otimes s(k-\tau)]+b(k)$;
$\otimes$ is a convolution product;
$c(k)$ is the response of a multi-path channel;
$s(k)$ is a transmitted multi-carrier signal;
$b(k)$ is a Gaussian white noise;
$\tau$ is said time shift of the received multi-carrier signal with respect to said transmitted multi-carrier signal;
$\Delta f$ is said frequency shift of the received multi-carrier signal with respect to said transmitted multi-carrier signal.

**13.** Reception method according to Claim 11, **characterized in that**, for preamble symbols $p_{m,n}$, defined at the input of said step of transforming from the frequency domain to the temporal domain, the first symbol transmitted at the instant $n = 0$ being such that:

$$\begin{cases} p_{2m,0} = d \\ p_{2m+1,0} = 0 \end{cases} \text{ where } d \in \Re \text{ or } d \in \Im \quad \text{or} \quad \begin{cases} p_{2m,0} = 0 \\ p_{2m+1,0} = d \end{cases} \text{ where } d \in \Re \text{ or } d \in \Im$$

where $p_{m,n}$ is a preamble symbol associated with a sub-carrier of index $m$ at the instant $n = 0$, and $0 \leq m \leq M / 2 - 1$, where M is the number of sub-carriers of an OQAM symbol of said multi-carrier signal;

whereas the following symbol transmitted at the instant $n = 1$ corresponds to a zero symbol such that:

$p_{m,1} = 0$, for $0 \leq m \leq M - 1$

and **characterized in that** said estimation step (21) also takes into account the position of at least one pair of maximum values obtained during transmission for said multi-carrier signal,

said position being defined with respect to the outputs of a step (12) of transforming, from the frequency domain to the temporal domain, a set of data symbols intended to form said preamble, termed preamble symbols,

said temporal estimator implements said first sub-step of estimating a time shift using the following equation:

$$\hat{\tau}_{LS} = \arg\max_{\tilde{\tau}} \left\{ \left| R_1(\tilde{\tau}) \right| \left| Q_1(\tilde{\tau}) \right| \right\},$$

and said frequency estimator implements said second sub-step of estimating a frequency shift using the following equation:

$$\hat{\Delta f}_{LS} = \frac{1}{2\pi N} \arg \left\{ R_1(\hat{\tau}_{LS}) \right\},$$

where, with $k$ being an integer, M the number of sub-carriers of an OQAM symbol of said multi-carrier signal, and said following maximum value positions k, M/2 - 1-k, M/2+k, M-1-k:

$$R(\tilde{\tau}) = h(k)h(k + M / 2)r^*(k + \tilde{\tau})r(k + M / 2 + \tilde{\tau})$$
$$+ h(M / 2 - 1 - k)h(M - 1 - k)r^*(M / 2 - 1 - k + \tilde{\tau})r(M - 1 - k + \tilde{\tau})$$

$$Q(\tilde{\tau}) = h(k + M / 2)^2 \left| r(k + \tilde{\tau}) \right|^2 + h(M - 1 - k)^2 \left| r(M / 2 - 1 - k + \tilde{\tau}) \right|^2$$
$$+ h(k)\left| r(M / 2 + k + \tilde{\tau}) \right|^2 h(M / 2 - 1 - k)^2 \left| r(M - 1 - k + \tilde{\tau}) \right|^2,$$

$\hat{\tau}_{LS}$ is the estimation of said time shift at the output of said temporal estimator;

$\hat{\Delta f}_{LS}$ is the estimation of said frequency shift at the output of said phase estimator;

M is the number of sub-carriers of an OQAM symbol of said multi-carrier signal;

$\tilde{\tau}$ is an integer such that $0 \leq \tilde{\tau} \leq \tilde{\tau}_{max}$, where $\tilde{\tau}_{max}$ is a predetermined maximum value of $\tilde{\tau}$;

$h(k)$ are coefficients of said prototype filter used during transmission;

$r(k)$ is a received multi-carrier signal, such that $r(k) = e^{j2\pi\Delta f}[c(k) \otimes s(k-\tau)] + b(k)$;

$\otimes$ is a convolution product;

$c(k)$ is the response of a multi-path channel;

$s(k)$ is a transmitted multi-carrier signal;

$b(k)$ is a Gaussian white noise;

$\tau$ is said time shift of the received multi-carrier signal with respect to said transmitted multi-carrier signal;

$\Delta f$ is said frequency shift of the received multi-carrier signal with respect to said transmitted multi-carrier signal.

14. Device for receiving a multi-carrier signal of OQAM type, comprising means (21) for estimating, in the temporal domain, at least one time shift, phase shift and/or frequency shift of said multi-carrier signal, said estimation means (21) comprising at least one estimator for estimating said time shift, termed temporal estimator, and/or at least one estimator for estimating said phase shift, termed phase estimator, and/or at least one estimator for estimating said frequency shift, termed frequency estimator, **characterized in that** at least one of said estimators implements an estimation step using an equation having at least, as parameters, coefficients of a prototype filter used during transmission for shaping at least one preamble in said multi-carrier signal.

15. Computer program including instructions for implementing a method according to Claim 1 when said program is executed by a processor.

## Fig. 1

## Fig. 2A

Fig. 2B

Fig. 10

Fig. 11

Fig. 3

Fig. 4

Fig. 5

Fig. 6

Fig. 7

Fig. 8

Fig. 9

Fig. 14

Fig. 12

Fig. 13

## RÉFÉRENCES CITÉES DANS LA DESCRIPTION

**Documents brevets cités dans la description**

- FR 1151590

**Littérature non-brevet citée dans la description**

- **P. SIOHAN ; N. LACAILLE.** Analysis of OFDM/OQAM systems based on the filterbank theory. *Proc. GLOBECOM'99,* Décembre 1999, 2279-2284
- **C. SICLET ; P. SIOHAN.** Design of BFDM/OQAM systems based on biorthogonal modulated filter banks. *Proc. GLOBECOM'00,* Novembre 2000, 701-705
- **T. FUSCO ; A. PETRELLA ; M. TANDA.** *A data-aided symbol timing estimation algorithm for OFDM/OQAM systems*
- **T. FUSCO ; L. IZZO ; A. PETRELLA ; M. TANDA.** *A data-aided symbol timing and CFO synchronization for filter bank multicarrier systems*